# EUROPEAN PATENT APPLICATION

(11) **EP 4 310 329 A1**
(43) Date of publication of application: **24.01.2024**
(21) Application number: 22771556.2
(22) Date of filing: 18.03.2022
(51) Int. Cl.: F03D 80/50, E04G 3/30

(54) **SYSTEM, DEVICE AND METHOD FOR PERFORMING MAINTENANCE OF AT LEAST PART OF AN OBJECT**

(30) Priority: 19.03.2021 JP 2021046642; 26.04.2021 JP 2021074188; 22.10.2021 JP 2021173157
(71) Applicant: Lebo Robotics, Inc., Suginami-ku Tokyo 1670054 (JP)
(72) Inventor: HAMAMURA, Keitaro, Tokyo 167-0054 (JP); MURAKAMI, Masayuki, Tokyo 167-0054 (JP); SUGIYAMA, Yuichi, Tokyo 167-0054 (JP); SEKI, Hiroki, Tokyo 167-0054 (JP); KAWABATA, Hiroto, Tokyo 167-0054 (JP); TAKEI, Toshinobu, Hirosaki-shi, Aomori 036-8186 (JP)
(74) Representative: Uexküll & Stolberg
(86) International application number: PCT/JP2022/012790
(87) International publication number: WO 2022/196811

(57) **Abstract**

This system, for performing maintenance of at least one part of an object, is provided with: at least one rope holding device which is configured to move up to said at least one part of said object and to hold at least one rope at said at least one part of said object; and a maintenance device which, configured to perform the maintenance of said at least one part of said object, is configured to move on the aforementioned at least one rope, held by the at least one rope holding device, to said at least one part of said object and to move on said at least one part of said object.

## Description

### [Technical Field]

The present invention relates to a system, device, and method for performing maintenance on at least a part of an object.

### [Background Art]

A large wind power generator has a nacelle with a height of about 100 m. The peripheral speed of a wing tip of a blade of a large wind power generator is about 100 to 120 m/s, and a leading edge (front edge) of a blade, which is an edge cutting through the air, is worn away at a rate of about 20 um per year. Further, a blade of a large wind power generator is subject to lightning damage. Thus, a blade is equipped with a lightning receiving portion (receptor) for making lightning stroke current flow to the ground as lightning resistant measures. However, when the lightning receiving portion has conduction failure due to a breakdown, the blade cannot make lightning stroke current due to lightning flow to the ground and would be seriously damaged. Therefore, a blade of a large wind power generator requires regular maintenance.

There are three representative methods for performing maintenance on a blade of an existing large wind power generator. The first method is a method in which a large crane is used to remove a blade and put it down on the ground, and then maintenance is performed. The second method is a method in which a gondola is suspended from the tip of a large crane, and a worker riding the gondola performs maintenance. The third method is a method in which a worker moves on a blade along a rope stretched over the blade and performs maintenance.

Since the first method and the second method use a large crane, said methods require much cost and labor. Especially, the first method requires enormous cost and a long construction period due to a step of removing a blade and a step of attaching the blade. The second method and the third method are dangerous because said methods require a worker to work at a high place.

Patent Literature 1 discloses a method for performing maintenance on a blade of a large wind power generator without using a large crane. The maintenance method of Patent Literature 1 still requires a worker to work at a high place.

### [Citation List]

### [Patent Literature]

[PTL 1] Japanese Laid-Open Publication No. 2012-7525

### [Summary of Invention]

### [Technical Problem]

One of the objectives of the present invention is to provide a system, device, and method for safely and easily performing maintenance on at least a part of an object. Furthermore, one of the objectives of the present invention is to provide a system or the like for safely and easily performing maintenance on at least a part of an object even in a place where it is relatively difficult to access the object (e.g., on the sea).

### [Solution to Problem]

For example, the present invention provides the following items.

### (Item 1)

A system for performing maintenance on at least a part of an object, the system comprising:
at least one rope holding device configured to move to the at least a part of the object and hold at least one rope at the at least a part of the object; and
a maintenance device configured to perform maintenance on the at least a part of the object, the maintenance device being configured to move to the at least a part of the object on the at least one rope held by the at least one rope holding device and to move on the at least a part of the object.

### (Item 2)

The system of item 1, wherein the at least one rope holding device is configured to move to the at least a part of the object on the at least one rope placed on the object.

### (Item 3)

The system of item 1 or 2, wherein the at least one rope holding device is configured to hold at least two ropes at the at least a part of the object, the at least two ropes comprising a first rope group comprising at least one rope and a second rope group comprising at least one rope, and
wherein the at least one rope holding device holds the first rope group on a first side of the at least a part of the object and holds the second rope group on a second side of the at least a part of the object.

### (Item 4)

The system of item 3, wherein the at least one rope holding device is one rope holding device,
wherein the rope holding device is configured to engage with the first rope group, and
wherein the rope holding device has an aperture through which the second rope group passes.

### (Item 5)

The system of item 4, wherein the aperture is formed of a member configured to be able to transition between a first state where the second rope group is restrained in the aperture and a second state where the second rope group is released from the aperture.

### (Item 6)

The system of item 5, wherein the rope holding device further comprises a communicating means and a controlling means, and
wherein the controlling means is configured to transition the member from the first state to the second state in response to an instruction received by the communicating means.

### (Item 7)

The system of any one of items 1 to 6, wherein a weight of the rope holding device is less than a weight of the maintenance device.

### (Item 8)

The system of any one of items 1 to 7, wherein a weight of the rope holding device is less than a weight of one rope of the at least one rope.

### (Item 9)

The system of any one of items 1 to 8, wherein the object is a wind turbine, and the at least a part of the object is a blade of the wind turbine.

### (Item 10)

A method for performing maintenance on at least a part of an object, the method comprising:
moving at least one rope holding device to the at least a part of the object;
holding, by the at least one rope holding device, the at least one rope at the at least a part of the object;
connecting the at least one rope held by the at least one rope holding device to a maintenance device;
moving the maintenance device to the at least a part of the object on the at least one rope held by the at least one rope holding device;
moving the maintenance device on the at least a part of the object; and
causing the maintenance device to perform maintenance on the at least a part of the object during movement of the maintenance device on the at least a part of the object.

### (Item 11)

The method of item 10, wherein moving the at least one rope holding device to the at least a part of the object comprises:
placing the at least one rope on the object; and
moving the at least one rope holding device to the at least a part of the object on the at least one rope.

### (Item 12)

The method of item 10 or 11, wherein moving the at least one rope holding device to the at least a part of the object comprises controlling a spatial position of the at least one rope holding device.

### (Item 13)

The method of any one of items 10 to 12, wherein placing the at least one rope comprises placing at least two ropes on the object, the at least two ropes comprising a first rope group comprising at least one rope and a second rope group comprising at least one rope, and
wherein holding the at least two ropes at the at least a part of the object comprises disposing the rope holding device on the at least a part of the object so that the first rope group extends from a first side of the at least a part of the object and the second rope group extends from a second side of the at least a part of the object.

### (Item 14)

The method of item 13, wherein the at least one rope holding device is one rope holding device,
wherein the rope holding device engages with the first rope group and restrains the second rope group, and
wherein the method further comprises releasing the second rope group from the rope holding device after moving the maintenance device to the at least a part of the object.

### (Item 15)

The method of any one of items 10 to 14, wherein the object is a wind turbine, and the at least a part of the object is a blade of the wind turbine.

### (Item 16)

A maintenance device for performing maintenance on at least a part of an object, the maintenance device comprising:
a moving means for moving on the at least a part of the object;
a plurality of maintenance means configured to perform mutually different maintenances, the plurality of maintenance means being mounted on a mounting portion; and
a controlling means which selects at least one maintenance means of the plurality of maintenance means and controls the plurality of maintenance means so that maintenance by the selected at least one maintenance means is executed.

### (Item 17)

The maintenance device of item 16, wherein the mounting portion is configured to be rotatable around an axis, and
wherein the controlling means changes a position of the plurality of maintenance means by rotating the mounting portion around the axis.

### (Item 18)

The maintenance device of item 16 or 17, wherein the mounting portion is configured to be translatable in a predetermined direction, and
wherein the controlling means changes a position of the plurality of maintenance means by translating the mounting portion.

### (Item 19)

The maintenance device of any one of items 16 to 18, wherein one of the plurality of maintenance means is an applying means for applying a material.

### (Item 20)

The maintenance device of item 19, wherein one of the plurality of maintenance means is a flattening means, the flattening means comprising a spatula for flattening a material applied by the applying means and an abutting portion for abutting on the at least a part of the object to separate the spatula from the at least a part of the object.

### (Item 21)

The maintenance device of item 20, wherein the flattening means further comprises a wire net for cleaning the spatula.

### (Item 22)

The maintenance device of any one of items 19 to 21, wherein the applying means comprises a caulking gun for ejecting a material, the caulking gun being configured so that an ejected amount of the material is adjusted by intermittent control of air pressure and/or control by an electropneumatic regulator.

### (Item 23)

The maintenance device of any one of items 19 to 22, wherein the applying means is configured to stick a sheet or a film on the at least a part of the object.

### (Item 24)

The maintenance device of any one of items 16 to 23, wherein one of the plurality of maintenance means is a grinding means for grinding a surface of the at least a part of the object.

### (Item 25)

The maintenance device of item 24, wherein the grinding means comprises a leutor.

### (Item 26)

The maintenance device of item 25, wherein the leutor is configured to be pushed against the surface so that a rotational axis of the leutor is perpendicular to the surface.

### (Item 27)

The maintenance device of any one of items 24 to 26, wherein the grinding means comprises a belt sander, the belt sander being configured so that a moving direction of a grinding surface of the belt sander is inclined relative to a direction in which the surface extends and the belt sander is pushed against the surface.

### (Item 28)

The maintenance device of any one of items 16 to 27, wherein the plurality of maintenance means are configured to:
grind a surface of the at least a part of the object;
wash the grinded surface;
apply a material to the washed surface;
flatten at least a part of the applied material;
cure the flattened material;
grind the cured material;
wash the grinded material; and
paint the washed material.

For example, the present invention further provides the following items.

### (Item A1)

A system for performing maintenance on at least a part of an object, the system comprising:
at least one attaching device configured to be attached to a predetermined position on the object, wherein a part of at least one rope is fixed to the at least one attaching device, the at least one rope extending from the at least one attaching device;
at least one rope holding device configured to receive the at least one rope extending from the at least one attaching device and hold the at least one rope in any position on the at least a part of the object, the at least one rope holding device being able to move on the at least a part of the object; and
a maintenance device configured to perform maintenance on the at least a part of the object, the maintenance device being configured to move to the at least a part of the object on the at least one rope held by the at least one rope holding device and to move on the at least a part of the object.

### (Item A2)

The system of item A1, further comprising a moving means for moving the at least one attaching device and the at least one rope holding device together to the predetermined position.

### (Item A3)

The system of item A2, wherein the moving means is a device that is able to fly.

### (Item A4)

The system of any one of items A1 to 3, further comprising a controlling means for controlling a position of the at least one rope holding device on the at least a part of the object,
wherein the controlling means controls the position of the at least one rope holding device so that a spatial position of the maintenance device of when the maintenance device moves to the at least a part of the object on the at least one rope and the position of the at least one rope holding device are in concert with each other.

### (Item A5)

The system of any one of items A1 to 4, wherein a conductive wire extends inside the at least a part of the object,
wherein the at least one rope holding device can dispose a reference conductive wire approximately in parallel to the conductive wire from the at least one attaching device, and
wherein the maintenance device comprises an examining means for examining disconnection of the conductive wire,
   the examining means examining disconnection of the conductive wire by:
   supplying a pulse signal to the conductive wire and the reference conductive wire; and
   detecting a reflected waveform of the pulse signal.

### (Item A6)

The system of item A5, wherein the examining means detects a disconnected portion of the conductive wire based on the reflected waveform.

### (Item A7)

The system of any one of items A1 to 4, wherein a conductive wire extends inside the at least a part of the object,
wherein the maintenance device comprises a means for supplying a radio wave for examining disconnection of the conductive wire to the conductive wire, and
wherein the at least one rope holding device comprises a detecting means which detects a signal depending on a radio wave propagated in the conductive wire.

### (Item A8)

The system of any one of items A1 to 7, wherein the object is a wind turbine on the sea, and the at least a part of the object is a blade of the wind turbine.

### (Item A9)

The system of any one of items A1 to 8, wherein the predetermined position is a position on a narrowed portion of a blade of a wind turbine.

### (Item A10)

A system for performing maintenance on at least a part of an object, the system comprising:
at least one attaching device configured to be attached to a predetermined position on the object, wherein a part of at least one rope is fixed to the at least one attaching device, the at least one rope extending from the at least one attaching device; and
a maintenance device configured to perform maintenance on the at least a part of the object, the maintenance device being configured to move to the at least a part of the object on the at least one rope extending from the at least one attaching device and to move on the at least a part of the object.

### (Item A11)

A system for supporting maintenance on at least a part of an object, the system comprising:
at least one attaching device configured to be attached to a predetermined position on the object, wherein a part of at least one rope is fixed to the at least one attaching device, the at least one rope extending from the at least one attaching device; and
at least one rope holding device configured to receive the at least one rope extending from the at least one attaching device and hold the at least one rope in any position on the at least a part of the object, the at least one rope holding device being able to move on the at least a part of the object.

### (Item A12)

A method for performing maintenance on at least a part of an object, the method comprising:
moving at least one attaching device to a predetermined position on the object;
attaching the at least one attaching device to the predetermined position, wherein a part of at least one rope is fixed to the at least one attaching device, the at least one rope extending from the at least one attaching device to at least one rope holding device;
moving the at least one rope holding device to any position on the at least a part of the object;
holding, by the at least one rope holding device, the at least one rope in the any position on the at least a part of the object;
connecting the at least one rope held by the at least one rope holding device to a maintenance device;
moving the maintenance device to the at least a part of the object on the at least one rope held by the at least one rope holding device;
moving the maintenance device on the at least a part of the object; and
performing maintenance on the at least a part of the object during movement of the maintenance device on the at least a part of the object.

### (Item A13)

The method of item A9, wherein moving the at least one attaching device comprises moving the at least one attaching device to the predetermined position along with the at least one rope holding device, and
wherein moving the at least one rope holding device comprises moving the at least one rope holding device from the predetermined position to the any position.

### (Item A14)

The method of item A12 or A13, wherein moving the maintenance device to the at least a part of the object comprises:
controlling the position of the at least one rope holding device so that a spatial position of the maintenance device of when the maintenance device moves to the at least a part of the object on the at least one rope and the position of the at least one rope holding device are in concert with each other.

### (Item A15)

The method of any one of items A12 to 14, further comprising retrieving the maintenance device from the at least a part of the object by moving the maintenance device from the at least a part of the object on the at least one rope,
wherein retrieving the maintenance device comprises:
controlling the position of the at least one rope holding device so that a spatial position of the maintenance device of when the maintenance device moves from the at least a part of the object on the at least one rope and the position of the at least one rope holding device are in concert with each other.

### (Item A16)

The method of any one of items A12 to 15, wherein a conductive wire extends inside the at least a part of the object,
wherein performing maintenance on the at least a part of the object comprises examining disconnection of the conductive wire by:
disposing a reference conductive wire approximately in parallel to the conductive wire between the at least one attaching device and the at least one rope holding device by moving the at least one rope holding device;
supplying, by the maintenance device, a pulse signal to the conductive wire and the reference conductive wire; and
detecting, by the maintenance device, a reflected waveform of the pulse signal.

### (Item A17)

The method of item A16, wherein examining disconnection of the conductive wire comprises detecting a disconnected portion of the conductive wire based on the reflected waveform.

### (Item A18)

The method of any one of items A12 to 15, wherein a conductive wire extends inside the at least a part of the object,
wherein performing maintenance on the at least a part of the object comprises:
supplying, by the maintenance device, a radio wave for examining disconnection of the conductive wire to the conductive wire; and
detecting, by the at least one rope holding device, a signal depending on a radio wave propagated in the conductive wire during movement of the at least one rope holding device on the at least a part of the object.

### (Item A19)

The method of any one of items A12 to 18, wherein the object is a wind turbine on the sea, and the at least a part of the object is a blade of the wind turbine.

### (Item A20)

The method of any one of items A12 to 19, wherein the predetermined position is a position on a narrowed portion of a blade of a wind turbine.

### [Advantageous Effects of Invention]

The present invention can provide a system, device, and method for safely and easily performing maintenance on at least a part of an object. The present invention can also safely and easily perform maintenance on at least a part of an object even in a place where it is relatively difficult to access the object (e.g., on the sea).

### [Brief Description of Drawings]

[Figure 1A] A figure explaining a procedure of performing maintenance on a blade of a wind turbine.
[Figure 1B] A figure explaining a procedure of performing maintenance on a blade of a wind turbine.
[Figure 1C] A figure explaining a procedure of performing maintenance on a blade of a wind turbine.
[Figure 1D] A figure explaining a procedure of performing maintenance on a blade of a wind turbine.
[Figure 1E] A figure explaining a procedure of performing maintenance on a blade of a wind turbine.
[Figure 1F] A figure explaining a procedure of performing maintenance on a blade of a wind turbine.
[Figure 1G] A figure explaining a procedure of performing maintenance on a blade of a wind turbine.
[Figure 2] An enlarged view of the region indicated by a broken-line circle in Figure **1B.**
[Figure 3] A figure showing the state of a rope holding device **200** disposed on a blade **11.**
[Figure 4] A figure showing a state in which the rope holding device **200** releases a rope **20₂.**
[Figure 5A] A figure showing one example of a configuration of a maintenance device **100'** in one embodiment.
[Figure 5B] A figure showing an example of implementation of the maintenance device **100'.**
[Figure 5C] A figure showing one example of a configuration of the rope holding device **200.**
[Figure 6] A flowchart showing one example of a procedure (procedure **600**) of a method for performing maintenance on a blade of a wind turbine by using the system of the present invention.
[Figure 7] A flowchart showing one example of a procedure at step **S601.**
[Figure 8] A flowchart showing one example of a maintenance method of when step **S606** is performed by the maintenance device **100'.**
[Figure 9] A figure showing a state before a flattening means **124** comprising a spatula **1241** and an abutting portion **1242** flattens a material applied on a recessed portion on a leading edge (L.E) of the blade **11.**
[Figure 10A] A figure showing one example of a mounting portion **140A** in one embodiment.
[Figure 10B] A figure showing one example of a mounting portion **140B** in one embodiment.
[Figure 10C] A figure showing one example of a mounting portion **140C** in one embodiment.
[Figure 10D] A figure showing one example of a mounting portion **140D** in one embodiment.
[Figure 10E] A figure showing one example of a mounting portion **140E** in one embodiment.
[Figure 11A] A figure explaining a procedure of performing maintenance on a blade of a wind turbine by using the system of the present invention.
[Figure 11B] A figure explaining a procedure of performing maintenance on a blade of a wind turbine by using the system of the present invention.
[Figure 11C] A figure explaining a procedure of performing maintenance on a blade of a wind turbine by using the system of the present invention.
[Figure 11D] A figure explaining a procedure of performing maintenance on a blade of a wind turbine by using the system of the present invention.
[Figure 11E] A figure explaining a procedure of performing maintenance on a blade of a wind turbine by using the system of the present invention.
[Figure 11F] A figure explaining a procedure of performing maintenance on a blade of a wind turbine by using the system of the present invention.
[Figure 11G] A figure explaining a procedure of performing maintenance on a blade of a wind turbine by using the system of the present invention.
[Figure 11H] A figure explaining a procedure of performing maintenance on a blade of a wind turbine by using the system of the present invention.
[Figure 11I] A figure explaining a procedure of performing maintenance on a blade of a wind turbine by using the system of the present invention.
[Figure 11J] A figure explaining a procedure of performing maintenance on a blade of a wind turbine by using the system of the present invention.
[Figure 11K] A figure explaining a procedure of performing maintenance on a blade of a wind turbine by using the system of the present invention.
[Figure 11L] A figure explaining a procedure of performing maintenance on a blade of a wind turbine by using the system of the present invention.
[Figure 11M] A figure explaining a procedure of performing maintenance on a blade of a wind turbine by using the system of the present invention.
[Figure 11N] A figure explaining a procedure of performing maintenance on a blade of a wind turbine by using the system of the present invention.
[Figure 11O] A figure explaining a procedure of performing maintenance on a blade of a wind turbine by using the system of the present invention.
[Figure 11P] A figure explaining a procedure of performing maintenance on a blade of a wind turbine by using the system of the present invention.
[Figure 11Q] A figure explaining a procedure of performing maintenance on a blade of a wind turbine by using the system of the present invention.
[Figure 11R] A figure explaining a procedure of performing maintenance on a blade of a wind turbine by using the system of the present invention.
[Figure 12] A figure showing an example of attaching a rope to a predetermined position on a tower **1017** of a wind turbine **1010** by using an attaching device **1300'** in an alternative embodiment.
[Figure 13] A figure schematically showing a configuration of an attaching device **1300** in one example.
[Figure 14] A figure showing a detail of the portion surrounded by a dashed-line circle in Figure **11E****.**
[Figure 15] A figure showing one example of a procedure (procedure **1500**) of a method for performing maintenance on a blade of a wind turbine by using the system of the present invention.
[Figure 16A] A figure showing one example of a specific flow which is performed in a step of performing maintenance on a blade at step **S1508.**
[Figure 16B] A figure showing another example of a specific flow which is performed in a step of performing maintenance on a blade at step **S1508.**

### [Description of Embodiments]

The embodiments of the present invention are hereinafter explained while referring to the drawings.

As used herein, "about" means ± 10% of the subsequent numerical value.

### 1. Maintenance on a blade of a wind turbine (first aspect)

The first aspect of the present invention is explained below.

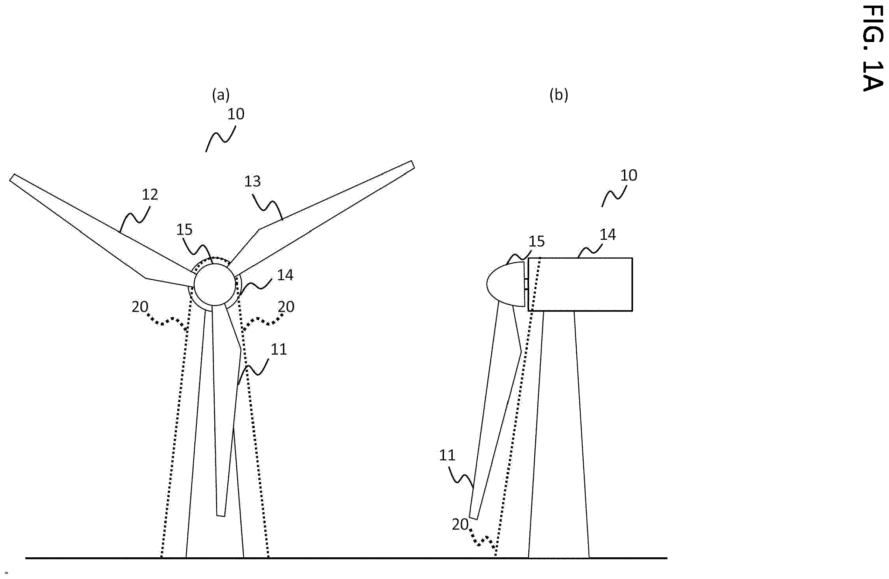

Referring to Figures **1A** to **1G****,** a procedure of performing maintenance on a blade of a wind turbine by using the system of the present invention is explained. Figures **1A** to **1G****, (a)** shows the front of a wind turbine **10** while Figures **1A** to **1G****, (b)** shows the right side of the wind turbine **10.** Figures **1A** to **1G****, (b)** shows only a blade **11** that is the subject of maintenance and omits the other two blades **12** and **13.** The wind turbine shown in Figures **1A** to **1G****, (a)** is a wind turbine which rotates clockwise on the drawings, in which a linear edge of each blade is a leading edge (front edge).

As used herein, "wind turbine" refers to a device that obtains motive power by the wind. One example of a wind turbine is a wind power generator.

As used herein, "maintenance" refers to inspection or conservation of an object. One example of maintenance is imaging the surface of an object, examining the conduction of a lightning receiving portion of an object, washing the surface of an object, grinding and/or polishing the surface of an object, applying paint to the surface of an object, applying a material such as putty, adhesive, or sealant to the surface of an object, or the like.

The system of the present invention comprises a maintenance device **100** and a rope holding device **200.**

Figure **1A** shows the state of a preparation stage before attaching the system of the present invention to the blade **11** of the wind turbine **10.**

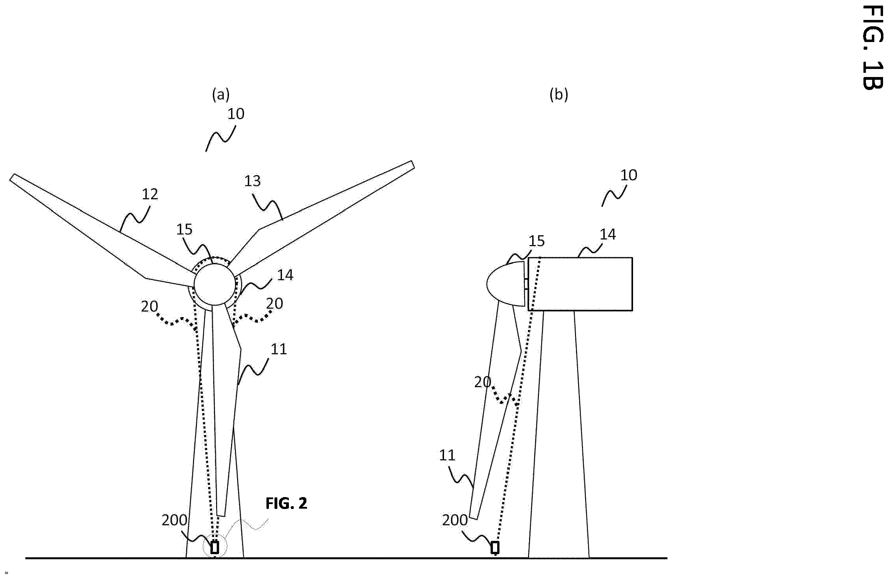

Maintenance on the blade **11** is performed while the blade **11** is positioned so that the blade **11** extends vertically downwards. Since this is the same state as the state of a blade in a conventional method in which a worker moves on a blade along a rope stretched over the blade and performs maintenance, this state is readily accepted in existing work sites. When the blade **11** is positioned so as to extend vertically downwards, the leading edge is inclined by about 5 degrees relative to the vertical direction as shown in Figure **1A, (b)****.**

A rope **20** is placed on the wind turbine **10** in a preparation stage before attaching the device **100** to the blade **11** of the wind turbine **10.** In this regard, the rope **20** is placed on the wind turbine **10** in any manner. The rope **20** can be placed in any position on the wind turbine **10** by any approach.

In one example, the rope **20** is fixed to a nacelle **14** of the wind turbine **10.** The nacelle **14** is a case housing a generator, a gear box or the like. The rope **20** can be fixed to, for example, a hatch of the nacelle **14.** For example, the rope **20** can be fixed to the nacelle **14** by using a specialized fixing tool. In this case, for example, the rope **20** can be carried to the nacelle **14** of the wind turbine **10** by a device which is able to fly such as a drone.

In another example, the rope **20** is fixed to a narrow portion which is present near the base of the blade **11.** For example, the rope **20** can be fixed to a narrow portion by using a specialized fixing tool. For example, the fixing tool may be configured to be fixed to a narrow portion by mechanical force, may be configured to be fixed to a narrow portion by magnetic force, or may be configured to be fixed to a narrow portion by electric power. In this case, for example, the rope **20** can be carried to the narrow portion of the blade **11** by a device which is able to fly such as a drone.

In another example, the rope **20** is hooked on the blades **12** and **13.** For example, the rope **20** goes around the blades **12** and **13,** and one end of the rope extends to the ground and is fixed while the other end extends to the blade **11.** In this case, the rope **20** can be carried to above the blades **12** and **13** by a device which is able to fly such as a drone and hooked on the blades **12** and **13.**

In another example, the rope **20** is fixed to a tower of the wind turbine **10.** For example, the rope **20** can be fixed to a tower by using a specialized fixing tool. For example, the fixing tool may be configured to be fixed to a tower by mechanical force, may be configured to be fixed to a tower by magnetic force, or may be configured to be fixed to a tower by electric power. In this case, for example, the rope **20** can be carried to the top of the tower by a device which is able to fly such as a drone. Alternatively, the rope **20** can be fixed to the tower by using a robot which rises along the tower.

Hereinafter, examples where two ropes **20** are fixed to the nacelle **14** of the wind turbine **10** are explained. Each of the two ropes **20** extends from the nacelle **14** of the wind turbine **10** to the ground while passing near a hub **15.** The hub **15** is a member which rotatably couples the blades **11, 12,** and **13** and the nacelle **14.**

Figures **1B** to **1D** show the state of a stage in which the rope holding device **200** is disposed on the blade **11** of the wind turbine **10.**

The two ropes **20** extend from the nacelle **14** of the wind turbine **10** to the rope holding device **200.** The rope holding device **200** can engage with one of the two ropes **20** and releasably restrain the other rope. The rope holding device **200** is able to move upwards along the rope with which the rope holding device engages.

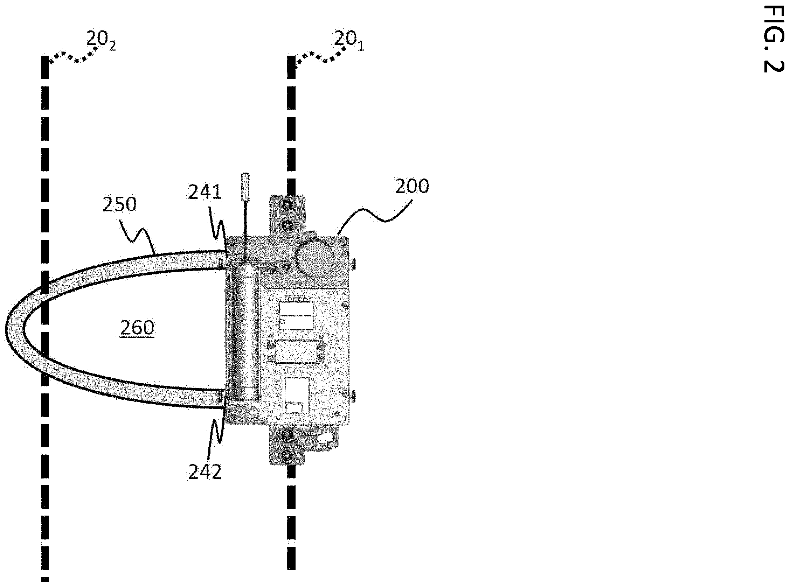

Figure **2** is an enlarged view of the region indicated by a broken-line circle in Figure **1B****.** Figure **2** shows a state in which the rope holding device **200** engages with one rope **20₁** of the two ropes **20** and releasably restrains the other rope **20₂.**

The rope **20₁** is engaged by an engaging portion (invisible) on the bottom face side of the rope holding device **200.** The engaging portion engages with the rope **20₁** and applies force to the rope **20₁** in a direction in which the rope **20₁** extends, which enables the rope holding device **200** to move along the rope **20₁.** This enables the rope holding device **200** to rise to near the blade **11.**

The rope holding device **200** has a member **250,** which extends from a first attaching portion **241** and a second attaching portion **242** of the body of the rope holding device **200,** whereby an aperture **260** is formed by the body of the rope holding device **200** and the member **250.** The rope **20₂** passes through the aperture **260,** whereby the rope **20₂** is restrained by the body of the rope holding device **200** and the member **250.** The rope holding device **200** moves to the blade **11** along the rope **20₁** while restraining the rope **20₂,** which enables the rope holding device **200** to hold the two ropes **20₁** and **20₂** on the blade **11** while keeping the two ropes close to each other.

The rope holding device **200** can have a minimum configuration which can realize a function for moving on the rope **20₁** and releasably restraining the rope **20₂.** This can reduce the weight of the rope holding device **200.**

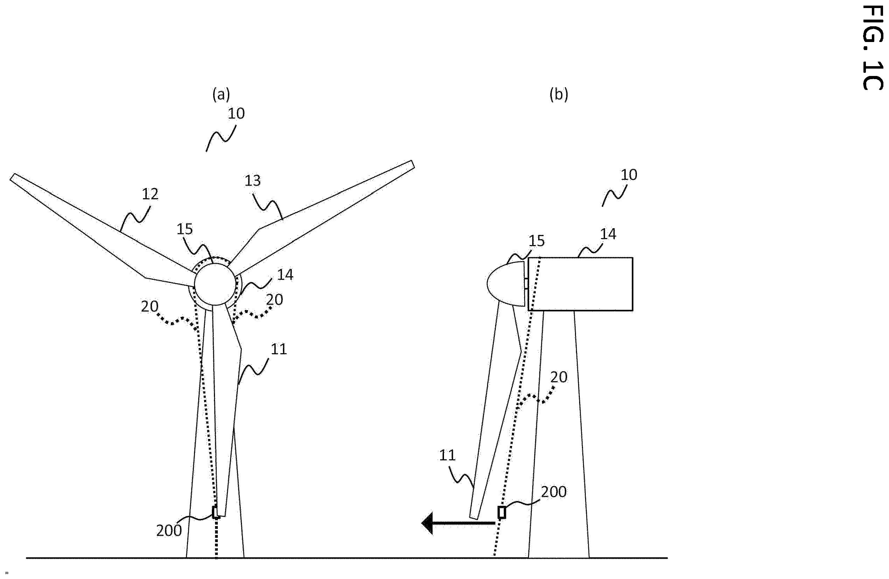

When the rope holding device **200** rises along the ropes **20** and reaches approximately the same height as the tip of the blade **11** as illustrated in Figure **1C****,** the spatial position of the rope holding device **200** is controlled in the direction indicated by the arrow in Figure **1C, (b)****.** This is for disposing the rope holding device **200** on the surface of the blade **11.**

The spatial position of the rope holding device **200** can be controlled by any approach. For example, the spatial position may be controlled by pulling one of the two ropes **20,** the spatial position may be controlled by pulling both of the two ropes **20,** or the spatial position may be controlled by connecting at least one rope different from the two ropes **20** to the rope holding device **200** and pulling the at least one rope. For example, these ropes may be configured to be pulled by a worker or a robot on the ground, may be configured to be pulled by a worker or a robot on or in the water, or may be configured to be pulled by a worker or a robot in the air. Pulling a rope by a worker or a robot on or in the water or a worker or a robot in the air is preferred when, for example, maintenance is performed on a wind turbine on the sea or along the coast.

Preferably, the spatial position of the rope holding device **200** is controlled by pulling one or both of the two ropes **20** from the ground because this can safely control the spatial position of the rope holding device **200** from the ground without requiring an additional facility.

The control of the spatial position is not limited to control via a rope. For example, the spatial position may be controlled by control via a position controlling device that the rope holding device **200** may comprise instead of the control via a rope or in addition to the control via a rope. The position controlling device can be a device capable of generating propulsive force to control the position of the rope holding device **200.** For example, the position controlling device can be a propeller attached to the rope holding device **200** or a device which is able to fly such as a drone attached to the rope holding device **200.**

Since the rope holding device **200** has a reduced weight as described above, the spatial position thereof can be easily controlled.

Furthermore, although it was explained in the above-described example that the spatial position of the rope holding device **200** is controlled after the rope holding device **200** reaches approximately the same height as the tip of the blade **11,** the timing at which the spatial position is controlled is not limited thereto. For example, the spatial position of the rope holding device **200** may be controlled while the rope holding device **200** is being raised.

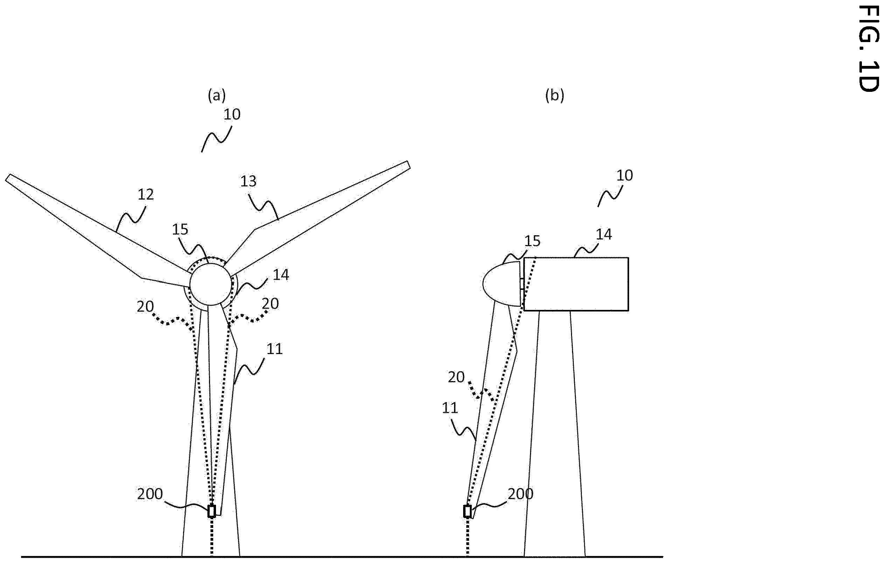

The spatial position of the rope holding device **200** is controlled, whereby the rope holding device reaches the blade **11** as shown in Figure **1D****.** This enables the rope holding device **200** to be disposed on the blade **11.**

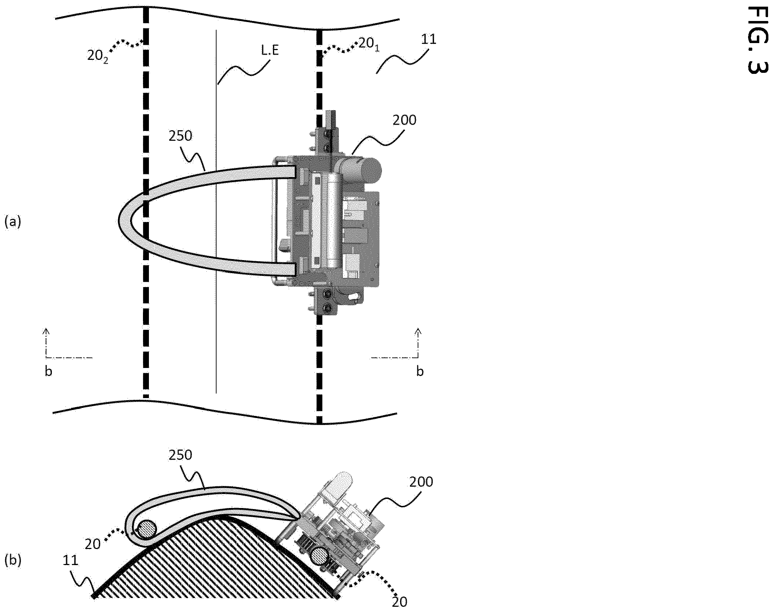

Figure **3** shows the state of the rope holding device **200** disposed on the blade **11.** Figure **3, (a)** is a figure of a leading edge (L.E) of the blade **11** viewed from right above while Figure **3, (b)** is a cross sectional view along b-b line shown in Figure **3, (a)****.**

Since the rope holding device **200** engages with the rope **20₁** and restrains the rope **20₂,** the two ropes **20₁** and **20₂** would be held on the blade **11** by disposing the rope holding device **200** on the blade **11.**

As shown in Figure **3****,** the two ropes **20** are located on both sides of when the blade **11** is divided into two by the leading edge. Specifically, the rope **20₁** is located on the right side from the leading edge shown in Figure **3, (a)** while the rope **20₂** is located on the left side from the leading edge shown in Figure **3, (a)****.** As a result, the two ropes would extend from both sides of the blade **11.**

In this case, each of the two ropes **20₁** and **20₂** extends from the nacelle **14** of the wind turbine **10** and has a significant length. Thus, each rope also has a significant weight. Since the rope holding device **200** has a reduced weight as described above, the rope holding device can be lighter than each of the ropes. Thus, the rope holding device **200** can be stably disposed on the blade **11** by the weight of the two ropes **20₁** and **20₂** located on both sides of the leading edge of the blade **11** and the friction between the rope holding device **200** and the blade **11.**

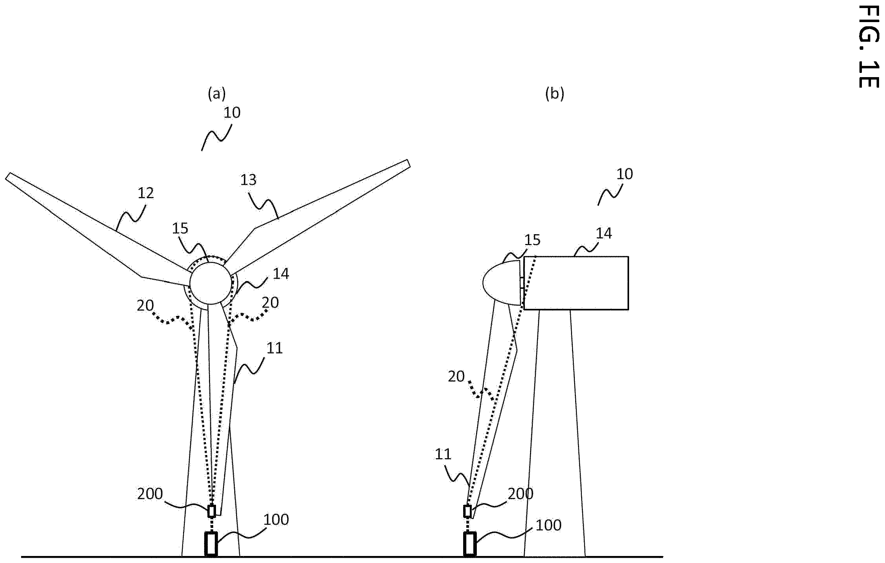

Figures **1E** to **1F** show the state of a stage in which the maintenance device **100** is moved onto the blade **11** of the wind turbine **10.**

The maintenance device **100** comprises a moving means for moving along the two ropes **20.** For example, the moving means is a winch. For example, the maintenance device **100** comprises two winches, wherein one rope is connected to one of the two winches while the other rope is connected to the other of the two winches. For example, one end of the ropes **20** is fixed to the ground by a weight or the like. The maintenance device **100** can rise along the ropes **20** by winding the ropes **20** using a winch.

Since the ropes **20** vertically extend from the rope holding device **200** disposed on the blade **11,** the maintenance device **100** can rise to the blade **11** without a need for control of the posture or spatial position thereof. Further, since the rope holding device **200** holds the two ropes in proximity to each other, the ropes along which the maintenance device **100** rises would be also in proximity to each other. This enables the maintenance device **100** to effectively utilize the two ropes **20** for rising. For example, rising along two or more ropes enables safer and more stable rising as compared to rising along one rope.

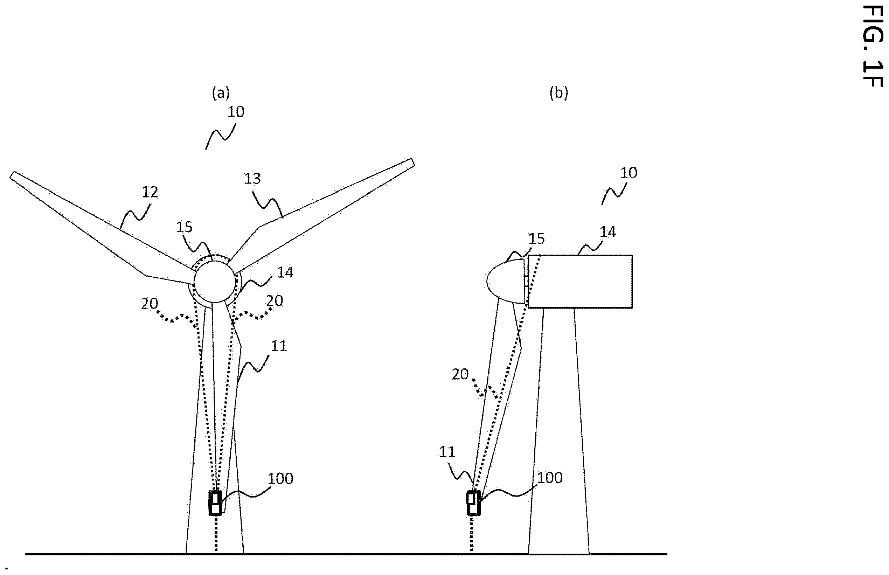

The maintenance device **100** rises along the ropes **20** to reach the blade **11** as shown in Figure **1F****.** This enables the maintenance device **100** to be disposed on the blade **11.**

The maintenance device **100** which has reached the blade **11** can attach to the blade **11** by any mechanism. For example, the maintenance device **100** may be configured to attach the blade **11** by mechanical force, may be configured to attach to the blade **11** by magnetic force, may be configured to attach to the blade **11** by electric power, or may be configured to attach to the blade **11** by pressure. A mechanism for attaching to the blade **11** by mechanical force can be, for example, a pair of frames that are biased to hold the blade **11** therebetween. A mechanism for attaching to the blade **11** by pressure can be, for example, a mechanism which generates negative pressure to be stuck to the blade **11.**

When the maintenance device **100** reaches the blade **11,** the role played by the rope holding device **200** is complete. The rope holding device **200** no longer needs to restrain the rope **20₂.** Thus, the rope holding device **200** can release the rope **20₂.**

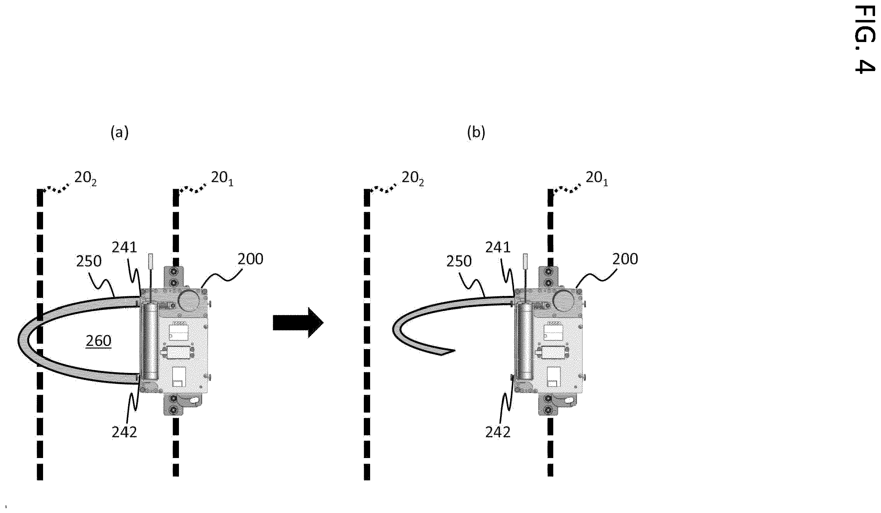

Figure **4** shows a state in which the rope holding device **200** releases the rope **20₂.**

As shown in Figure **4, (a)****,** the rope holding device **200** engages with the rope **20₁** and restrains the rope **20₂** in the aperture **260.** The member **250** is attached to the first attaching portion **241** and the second attaching portion **242** of the body of the rope holding device **200.** One end of the member **250** is fixedly attached to the first attaching portion **241** while the other end of the member **250** is releasably attached to the second attaching portion **242.**

The rope holding device **200** can release the end portion of the member **250** attached to the second attaching portion **242** as shown in Figure **4, (b)****,** whereby the aperture **260** can be opened and the rope **20₂** can be released.

The rope holding device **200** can release the end portion of the member **250** at any timing. For example, the rope holding device **200** can release the end portion of the member **250** in response to receiving an instruction from outside. Alternatively, for example, the rope holding device **200** can release the end portion of the member **250** in response to sensing, by the maintenance device **100,** an approach or a contact of the rope holding device **200.**

In this manner, the member **250** can transition from a first state where the rope **20₂** is restrained to a second state where the rope **20₂** is released.

The rope holding device **200** may be configured to release the engagement with the rope **20₁** when the maintenance device **100** reaches the blade **11.** Specifically, the rope holding device **200** can be put into a state in which the rope holding device **200** is still connected to the rope **20₁** but cannot exert force on the rope **20₁.** This enables the rope holding device **200** to move along the rope **20₁** in accordance with the movement of the maintenance device **100** so that the movement of the maintenance device **100** is not hindered. Since the rope holding device **200** is still connected to the rope **20₁,** the rope holding device **200** does not fall from the blade **11.**

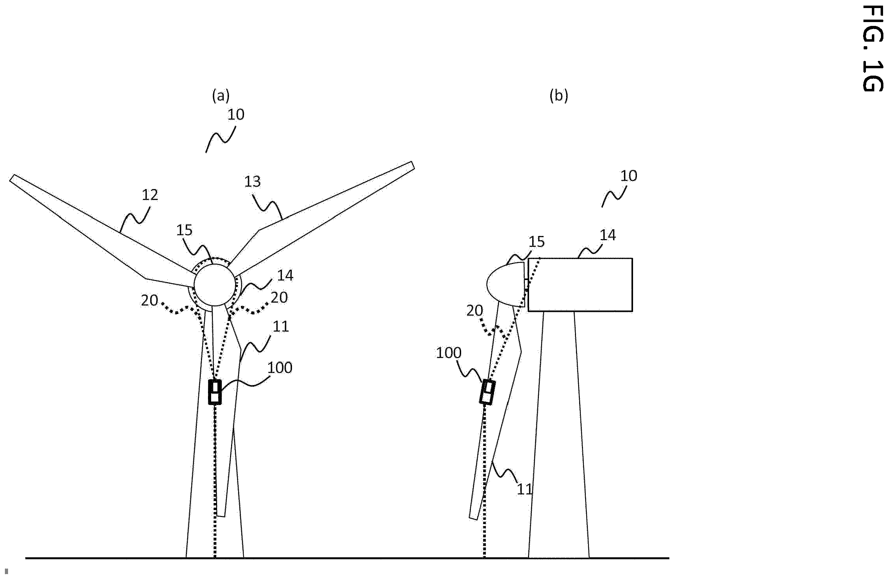

Figure **1G** shows a state in which the maintenance device **100** moves on the leading edge of the blade **11** along the ropes **20.**

When the maintenance device **100** moves along the leading edge, the maintenance device **100** can maintain a state in which the maintenance device attaches to the blade **11,** which enables the maintenance device **100** to move on the leading edge of the blade **11** without floating up. Further, since the leading edge of the blade **11** is inclined by about 5 degrees (inclined by about 1 degree to about 10 degrees in some cases) relative to the vertical direction as described above, the gravity exerted on the maintenance device **100** acts so as to push the maintenance device **100** against the leading edge of the blade **11,** thereby preventing the maintenance device **100** from floating up.

The maintenance device **100** performs maintenance on the blade **11** while moving on the leading edge of the blade **11.** For example, the maintenance device **100** images the surface of the leading edge by using a camera while moving on the leading edge of the blade **11.** For example, the maintenance device 100 examines the conduction of a lightning receiving portion by using a probe while moving on the leading edge of the blade **11.** For example, the maintenance device **100** washes the surface of the leading edge by using a washing device while moving on the leading edge of the blade **11.** For example, the maintenance device **100** polishes the surface of the leading edge by using a sander while moving on the leading edge of the blade **11.** For example, the maintenance device **100** applies paint to the surface of the leading edge by using a paint applying device while moving on the leading edge of the blade **11.** For example, the maintenance device **100** applies a material such as putty, adhesive, or sealant to the surface of the leading edge by using an electric gun while moving on the leading edge of the blade **11.** A hole made on the blade **11** can be filled with an applied material. The objective of filling a hole is to cover the hole to prevent water from entering the blade **11** and the like. Aesthetics or perfection do not need to be required.

By controlling winding and delivering by a winch, the maintenance device **100** can move on the leading edge of the blade **11** in a direction in which the ropes **20** extend, for example, in a direction from the tip of the blade toward the base of the blade and a direction from the base of the blade toward the tip of the blade. This enables the maintenance device **100** to perform maintenance while reciprocatively moving on the leading edge of the blade **11.** Further, even if the maintenance device **100** comes off the blade **11,** the ropes **20** to which the winch of the maintenance device **100** is connected serve as a lifeline, which can prevent the maintenance device **100** from falling down.

Although it was explained that maintenance is performed on a blade of a wind turbine by using one maintenance device **100** in the above-described examples, it is also possible to perform maintenance on a blade of a wind turbine by using a plurality of maintenance devices **100.**

Although it was explained that one rope holding device **200** is used in the above-described examples, the number of rope holding devices **200** can be any number that is 1 or greater. For example, two rope holding devices **200,** three rope holding devices **200,** or four or more rope holding devices **200** can be used. Furthermore, although it was explained that two ropes **20** are used in the above-described examples, the present invention is not limited thereto. The present invention can perform maintenance on a blade of a wind turbine by using at least one rope.

For example, when maintenance is performed on a blade of a wind turbine by using one rope holding device **200** and one rope, the member **250** can be omitted from the above-described rope holding device **200.** The rope holding device **200** and the maintenance device **200** would rise along one rope and move on the blade.

For example, when maintenance is performed on a blade of a wind turbine by using one rope holding device 200 and three or more ropes, the three or more ropes are divided into a first rope group comprising at least one rope and a second rope group comprising at least one rope. The first rope group is treated in the same manner as the above-described rope **20₁** while the second rope group is treated in the same manner as the above-described rope **20₂.** For example, the rope holding device **200** engages with the first rope group, and the second rope group passes through an aperture formed by the body of the rope holding device **200** and the member **250,** whereby the second rope group is restrained. Further, after the rope holding device **200** is disposed on the blade, the first rope group would extend from the first side of the blade while the second rope group would extend from the second side of the blade. The ratio of the number of ropes comprised in the first rope group and the number of ropes comprised in the second rope group can be any value.

For example, when maintenance is performed on a blade of a wind turbine by using two rope holding devices **200** and two ropes, the member **250** can be omitted in each rope holding device **200** of the two rope holding devices **200.** Each rope holding device **200** would rise onto the blade along the respective one rope. For example, the two rope holding devices **200** may be configured to independently move to the blade, or may be configured to move to the blade in synchronization. The maintenance device would rise to the blade along the two ropes held by the two rope holding devices **200** and move on the blade.

For example, when maintenance is performed on a blade of a wind turbine by using one rope holding device **200** and two ropes, the one rope holding device **200** may be configured to engage with both of the two ropes. In this case, the rope holding device **200** has two engaging portions, wherein the first engaging portion engages with the first rope while the second engaging portion engages with the second rope. The first engaging portion and the second engaging portion apply force to the respective rope, which enables the rope holding device **200** to move along the ropes. For example, the two engaging portions can move on the ropes in synchronization. After moving onto the blade, the first rope may be separated from the second rope by, for example, separating the rope holding device **200** into a first portion having the first engaging portion and a second portion having the second engaging portion. Such a rope holding device **200** can be constructed as, for example, a symmetrical structure.

For example, when maintenance is performed on a blade of a wind turbine by using two rope holding devices **200** and three or more ropes, the three or more ropes are divided into a first rope group comprising at least one rope, a second rope group comprising at least one rope, and a third rope group comprising at least one rope. The first rope group is treated in the same manner as the above-described rope **20₁** while the second rope group is treated in the same manner as the above-described rope **20₂,** and these rope groups are connected to a first rope holding device **200** of the two rope holding devices **200.** For example, the first rope holding device **200** would engage with the first rope group and restrain the second rope group in an aperture formed by the body of the rope holding device **200** and the member **250.** The third rope group is connected to a second rope holding device **200** of the two rope holding devices **200.** For example, the second rope holding device **200** can engage with the third rope group. Alternatively, the third rope group may be further divided into two rope groups, wherein the second rope holding device **200** can engage with one of the rope groups resulting from the division and restrain the other of the rope groups resulting from the division. The ratio of the number of ropes comprised in the first rope group, the number of ropes comprised in the second rope group, and the number of ropes comprised in the third rope group can be any value.

For example, when maintenance is performed on a blade of a wind turbine by using three or more rope holding devices **200** and three or more ropes, the three or more ropes are divided into at least three rope groups, and each of the three or more rope holding devices **200** is connected to at least one rope group. Those skilled in the art should understand that it is possible to perform maintenance on a blade of a wind turbine by using any number of rope holding devices **200** and any number of ropes within a range expected from the scope of the present disclosure.

According to the maintenance method explained while referring to Figures **1A** to **1G****,** the maintenance device **100** can be easily disposed on the blade **11.** The maintenance device **100** can reach the blade **11** and land on the blade **11** only by following a rope held by the rope holding device **200.** In this case, when landing on the blade **11,** the posture of the maintenance device **100** does not need to be finely controlled. This is because the maintenance device **100** can be guided to a suitable landing position on the blade **11** by the rope held by the rope holding device **200.** This can simplify or omit a mechanism for landing that the maintenance device **100** should have. Further, since landing is easy, manpower upon landing can be reduced. Furthermore, since it is not necessary to finely control the posture upon landing, even when the weight of the maintenance device is increased, the difficulty in landing would be less affected. Thus, it is possible to install many functions on the maintenance device to cause the maintenance device to perform many types of maintenance at once. This leads to more efficient maintenance.

According to the maintenance method explained while referring to Figures **1A** to **1G****,** the maintenance device **100** can be easily moved to the blade **11.** For example, when the maintenance device **100** is moved to the blade **11** without using the rope holding device **200,** it is necessary to control the spatial position of the maintenance device **100** after moving the maintenance device **100** to approximately the same height as the tip of the blade **11** or while moving the maintenance device **100** to approximately the same height as the tip of the blade **11** as shown in Figure **1B****.** The maintenance device **100,** which is installed with various mechanisms for performing various types of maintenance, generally has a weight of about 40 to 100 kg. It is not easy to control the spatial position of such a heavy device, and a skilled technique may be required. On the other hand, the rope holding device **200** is light and the spatial position thereof is easy to control. The rope holding device **200,** which is lighter than the maintenance device **100** and whose spatial position is easily controlled, is disposed on the blade **11** in advance and the maintenance device **100** is moved along a rope held by the rope holding device **200,** whereby the maintenance device **100** can be easily moved to the blade **11** without a need for a skilled technique.

### 2. Configuration of a system for performing maintenance on a blade of a wind turbine

The system for performing maintenance on a blade of a wind turbine of the present invention comprises a maintenance device **100** and a rope holding device **200.** The system can comprise any number of maintenance devices **100** and any number of rope holding devices **200.**

The maintenance device **100** can have any configuration as long as it is configured to perform maintenance on a blade of a wind turbine, move to the blade on a rope, and move on the blade.

The maintenance device **100** can comprise any means for performing maintenance. For example, the means for performing maintenance can comprise at least one of an imaging means, a conduction examining means, a washing means, a polishing means, a grinding means, and an applying means.

The imaging means can be any camera that is able to image a still picture or movie of an object.

The conduction examining means can be any means that is able to examine whether current flows in a conducting portion. For example, the conduction examining means comprises a probe that is able to examine whether current flows in a lightning receiving portion provided to a blade of a wind turbine.

The washing means can be any means that is able to wash an object. For example, the washing means may be a mechanism that uses washing liquid and rag to wipe off dirt. When such a mechanism is used to wash the blade **11** of the wind turbine **10** while moving on the blade **11** of the wind turbine **10** as shown in Figure **1G****,** washing is performed by the maintenance device **100** moving on the blade while pushing the rag against the blade.

The polishing means can be any means that is able to polish an object. For example, the polishing means may be a mechanism that uses a sandpaper, a grinder, a disk grinder or the like to perform polishing. When a sandpaper, a grinder, or a disk grinder is used to polish the blade **11** of the wind turbine **10** while moving on the blade **11** of the wind turbine **10** as shown in Figure **1G****,** polishing is performed by the maintenance device **100** moving on the blade while pushing the sandpaper or rotating grinder against the blade.

The grinding means can be any means that is able to grind an object. For example, the grinding means may be a mechanism that uses a leutor (or hand grinder or precision grinder), a belt sander or the like to perform grinding. For example, the grinding means can grind the surface of the blade **11** by pushing a leutor or belt sander against the blade **11** of the wind turbine **10.**

The applying means can be any means that is able to apply a material to an object. Examples of the material applied by the applying means include paint, putty, adhesive, and sealant. For example, the applying means may be a spraying device that is able to spray paint. When such a spraying device is used to apply paint to the blade **11** of the wind turbine **10** while moving on the blade **11** of the wind turbine **10** as shown in Figure **1G****,** the paint is applied by the maintenance device **100** moving on the blade while spraying the paint from the spraying device. For example, the applying means may be a caulking gun that is able to extrude putty, adhesive, sealant, or the like. When such a caulking gun is used to apply a material such as putty, adhesive, or sealant to the blade **11** of the wind turbine **10** while moving on the blade **11** of the wind turbine **10** as shown in Figure **1G****,** the material is applied by identifying a portion to which the material should be applied with the imaging means or the like in advance, moving the maintenance device **100** on the blade **11,** and extruding the material when the maintenance device reaches the portion to which the material should be applied.

It should be noted that the means for performing maintenance are not limited to the imaging means, the conduction examining means, the washing means, the polishing means, the grinding means, and the applying means. The maintenance device **100** may comprise another means for performing maintenance instead of or in addition to the above-described means.

For example, the maintenance device **100** can comprise a communicating means. It is thereby possible to receive a signal from the outside of the maintenance device **100** and transmit a signal to the outside of the maintenance device **100.** The communication means may receive a signal from the outside of the maintenance device **100** wirelessly or by wire. The communication means may transmit a signal to the outside of the maintenance device **100** wirelessly or by wire. For example, the communicating means can receive a signal for controlling each action of the maintenance device **100** from the outside of the maintenance device **100** (e.g., a terminal for operation used by an operator). For example, the communicating means can transmit image data obtained by the imaging means to the outside of the maintenance device **100** (e.g., a terminal for operation used by an operator).

Although it was explained that each action of the maintenance device **100** is controlled in accordance with a signal from the outside of the maintenance device **100,** the present invention is not limited thereto. For example, a program for realizing a series of actions for performing maintenance on a blade may be stored in a memory of the maintenance device **100.** A processor of the maintenance device **100** can read out and execute the program to cause the maintenance device **100** to function as a device automatically performing maintenance on a blade.

The maintenance device **100** comprises a moving means that enables the maintenance device **100** to move along a rope. The moving means also enables the maintenance device **100** to move on a blade. For example, the moving means comprises a winch that enables the maintenance device **100** to move along a rope. For example, the moving means comprises a wheel that enables the maintenance device **100** to move on a blade. While the wheel can be a non-driving wheel, the wheel may be a driving wheel driven by a power source. For example, the maintenance device **100** may be configured to move on a blade by using a winch and a non-driving wheel, or may be configured to move on a blade by using a driving wheel without utilizing a winch (and a rope).

Although an example in which the maintenance device 100 can comprise a means for performing maintenance, a communicating means, a memory, a processor, and a moving means was explained in the above-described examples, the present invention is not limited thereto. A system in which at least one of the components of the maintenance device **100** is positioned outside the body of the maintenance device **100** is also within the scope of the present invention. For example, the nacelle **14** of a wind turbine may comprise a winch instead of the maintenance device **100** comprising a winch. In this case, the maintenance device **100** may be configured so that a rope extending from the winch of the nacelle **14** of the wind turbine is fixed to the maintenance device **100** and the winch of the nacelle **14** of the wind turbine winds or delivers the rope, whereby the maintenance device **100** moves to the blade **11** or on the blade **11.**

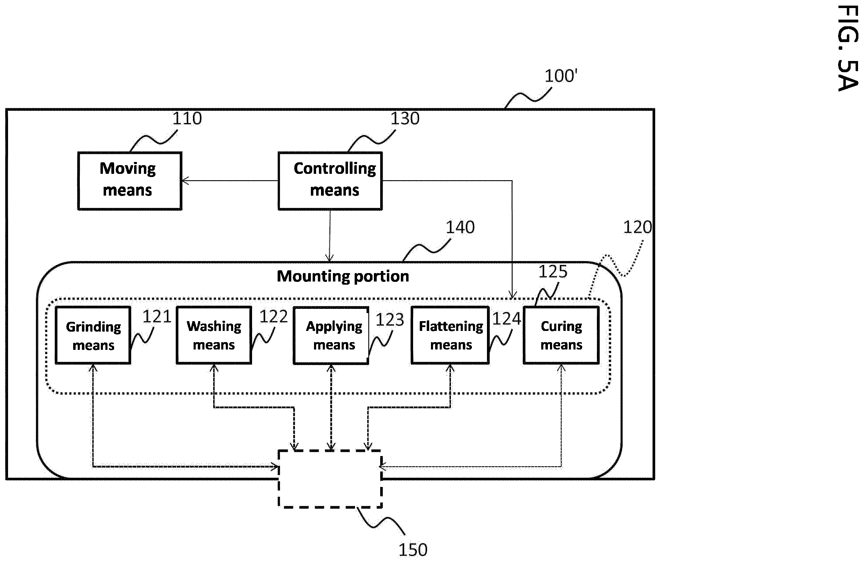

Figure **5A** shows one example of a configuration of a maintenance device **100',** which is an alternative embodiment of the maintenance device **100.**

The maintenance device **100'** comprises a moving means **110,** a plurality of maintenance means **120,** and a controlling means **130.** The plurality of maintenance means **120** are mounted on a mounting portion **140.**

The moving means **110** is configured to enable the maintenance device **100'** to move on a blade of a wind turbine. For example, the moving means **110** comprises a winch that enables the maintenance device **100'** to move along a rope placed on a wind turbine. For example, the maintenance device **100'** can also move to a blade of a wind turbine by utilizing a rope and a winch placed on the wind turbine. For example, the moving means **110** comprises a wheel that enables the maintenance device **100'** to move on a blade. While the wheel can be a non-driving wheel, the wheel may be a driving wheel driven by a power source. For example, the maintenance device **100'** may be configured to move on a blade by using a winch and a non-driving wheel, or may be configured to move on a blade by using a driving wheel without utilizing a winch (and a rope).

For example, the rope may pass through the winch or may not pass through the winch. When the rope passes through the winch, for example, the rope would extend from the wind turbine to the maintenance device **100',** and from the maintenance device **100'** to the ground. When the rope does not pass through the winch, the rope enters from one end of the winch but does not exit from the other end, and the rope does not extend between the maintenance device **100'** and the ground. For example, the maintenance device **100'** can move to a direction toward the wind turbine by the winch winding a rope extending from the wind turbine to the maintenance device **100',** and the maintenance device can move to a direction away from the wind turbine by the winch delivering a rope extending from the wind turbine to the maintenance device **100'.**

Furthermore, the moving means **110** is not limited to a winch or wheel described above. The maintenance device **100'** may comprise another means that enables the maintenance device **100'** to move on an object as the moving means **110**instead of or in addition to the above-described means.

The plurality of maintenance means **120** are configured to perform mutually different maintenances. For example, the plurality of maintenance means **120** comprise a grinding means **121,** a washing means **122,** an applying means **123,** a flattening means **124,** and a curing means **125.**

The grinding means **121** can be any means that is able to grind an object. The grinding means **121** is configured to grind the surface of a blade of a wind turbine. For example, the grinding means **121** can be a mechanism that uses a leutor (or hand grinder or precision grinder), a belt sander or the like to perform grinding. A leutor can grind an object by, for example, rotating a grinding body at a high speed and pushing the grinding body rotating at a high speed against the object. For example, the grinding body can be a spherical or ellipse body. The grinding body has a rotational axis. The portion farthest from the rotational axis (e.g., equator portion) has the greatest rotation speed and the highest grinding ability. A belt sander can grind an object by causing a ring-shaped sanding belt with a grinding surface to rotate and move around a plurality of rollers and pushing the rotating and moving grinding surface against the object. The position on the object which is grinded by the grinding means **121** can be adjusted by, for example, moving the grinding means **121** up and down, from side to side, and back and forward by a translation mechanism described below which the mounting portion **140** can comprise.

In one example, the grinding means **121** comprises a leutor. For example, a rotating grinding body is moved along the surface of an object while being pushed against the surface of the object, thereby enabling a leutor to grind a desired range on the surface of the object. A leutor is configured to be pushed against the surface of an object so that the rotational axis of the grinding body of the leutor is perpendicular to the surface of the object, so that the rotational axis of the grinding body of the leutor is inclined relative to the surface of the object, or so that the rotational axis of the grinding body of the leutor is parallel to the surface of the object. Preferably, a leutor can be configured to be pushed against the surface of an object so that the rotational axis of the grinding body of the leutor is perpendicular to the surface of an object. For example, a leutor can be placed on the maintenance device **100'** so that the rotational axis of the grinding body is perpendicular to the surface of an object, or a leutor can be controlled so that the rotational axis of the grinding body is perpendicular to the surface of an object. For example, the rotational axis of the grinding body can be perpendicular to the surface of a leading edge of a blade. Grinding by a leutor can be controlled by, for example, adjusting force with which the leutor is pushed against the surface of an object or a relative position of the leutor and the surface of an object.

For example, a dust-proof covering can be attached around a grinding body of a leutor. This can prevent powder or dust generated from grinding by the leutor from spreading.

In one example, the grinding means **121** comprises a belt sander. For example, a rotating and moving grinding surface is moved along the surface of an object while being pushed against the object, thereby enabling a belt sander to grind a desired range on the surface of the object. A belt sander is configured so that a moving direction of a grinding surface of the belt sander is inclined relative to a direction in which the surface of an object extends and the belt sander is pushed against the surface of the object. For example, a belt sander can be placed on the maintenance device **100'** so that a moving direction of a grinding surface of the belt sander is inclined relative to a direction in which the surface of an object extends, or a belt sander can be controlled so that a moving direction of a grinding surface of the belt sander is inclined relative to a direction in which the surface of an object extends. For example, a moving direction of a grinding surface of a belt sander can be inclined relative to a direction in which a leading edge of a blade extends. This can release the grinding force of the belt sander well and prevent excessive grinding by the belt sander. Grinding by a belt sander can be controlled by, for example, adjusting force with which the belt sander is pushed against the surface of an object or a relative position of the belt sander and the surface of an object.

The washing means **122** can be any means that is able to wash an object. The washing means **122** is configured to wash the surface of a blade of a wind turbine. For example, the washing means **122** can wash the surface of a blade grinded by the grinding means **121.** Alternatively, for example, the washing means **122** can wash the surface of an applied material (e.g., putty) grinded by the grinding means **121.** For example, the washing means **122** may be a mechanism that uses washing liquid and rag to wipe off dirt, or may be a mechanism that uses an ion spraying mechanism to remove static electricity. The position on an object which is washed by the washing means **122** can be adjusted by, for example, moving the washing means **122** up and down, from side to side, and back and forward by a translation mechanism described below which the mounting portion **140** can comprise.

In one example, the washing means **122** can comprise, for example: rag; and a washing liquid feeding mechanism for feeding washing liquid to the rag. As a result, the washing liquid feeding mechanism feeds the washing liquid to the rag and the rag fed with the washing liquid moves on an object, whereby the object can be washed.

Washing liquid can be any liquid with detergency. Washing liquid is preferably an organic solvent, and more preferably thinner. This can remove oil (e.g., insects or the like that collided with a blade) and powder (e.g., powder generated from grinding) on a blade.

A washing liquid feeding mechanism can be any mechanism as long as it can feed washing liquid. Preferably, a washing liquid feeding mechanism can be a mechanism that prevents volatilization of volatile washing liquid. More preferably, a washing liquid feeding mechanism can be a mechanism that is able to feed an adjusted amount of washing liquid. For example, a washing liquid feeding mechanism can have a ball-type nozzle as used for a nozzle for supplying water to a pet. A ball-type nozzle makes it possible to feed washing liquid by a small amount while preventing volatilization of the washing liquid.

The applying means **123** can be any means that is able to apply a material to an object. The applying means **123** is configured to apply a material to the surface of a blade of a wind turbine. For example, the applying means **123** can apply a material to the surface of a blade grinded by the grinding means **121** and washed by the washing means **122.** For example, the applying means **123** can further apply a material (e.g., paint) to a material (e.g., putty) applied by the applying material **123.** Examples of the material applied by the applying means **123** include paint, putty, adhesive, and sealant. For example, the applying means **123** may be a spraying device that is able to spray paint. For example, the applying means may be a caulking gun that is able to eject putty, adhesive, sealant or the like. The position on an object to which a material is applied by the applying means **123** can be adjusted by, for example, moving the applying means **123** up and down, from side to side, and back and forward by a translation mechanism described below which the mounting portion **140** can comprise.

For example, the applying means **123** can be configured to eject an amount of material to be ejected which is pre-estimated based on the shape of a portion to which the material should be applied, for example, a recessed shape grinded by the grinding means **121.** The amount of material to be ejected can be pre-estimated by, for example, the controlling means **130.**

In one example, the applying means **123** comprises a caulking gun for ejecting a material. Ejection of a material by a caulking gun can be controlled by, for example, air pressure. In this case, ejection of the material is preferably adjusted by intermittent control of air pressure. This is because it is possible to precisely control the amount of ejected material by utilizing intermittent control of air pressure even when ejection of the material is remotely controlled. Alternatively, ejection of the material is preferably adjusted by control by an electropneumatic regulator in addition to intermittent control of air pressure or instead of intermittent control of air pressure. This is because it is possible to precisely control the amount of ejected material by utilizing control by an electropneumatic regulator even when ejection of the material is remotely controlled.

The applying means **123** can comprise a mechanism that applies paint in addition to the above-described mechanism that ejects a material or instead of the mechanism that ejects a material. For example, the applying means **123** can apply paint by using a roller. In this case, a wheel as the moving means **110** may be utilized as the roller, in other words, the roller may be used by both the moving means **110** and the applying means **123,** or a different roller from the wheel as the moving means **110** may be utilized. For example, the applying means **123** can be configured to stick a paint sheet or a paint film on a part of an object in order to apply paint. A paint sheet is a sheet that retains certain amount of liquid or gel paint while a paint film is a film that retains certain amount of liquid or gel paint. Sheets and films are classified by, for example, their thickness. Those having a thickness less than a predetermined thickness (e.g., about 0.25 mm as specified by JIS) can be classified as films while those having a thickness of or greater than the predetermined thickness can be classified as sheets. Certain amount of paint can be applied by sticking a paint sheet and then peeling off the sheet. This can prevent excessive application of paint.

The flattening means **124** can be any means that is able to flatten a material. The flattening means **124** can be configured to flatten a material applied by the applying means **123.** For example, the flattening means **124** can comprise a spatula. For example, the spatula can have a tip with an acute angle. It is possible to level a material by bringing a spatula into contact with the material and moving the spatula on the material. The position on a material which is flattened by the flattening material **124** can be adjusted by, for example, moving the flattening means **124** up and down, from side to side, and back and forward by a translation mechanism described below which the mounting portion **140** can comprise.

For flattening of a material by the flattening means **124,** it is ideal to flatten the material so that the material would be flush with the surface of a blade. However, moving the flattening means **124** so that the material would be flush with the surface of a blade requires precise control by a translation mechanism. In addition, there is a risk that the flattening means **124** comes into contact with the blade. Thus, in one example, the flattening means **124** can intentionally flatten a material so that the material would not be flush with the surface of a blade. To this end, the flattening means **124** can further comprise a means for separating the spatula of the flattening means **124** from the surface of the blade.

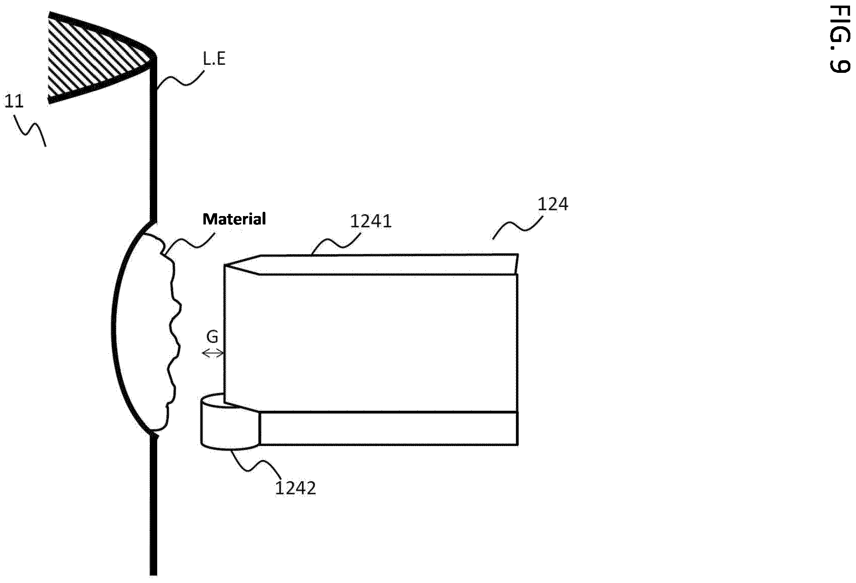

For example, the flattening means **124** can comprise a spatula **1241** and an abutting portion **1242** for separating the spatula from a blade as shown in Figure **9****.**

Figure **9** shows a state before the flattening means **124,** which comprises the spatula **1241** and the abutting portion **1242,** flattens a material applied to a recessed portion on a leading edge (L.E) of the blade **11.** The abutting portion **1242** is disposed to abut on the blade **11** to separate the spatula **1241** from the blade. In other words, the abutting portion **1242** is disposed to project from the tip of the spatula **1241** by a distance **G.** This enables the abutting portion **1242** to abut on the blade **11,** whereby a gap with a size **G** is formed between the spatula **1241** and the blade **11.** The spatula **1241** flattens the material in a state in which the abutting portion **1242** abuts on the blade **11,** whereby the material would be flattened in a state in which the material rises by the gap. In this case, control of the movement of the flattening means **124** does not require precise control and there is no risk that the flattening means **124** comes into contact with the blade. For example, the material flattened in a rising state can be grinded by the grinding means **121** (e.g., belt sander) until the material becomes flush with the surface of the blade.

In one example, the flattening means **124** further comprises a means for cleaning a spatula. A material remaining after the flattening operation can be removed by cleaning a spatula. This is preferable in that it is possible to prevent a material used for maintenance on a certain portion from being mixed into a material for use in maintenance on another portion. This is because since a material can be applied by the applying means **123** only at an amount which is estimated based on the shape of a portion to which the material should be applied, if a material used for maintenance on a certain portion is mixed into a material for use in maintenance on another portion, there would be a surplus of material and it is likely that suitable maintenance cannot be performed.

For example, a means for cleaning a spatula can be a wire net. If a spatula with a material adhered thereto is rubbed against a first side of a wire net, the material adhered to the spatula passes through the holes of the wire net to move to a second side opposite to the first side. The material that has moved to the second side of the wire net falls in the gravity direction due to the viscosity of the material and the gravity and does not return to the first side of the wire net. In this manner, being able to remove the material adhered to the spatula only by rubbing the spatula against the wire net is an effect that is unexpectedly obtained.

Preferably, each hole of a wire net can be a hole with a surface area of about 5 mm² to about 25 mm², and more preferably, each hole of a wire net can be a hole with a surface aera of about 10 mm². In this case, the viscosity of a material can be about 35,000 mPa·s to about 45,000 mPa·s at a room temperature of 25°C, and can be preferably about 40,000 mPa·s. The shape of each hole of a wire net can be any shape, but can be preferably a rhombus shape.

Referring to Figure **5A** again, the curing means **125** can be any means that is able to cure a curable material. The curing means **125** can be configured to cure a material applied by the applying means **123** and/or a material flattened by the flattening means **124.** For example, the curing means **125** can be a light source for curing a photocurable material. For example, the light source can be a UV light source. The position on a material which is cured by the curing means **125** can be adjusted by, for example, moving the curing means **125** up and down, from side to side, and back and forward by a translation mechanism described below which the mounting portion **140** can comprise.

Each of the plurality of maintenance means **120** described above can have a distance measuring function. It is thereby possible to control a relative distance between each maintenance means **120** and an object based on the measured distance from the object to perform suitable maintenance on the object. For example, a distance measuring function can be achieved by a contact sensor. For example, a distance between each maintenance means **120** and an object can be recognized by grasping space based on the position in which a contact sensor comes into contact with the object.

In a preferred example, one of the plurality of maintenance means **120** is the applying means **123.** It is thereby possible to apply a material to a site requiring maintenance as maintenance. In a more preferred example, one of the plurality of maintenance means **120** is the grinding means **121** while another one is the applying means **123.** It is thereby possible to grind a site requiring maintenance and apply a material to the grinded portion as maintenance. In a further preferred example, one of the plurality of maintenance means **120** is the grinding means **121,** another one is the washing means **122,** and yet another one is the applying means **123.** It is thereby possible to grind a site requiring maintenance, wash the grinded portion, and then apply a material thereto as maintenance. In a further preferred example, one of the plurality of maintenance means **120** is the grinding means **121,** another one is the washing means **122,** yet another one is the applying means **123,** and yet another one is the flattening means **124.** It is thereby possible to grind a site requiring maintenance, wash the grinded portion, apply a material thereto, flatten the applied material, and perform further grinding, washing, and application for the flattened material as maintenance.

Note that the plurality of maintenance means 120 are not limited to the above-described means. The maintenance device **100** may be configured to comprise other means for performing maintenance instead of the above-described means or in addition to the above-described means.

The controlling means **130** controls the overall action of the maintenance device **100'.** For example, the controlling means **130** can control the action of the plurality of maintenance means **120.** Each action for performing maintenance on an object is thereby executed. For example, the controlling means **130** can select at least one maintenance means of the plurality of maintenance means **120** as a maintenance performing means **150.** For example, the controlling means **130** can select at least one maintenance means as the maintenance performing means **150** based on the current position of the maintenance device **100',** the maintenance that the maintenance device **100'** already performed, the state of an object, or the like. The controlling means **130** can control the plurality of maintenance means **120** so that maintenance by the at least one maintenance means selected would be executed.

The controlling means **130** can control the action of the mounting portion **140.** For example, the controlling means **130** can rotate the mounting portion **140** by controlling a rotation mechanism that the mounting portion **140** can comprise. This can change the position of the plurality of maintenance means **120** mounted on the mounting portion **140.** For example, the controlling means **130** can translate the mounting portion **140** by controlling a translation mechanism that the mounting portion **140** can comprise. This can change the position of the plurality of maintenance means mounted on the mounting portion **140.** Rotation and/or translation of the mounting portion **140** can be executed before, while, or after at least one maintenance means selected by the controlling means as the maintenance performing means **150** performs maintenance.

For example, the controlling means **130** can control the action of the moving means **110.** This can move the maintenance device **100'** on a blade of a wind turbine.

The controlling means **130** can control the action of the moving means **110,** the plurality of maintenance means **120,** and/or the mounting portion **140** in accordance with a control signal received by a communicating means that the maintenance device **100'** can comprise. Alternatively, the controlling means **130** can read out a program stored in a memory that the maintenance device **100'** can comprise and control the action of the moving means **110,** the plurality of maintenance means **120,** and/or the mounting portion **140** in accordance with the program. In other words, the maintenance device **100'** may be a remotely controlled device or may be an autonomously operating device.

The controlling means **130** can be implemented by one or more processors.

The mounting portion **140** is mounted with the plurality of maintenance means **120** so that at least one maintenance means of the plurality of maintenance means **120** is selected and maintenance can be performed on at least a part of an object by using the at least one maintenance means selected. For example, the mounting portion **140** is mounted with the grinding means **121,** the washing means **122,** the applying means **123,** the flattening means **124,** and the curing means **125,** the controlling means **130** selects at least one means of the grinding means **121,** the washing means **122,** the applying means **123,** the flattening means **124,** and the curing means **125** as the maintenance performing means **150,** and the selected means executes maintenance.

For example, first, the controlling means **130** selects the grinding means **121** as the maintenance performing means **150** and controls the grinding means **121** so that grinding of a site requiring maintenance by the grinding means **121** is executed. This can be performed after the controlling means **130** controls the mounting portion **140** to change the position of the grinding means **121** so that maintenance by the grinding means **121** can be executed. Next, the controlling means **130** selects the washing means **122** as the maintenance performing means **150** and controls the washing means **122** so that washing of a site requiring maintenance by the washing means **122** is executed. This can be performed after the controlling means **130** controls the mounting portion **140** to change the position of the washing means **122** so that maintenance by the washing means **122** can be executed. Next, the controlling means **130** selects the applying means **123** as the maintenance performing means **150** and controls the applying means **123** so that application of a material to a site requiring maintenance by the applying means **123** is executed. This can be performed after the controlling means **130** controls the mounting portion **140** to change the position of the applying means **123** so that maintenance by the applying means **123** can be executed. Next, the controlling means **130** selects the flattening means **124** as the maintenance performing means **150** and controls the flattening means **124** so that flattening of a material at a site requiring maintenance by the flattening means **124** is executed. This can be performed after the controlling means **130** controls the mounting portion **140** to change the position of the flattening means **124** so that maintenance by the flattening means **124** can be executed. Next, the controlling means **130** selects the curing means **125** as the maintenance performing means **150** and controls the curing means **125** so that curing of a material at a site requiring maintenance by the curing means **125** is executed. This can be performed after the controlling means **130** controls the mounting portion **140** to change the position of the curing means **125** so that maintenance by the curing means **125** can be executed. In this manner, a means for maintenance to be performed is selected from the plurality of maintenance means **120** mounted on the mounting portion **140** as the maintenance performing means **150,** and the selected means would perform maintenance. The plurality of maintenance means **120** are collectively mounted on the mounting portion **140,** whereby the size of the maintenance device **100'** can be reduced.

For example, the mounting portion **140** can comprise a mounting body and an attaching portion on the mounting body to which a plurality of maintenance means are attached. The mounting portion **140** can further comprise a translation mechanism which translates the mounting body. The translation mechanism translates the mounting body in a predetermined direction, e.g., moves the mounting body up and down, from side to side, and/or back and forward, whereby the plurality of maintenance means attached to the mounting body would be also moved in the predetermined direction, e.g., up and down, from side to side, and/or back and forward. This can change the position of the plurality of maintenance means. The position of the plurality of maintenance means is changed by the translation mechanism, which enables the plurality of maintenance means to perform maintenance on a blade in a suitable position. Further, since the position of the plurality of maintenance means mounted on the mounting portion **140** can be changed by the translation mechanism at a single time, it is not necessary to provide a mechanism which controls a position to each of the plurality of maintenance means. This further promotes reduction in size of the maintenance device **100'.**

The maintenance device **100'** may be configured to further comprise at least one of the above-described features of the maintenance device **100.**

### (Revolver form)

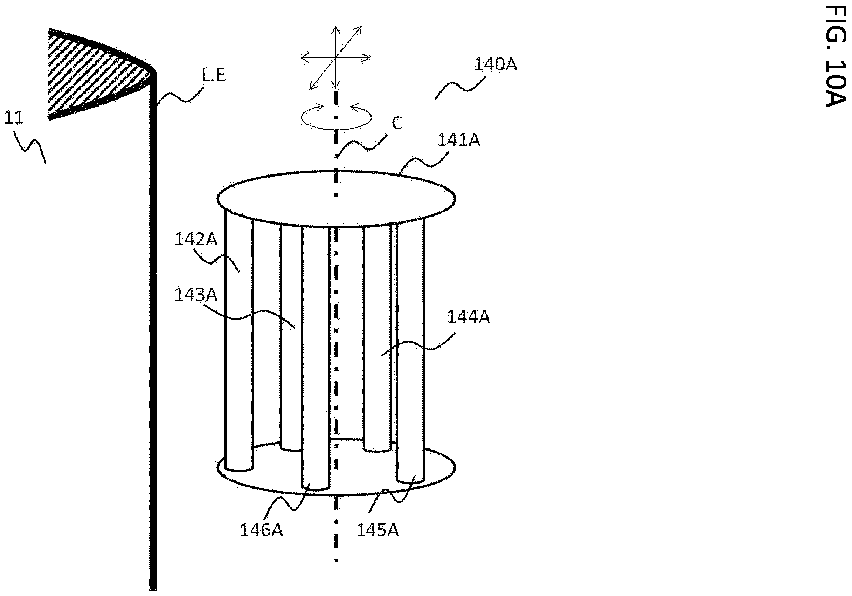

Figure **10A** shows one example of a mounting portion **140A** in one embodiment. In Figure **10A****,** illustration of the plurality of maintenance means **120** mounted on the mounting portion **140A** is omitted. Figure **10A** depicts a perspective view and a cross section of the blade **11.**

The mounting portion **140A** comprises a mounting body **141A** and attaching portions **142A, 143A, 144A, 145A,** and **146A.** To each attaching portion, respective one of the plurality of maintenance means **120** can be attached. The mounting body **141A** has a columnar shape having a top face that can face the blade, a bottom face opposite to the top face, and a side face between the top face and the bottom face, wherein the plurality of maintenance means **120** are configured to be attached to the side face. For example, the plurality of maintenance means **120** can be attached around the mounting body **141A.** Although Figure **10A** shows five attaching portions, the number of attaching portions is not limited thereto. The mounting portion **140A** can comprise any number of attaching portions depending on the number of maintenance means to be mounted.

The mounting body **141A** has an axis **C,** and the mounting body **141A** can be rotated around the axis **C** by a rotation mechanism (not shown) (in the direction of the curved arrow shown in Figure **10A**). For example, the mounting body **141A** can be rotated around the axis **C** so that a means for maintenance to be performed among the plurality of maintenance means **120** attached to the side face of the mounting body **141A** approaches a site requiring maintenance on the blade **11** (e.g., leading edge (L.E)). In the example shown in Figure **10A****,** the attaching portion **142A** approaches the blade **11** most and maintenance would be performed by a maintenance means attached to the attaching portion **142A.**

The mounting body **141A** can be translated by a translation mechanism (not shown). For example, the mounting body **141A** can be moved up and down, from side to side, and back and forward in the direction of the straight-line arrow shown in Figure **10A** by a translation mechanism, and can be positioned relative to the leading edge (L.E) of the blade **11.**

A rotation mechanism and a translation mechanism enable a means for maintenance to be performed to approach a blade and to be positioned in the right place. Further, the position of the maintenance means can be also controlled by the translation mechanism during the performance of the maintenance. Since the same rotation mechanism and translation mechanism can be used for a plurality of maintenance means to control the position of each of the plurality of maintenance means, it is not necessary to provide a mechanism which controls a position to each of the plurality of maintenance means. This further promotes reduction in size of the maintenance device **100'.**

### (Revolver form 2)

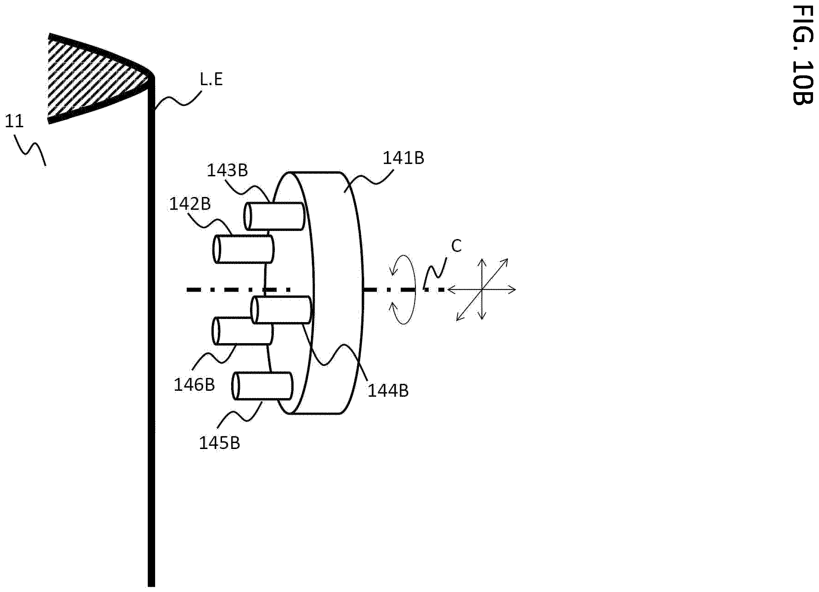

Figure **10B** shows one example of a mounting portion **140B** in one embodiment. In Figure **10B****,** illustration of the plurality of maintenance means **120** mounted on the mounting portion **140B** is omitted. Figure **10B** depicts a perspective view and a cross section of the blade **11.**

The mounting portion **140B** comprises a mounting body **141B** and attaching portions **142B, 143B, 144B, 145B,** and **146B.** To each attaching portion, respective one of the plurality of maintenance means can be attached. The mounting body **141B** has a columnar shape having a top face that can face the blade, a bottom face opposite to the top face, and a side face between the top face and the bottom face, wherein the plurality of maintenance means **120** are configured to be attached to the top face. For example, the plurality of maintenance means **120** can be attached around the mounting body **141B.** Although Figure **10B** shows five attaching portions, the number of attaching portions is not limited thereto. The mounting portion **140B** can comprise any number of attaching portions depending on the number of maintenance means to be mounted.

The mounting body **141B** has an axis **C,** and the mounting body **141B** can be rotated around the axis **C** by a rotation mechanism (not shown) (in the direction of the curved arrow shown in Figure **10B**). For example, the mounting body **141B** can be rotated around the axis **C** so that a means for maintenance to be performed among the plurality of maintenance means **120** attached to the side face of the mounting body **141B** approaches a site requiring maintenance on the blade **11.** The attaching portions **142B, 143B, 144B, 145B,** and **146B** can be each configured to extend in the axis **C** direction, in other words, toward the blade **11.** This enables a means for maintenance to be performed to approach the blade **11.**

The mounting body **141B** can be translated by a translation mechanism (not shown). For example, the mounting body **141B** can be moved up and down, from side to side, and back and forward in the direction of the straight-line arrow shown in Figure **10B** by a translation mechanism, and can be positioned relative to the leading edge (L.E) of the blade **11.**

A rotation mechanism, a translation mechanism, and extension of an attaching portion enable a means for maintenance to be performed to approach the blade **11** and to be positioned in the right place. Further, the position of the maintenance means can be also controlled by the rotation mechanism and/or the translation mechanism during the performance of the maintenance. Since the same rotation mechanism and translation mechanism can be used for a plurality of maintenance means to control the position of each of the plurality of maintenance means, it is not necessary to provide a mechanism which controls a position to each of the plurality of maintenance means. This further promotes reduction in size of the maintenance device **100'.**

### (Slide form)

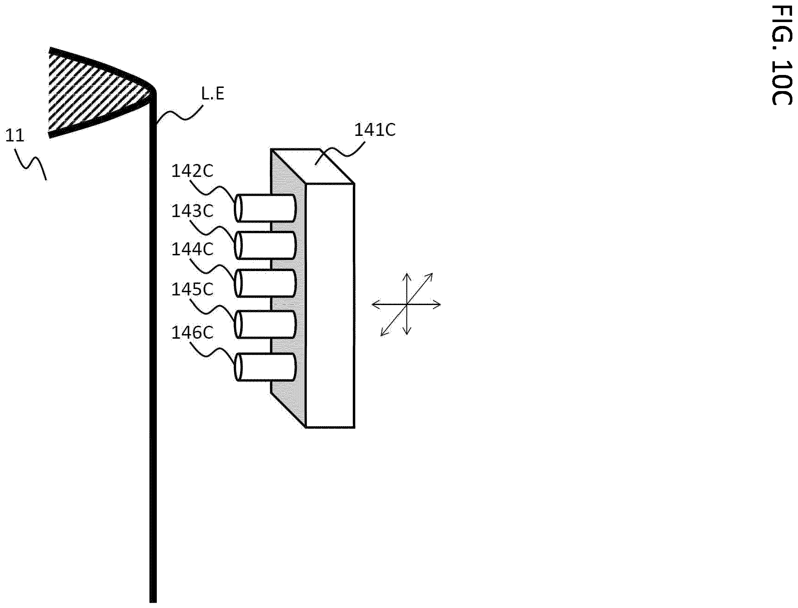

Figure **10C** shows one example of a mounting portion **140**C in one embodiment. In Figure **10C****,** illustration of the plurality of maintenance means **120** mounted on the mounting portion **140C** is omitted. Figure **10C** depicts a perspective view and a cross section of the blade **11.**

The mounting portion **140C** comprises a mounting body **141C** and attaching portions **142C, 143C, 144C, 145C,** and **146C.** To each attaching portion, respective one of the plurality of maintenance means can be attached. The mounting body **141C** has a three-dimensional shape having a top face that can face the blade, a bottom face opposite to the top face, and a side face between the top face and the bottom face, wherein the plurality of maintenance means **120** are configured to be attached to the top face facing the blade **11.** The plurality of attaching portions are juxtaposed in a direction in which the leading edge of the blade **11** extends, whereby the plurality of maintenance means are juxtaposed along the leading edge of the blade. Although Figure **10C** shows five attaching portions, the number of attaching portions is not limited thereto. The mounting portion **140C** can comprise any number of attaching portions depending on the number of maintenance means to be mounted.

The attaching portions **142C, 143C, 144C, 145C,** and **146C** can be each configured to extend toward the blade **11** in a direction approaching the blade **11** (the left direction in the figure). This enables a means for maintenance to be performed to approach a site requiring maintenance on the blade **11.**

The mounting body **141C** can be translated by a translation mechanism (not shown). For example, the mounting body **141C** can be moved up and down, from side to side, and back and forward in the direction of the straight-line arrow shown in Figure **10C** by a translation mechanism, and can be positioned relative to the leading edge (L.E) of the blade **11.**

Extension of an attaching portion and a translation mechanism enable a means for maintenance to be performed to approach the blade **11** and to be positioned in the right place. Further, the position of the maintenance means can be also controlled by extension of the attaching portion and the translation mechanism during the performance of the maintenance. Since the same translation mechanism can be used for a plurality of maintenance means to control the position of each of the plurality of maintenance means, it is not necessary to provide a mechanism which controls a position to each of the plurality of maintenance means. This further promotes reduction in size of the maintenance device **100'.**

### (Slide form 2)

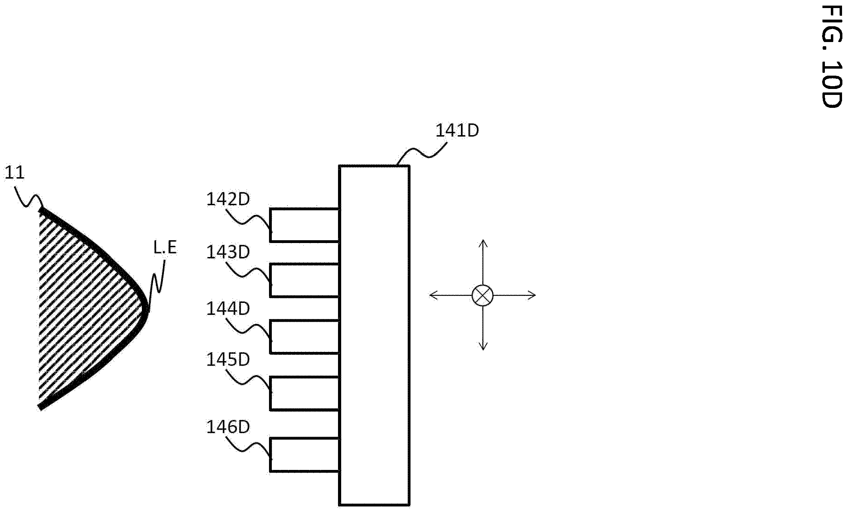

Figure **10D** shows one example of a mounting portion **140D** in one embodiment. In Figure **10D****,** illustration of the plurality of maintenance means **120** mounted on the mounting portion **140D** is omitted. Figure **10D** depicts a cross section of the blade **11.**

The mounting portion **140D** comprises a mounting body **141D** and attaching portions **142D, 143D, 144D, 145D,** and **146D.** To each attaching portion, respective one of the plurality of maintenance means can be attached. The mounting body **141D** has a three-dimensional shape having a top face that can face the blade, a bottom face opposite to the top face, and a side face between the top face and the bottom face, wherein the plurality of maintenance means **120** are configured to be attached to the top face facing the blade **11.** The plurality of attaching portions are juxtaposed vertically to a direction in which the leading edge of the blade **11** extends, whereby the plurality of maintenance means are juxtaposed vertically to the direction in which the leading edge of the blade **11** extends. Although Figure **10D** shows five attaching portions, the number of attaching portions is not limited thereto. The mounting portion **140D** can comprise any number of attaching portions depending on the number of maintenance means to be mounted.

The attaching portions **142D, 143D, 144D, 145D,** and **146D** can be each configured to extend toward the blade **11** in a direction approaching the blade **11** (the left direction in the figure). This enables a means for maintenance to be performed to approach a site requiring maintenance on the blade **11.**

The mounting body **141D** can be translated by a translation mechanism (not shown). For example, the mounting body **141D** can be moved up and down, from side to side, and back and forward in the direction of the straight-line arrow shown in Figure **10D** by a translation mechanism, and can be positioned relative to the leading edge (L.E) of the blade **11.**

Extension of an attaching portion and a translation mechanism enable a means for maintenance to be performed to approach the blade **11** and to be positioned in the right place. Further, the position of the maintenance means can be also controlled by extension of the attaching portion and the translation mechanism during the performance of the maintenance. Since the same translation mechanism can be used for a plurality of maintenance means to control the position of each of the plurality of maintenance means, it is not necessary to provide a mechanism which controls a position to each of the plurality of maintenance means. This further promotes reduction in size of the maintenance device **100'.**

### (Slide form 3)

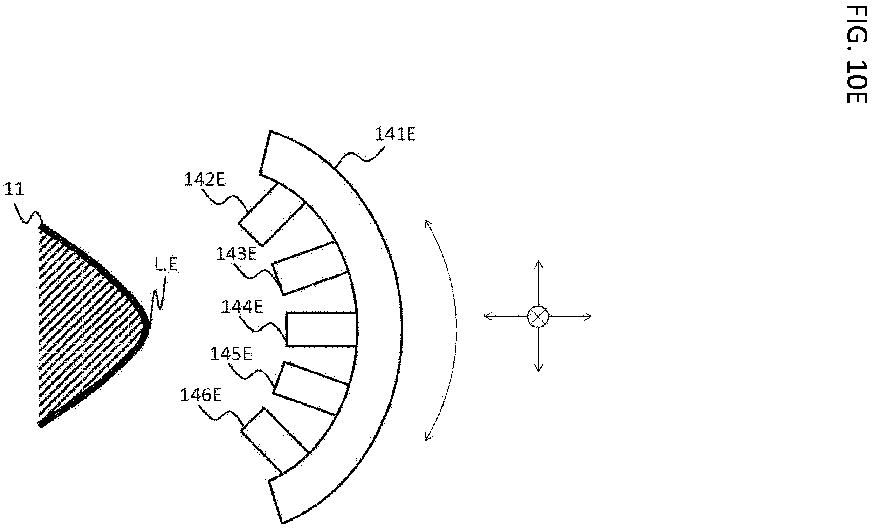

Figure **10E** shows one example of a mounting portion **140E** in one embodiment. In Figure **10E****,** illustration of the plurality of maintenance means **120** mounted on the mounting portion **140E** is omitted. Figure **10E** depicts a cross section of the blade **11.**

The mounting portion **140E** comprises a mounting body **141E** and attaching portions **142E, 143E, 144E, 145E,** and **146E.** To each attaching portion, respective one of the plurality of maintenance means can be attached. The mounting body **141E** has a curved body having a top face that can face the blade, a bottom face opposite to the top face, and a side face between the top face and the bottom face, wherein the plurality of maintenance means **120** are configured to be attached to the top face. The plurality of attaching portions are juxtaposed along the curved face of the curved body vertically to a direction in which the leading edge of the blade **11** extends, whereby the plurality of maintenance means are juxtaposed along the curved face of the blade. Although Figure **10E** shows five attaching portions, the number of attaching portions is not limited thereto. The mounting portion **140E** can comprise any number of attaching portions depending on the number of maintenance means to be mounted.

The attaching portions **142E, 143E, 144E, 145E,** and **146E** can be each configured to extend toward the blade **11** in a direction approaching the blade **11** (the left direction in the figure). This enables a means for maintenance to be performed to approach a site requiring maintenance on the blade **11.**

The mounting body **141E** can be pivoted around the blade **11** by a pivoting mechanism (not shown) (in the direction of the curved arrow shown in Figure **10E**). For example, the mounting body **141E** can be pivoted so that a means for maintenance to be performed among the plurality of maintenance means **120** attached to the top face of the mounting body **141E** approaches a site requiring maintenance on the blade **11.** The attaching portions **142E, 143E, 144E, 145E,** and **146E** can be each configured to extend vertically to the top face, in other words, toward the blade **11.** This enables a means for maintenance to be performed to approach a site requiring maintenance on the blade **11.**

The mounting body **141E** can be translated by a translation mechanism (not shown). For example, the mounting body **141E** can be moved up and down, from side to side, and back and forward in the direction of the straight-line arrow shown in Figure **10E** by a translation mechanism, and can be positioned relative to the leading edge (L.E) of the blade **11.**

A rotation mechanism, a translation mechanism, and extension of an attaching portion enable a means for maintenance to be performed to approach the blade **11** and to be positioned in the right place. Further, the position of the maintenance means can be also controlled by the rotation mechanism, the translation mechanism, and extension of the attaching portion during the performance of the maintenance. Since the same rotation mechanism and translation mechanism can be used for a plurality of maintenance means to control the position of each of the plurality of maintenance means, it is not necessary to provide a mechanism which controls a position to each of the plurality of maintenance means. This further promotes reduction in size of the maintenance device **100'.**

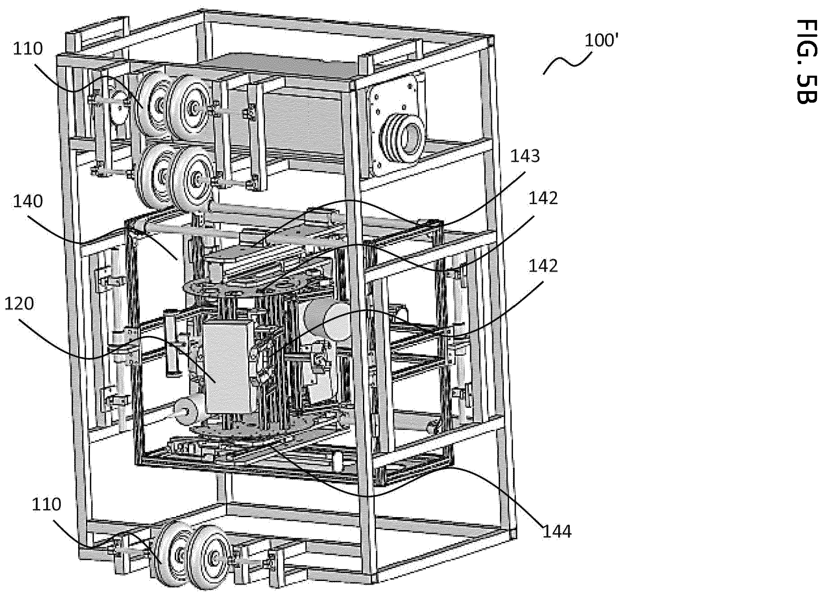

Figure **5B** shows an example of implementation of the maintenance device **100'.**

The maintenance device **100'** comprises wheels as the moving means **110.** The wheels are provided on the front side and the rear side of the maintenance device **100'.** The wheels enable the maintenance device **100'** to move on a blade of a wind turbine.

As the mounting portion **140,** the maintenance device **100'** comprises a mounting portion in the revolver form described above while referring to Figure **10A****.** The mounting portion **140** comprises a mounting body **141,** an attaching portion **142,** a rotation mechanism **143,** and a translation mechanism **144.**

The mounting body **141** and the attaching portion **142** on the mounting body **141** are rotated around the axis by the rotation mechanism **143,** which consequently also rotates the plurality of mechanism means **120.** As a result, at least one maintenance means (maintenance performing means **150**) of the plurality of maintenance means **120** can be directed to the blade of the wind turbine so that said means can perform maintenance.

The mounting body **141** and the attaching portion **142** on the mounting body **141** are moved up and down, from side to side, and back and forward by the translation mechanism **144,** which consequently also moves the plurality of mechanism means **120** up and down, from side to side, and back and forward. As a result, the position of at least one maintenance means (maintenance performing means **150**) of the plurality of maintenance means **120** relative to the blade of the wind turbine can be adjusted so that said means performs maintenance.

Although not shown in Figure **5B****,** the maintenance device **100'** can comprise a bumper for preventing damage to the blade when the maintenance device **100'** lands on the blade of the wind turbine. For example, a bumper can be made of a foamed body (e.g., styrene foam). For example, a bumper can also have a shape which enables the blade to guide when the maintenance device **100'** lands on the blade of the wind turbine. This can stabilize the maintenance device **100'** when it lands on the blade of the wind turbine.

Note that the above-described maintenance device **100'** may be used along with the rope holding device **200,** or the maintenance device **100'** may be used alone. For example, an approach for disposing the maintenance device **100'** on a blade of a wind turbine is not limited to those disclosed herein, but can be any other known approach or an approach which can be known in the future.

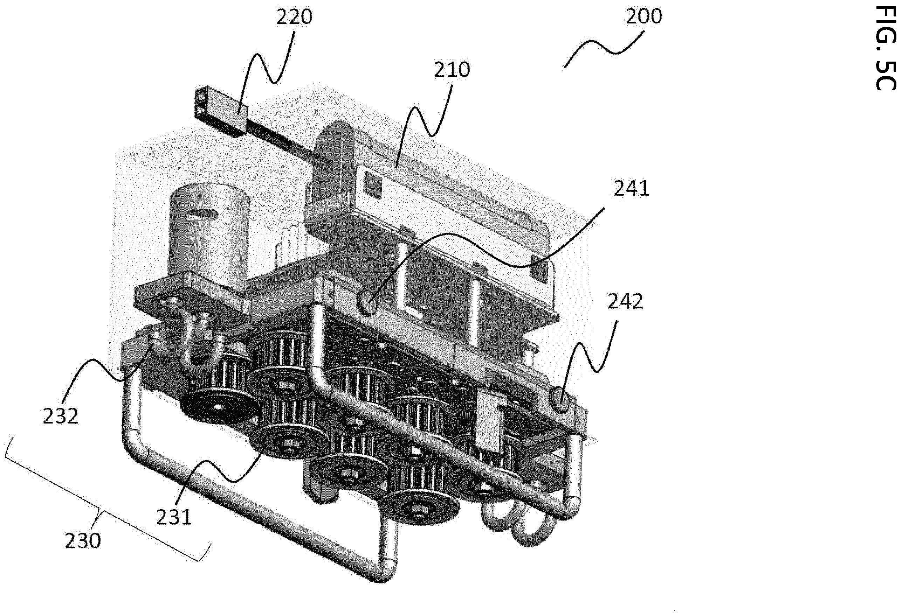

Figure **5C** shows one example of a configuration of the rope holding device **200.**

The rope holding device **200** comprises a controlling unit **210,** a communicating unit **220,** a rope connecting portion **230,** and a member **250.** In the example shown in Figure **5C****,** the member **250** is omitted. Instead, the first attaching portion **241** and the second attaching portion **242,** by which the member **250** is attached to the body of the rope holding device **200,** are shown.

The controlling unit **210** is configured to control the overall action of the rope holding device **200.** For example, the controlling unit **210** can control the components of the rope holding device **200** in accordance with a control signal received by the communicating unit **220.** For example, it is possible to drive the rope connecting portion **230** and move along a connected rope in accordance with a control signal received by the communicating unit **220.** For example, it is possible to transition the member **250** from a first state where an aperture is formed to a second state where the aperture is opened in accordance with a control signal received by the communicating unit **220.** Specifically, it is possible to release the member **250** from the second attaching portion **242** by using a releasing mechanism that the rope holding device **200** can comprise.

For example, the controlling unit **210** can be implemented by any controlling means such as one or more processors.

Although it was explained that each component of the rope holding device **200** is controlled in accordance with a signal from the outside of the rope holding device **200,** the present invention is not limited thereto. For example, a program for realizing a series of actions of each component of the rope holding device **200** may be stored in a memory that the rope holding device **200** can comprise. The controlling unit **210** can read out and execute the program to cause the rope holding device **200** to function as an autonomous device.

The communicating unit **220** can receive a signal from the outside of the rope holding device **200.** In addition, the communicating unit **220** may be also configured to transmit a signal to the outside of the rope holding device **200.** The communicating unit **220** may receive a signal from the outside of the rope holding device **200** wirelessly or by wire. The communicating unit **220** may transmit a signal to the outside of the rope holding device **200** wirelessly or by wire. For example, the communicating unit **220** can receive a control signal for controlling each component of the rope holding device **200** from the outside of the rope holding device **200** (e.g., a terminal for operation used by an operator). For example, the communicating unit **220** can be implemented by any communicating means such as an antenna.

The rope connecting portion **230** comprises an engaging portion **231** which engages with a rope and a guiding portion **232** which guides the rope.

As shown in Figure **5C****,** the engaging portion **231** can comprise a plurality of engaging rollers and a driving portion which drives the plurality of engaging rollers. Force for delivering a rope forward or backward can be exerted on the rope by driving the plurality of engaging rollers in a state where the rope is held between the plurality of engaging rollers. This enables the rope holding device **200** to move along the rope. The engaging portion **231** can be implemented by any other mechanism as long as it can achieve a similar function.

The guiding portion **232** is any mechanism which guides a rope to the engaging portion **231.** In Figure **5C****,** the guiding portion is shown as a hook. The presence of the guiding portion **232** enables the rope holding device **200** to be kept connected to the rope even when the engaging portion **231** releases engagement with the rope. The guiding portion **232** can be implemented by any other mechanism as long as it can achieve a similar function.

The member **250** can be any member which is able to form an aperture along with the body of the rope holding device **200** by being attached to the first attaching portion **241** and the second attaching portion **242.** Any material can form the member **250.** For example, the member **250** may be formed of a hard material or may be formed of a soft material. Preferably, the member **250** can be formed of a durable rope, for example, a climbing rope for climbing. The material of the member **250** is preferably hard enough to retain the shape of the member **250.** This enables the member **250** to restrain a rope without slacking to interfere with the rope.

Although it was explained in the above-described example that release of the member **250** from the second attaching portion **242** enables said member to transition from the first state where the member forms an aperture along with the body of the rope holding device **200** to the second state where the aperture is opened, the manner in which the member **250** transitions is not limited thereto. The member **250** can transition from the first state to the second state in any other manner. For example, the member **250** can be configured to be dividable into at least two portions. The member **250** is divided into at least two portions, whereby said member can transition from the first state to the second state.

In this manner, the rope holding device **200** can have a minimum configuration which can realize a function for moving on a rope and releasably restraining the rope. This can reduce the weight of the rope holding device **200.** For example, the rope holding device **200** may have a weight of about 2 kg or less, may have a weight of about 1.5 kg or less, or may have a weight of about 1 kg or less. It is preferable to reduce the weight of the rope holding device **200** as much as possible by mounting bare minimum components.

Although it was explained that the rope holding device **200** has a configuration for moving on a rope in the above-described example, the means for the rope holding device **200** to move onto a blade is not limited thereto. The rope holding device **200** can be configured to be able to move onto a blade by using any other moving means. For example, the rope holding device **200** can be configured to comprise a flying function and can move onto a blade by using the flying function. For example, the rope holding device **200** can be configured to be connected to a flying device having a flying function (e.g., drone) and can move onto a blade by the flying device connected to the rope holding device **200.** For example, the rope holding device **200** can be configured to be connected to another device having an expandable and contractable structure (e.g., ladder truck) and can move onto a blade by the another device connected to the rope holding device **200.** In this manner, the rope holding device **200** is able to move onto a blade of a wind turbine without using a rope placed on the wind turbine. Since the rope holding device **200** has a bare minimum configuration and has a reduced weight, it is easy to transfer said device by a flying device or another device. When moving onto a blade of a wind turbine without using a rope placed on the wind turbine, the rope holding device **200** may be configured to hold a different rope from the rope placed on the wind turbine on the blade of the wind turbine, or may be configured to hold the rope placed on the wind turbine on the blade of the wind turbine.

For example, the weight of the rope holding device **200** is preferably less than at least one rope stretched over a blade. For example, since at least one rope stretched over a blade has a weight of about 5 kg, the rope holding device **200** preferably has a weight of less than about 5 kg, for example, a weight of about 2 kg.

The weight of the rope holding device **200** is less than the weight of the maintenance device **100** (or maintenance device **100**'). For example, the ratio of the weight of the rope holding device **200** to the weight of the maintenance device **100** (or maintenance device **100**') can be about 1:10, about 1:20, about 1:50, about 1:100 or the like. Preferably, the ratio of the weight of the rope holding device **200** to the weight of the maintenance device **100** (or maintenance device **100**') can be about 1:20 to about 1:50.

For example, the rope holding device **200** preferably has a small size. For example, the rope holding device **200** can have a volume of less than about 30000 cm³, a volume of less than about 25000 cm³, a volume of less than about 20000 cm³, a volume of less than about 15000 cm³, a volume of less than about 10000 cm³, a volume of less than about 5000 cm³, a volume of less than about 3000 cm³, or a volume of less than about 1000 cm³. Preferably, the rope holding device **200** can have a volume of about 2000 cm³ to about 4000 cm³.

For example, the ratio of the size (volume) of the rope holding device **200** to the size (volume) of the maintenance device **100** (or maintenance device **100**') can be about 1:10, about 1:20, about 1:50, about 1:60, about 1:100, about 1:150, about 1:200, about 1:220 or the like. Preferably, the ratio of the size of the rope holding device **200** to the size of the maintenance device **100** (or maintenance device **100**') can be about 1:60 to about 1:220.

### 3. Method for performing maintenance on a blade of a wind turbine

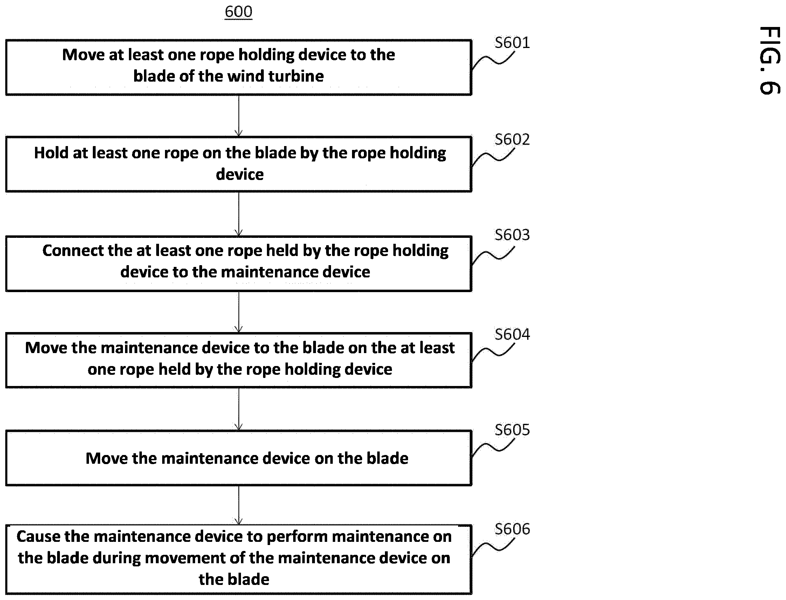

Figure **6** shows one example of a procedure (procedure **600**) of a method for performing maintenance on a blade of a wind turbine by using the system of the present invention. While an example utilizing the maintenance device **100** is explained below, it is understood that the maintenance device **100'** is also utilized in the same manner.

Step **S601** is a step of moving the rope holding device **200** to the blade **11** of the wind turbine **10.** In this case, the rope holding device **200** is moved to the blade **11** in any manner. The movement may be active movement by the rope holding device **200** or may be passive movement by the rope holding device **200.**

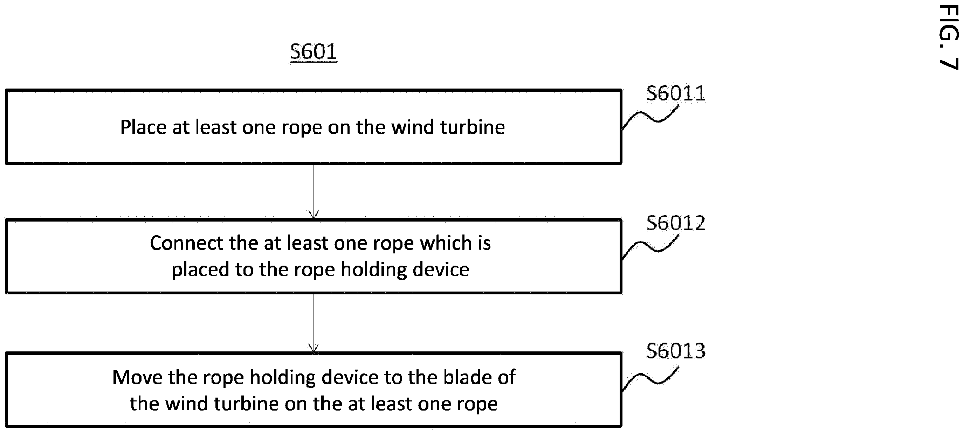

In one embodiment, the rope holding device **200** can be moved to the blade **11** of the wind turbine on a rope placed on the wind turbine. In this embodiment, for example, steps **S6011** to **S6013** shown in Figure **7** can be performed.

Step **S6011** is a step of placing at least one rope on the wind turbine. For example, while the blade **11** is positioned so that the blade **11** extends vertically downwards as shown in Figure **1A****,** at least one rope **20** is fixed to the nacelle **14** of the wind turbine **10** and extends from the nacelle **14** of the wind turbine **10** to the ground. At least one rope to be placed does not need to be applied with tension to be pulled. For example, said rope may be configured to extend from the nacelle **14** to the ground only by the gravity. Furthermore, at least one rope is placed on the wind turbine in any manner. At least one rope can be placed in any position on the wind turbine by any approach.

Step **S6011** may be manually performed by a worker, or may be automatically performed by a robot. When the step is automatically performed by a robot, at least one rope may be placed on the wind turbine by, for example, a device that is able to fly such as a drone.

Step **S6012** is a step of connecting the at least one rope placed at step **S6011** to the rope holding device **200.** For example, the rope holding device **200** engages with the at least one rope by the engaging portion **231,** whereby the at least one rope is connected to the rope holding device **200.** When at least two ropes are utilized, the rope holding device **200** can engage with a first rope group comprising at least one rope by the engaging portion **231** and restrain a second rope group comprising at least one rope by the body and the member **250.**

For example, step **S6012** can be manually performed by a worker.

Step **S6013** is a step of moving the rope holding device **200** to the blade **11** of the wind turbine **10** on the at least one rope. For example, the rope holding device **200** is moved to the blade **11** on the at least one rope as shown in Figures **1B** to **1D****.**

Step **S6013** involves a step of controlling the spatial position of the rope holding device **200** after the rope holding device **200** moves on the at least one rope and reaches approximately the same height as the blade **11** or during movement of the rope holding device **200** on the at least one rope. The step of controlling the spatial position can be performed by pulling the at least one rope extending from the rope holding device **200.** The step of controlling the spatial position may be manually performed by a worker, or may be automatically performed by a robot.

Although the rope holding device **200** was moved to the blade **11** along the at least one rope extending from the wind turbine in the above-described example, the manner of movement of the rope holding device **200** is not limited thereto. For example, the rope holding device **200** may be lifted to the nacelle of the wind turbine in advance and lowered to the blade along the rope from the nacelle of the wind turbine, and the rope holding device **200** may be disposed on the blade.

In another embodiment, for example, the rope holding device **200** can be moved onto the blade by a flying function that the rope holding device **200** can comprise. In other embodiments, for example, a flying device having a flying function (e.g., drone) is connected to the rope holding device **200** and the rope holding device **200** can be moved onto the blade by the flying device. In other embodiments, for example, another device having an expandable and contractable structure (e.g., ladder truck) is connected to the rope holding device **200** and the rope holding device **200** can be moved onto the blade by the another device having an expandable and contractable structure. In this manner, it is possible to move the rope holding device **200** onto the blade of the wind turbine without using a rope placed on the wind turbine. When moving onto the blade of the wind turbine without using a rope placed on the wind turbine, the rope placed on the wind turbine may be connected to the rope holding device **200,** the rope placed on the wind turbine is not connected and a different rope from the rope placed on the wind turbine may be connected instead, or a rope does not need to be connected in the first place.

Step **S602** is a step of holding at least one rope on the blade **11** by the rope holding device **200.** The at least one rope to be held on the blade **11** may be the at least one rope connected to the rope holding device **200** at step **S601** or may be at least one rope different from said rope.

For example, as shown in Figures **1B** to **1D****,** as a result of moving the rope holding device **200** to the blade **11** on the at least one rope and disposing the rope holding device **200** on the blade **11,** the at least one rope connected to the rope holding device **200** is held on the blade **11.** In other words, the at least one rope connected to the rope holding device **200** would be held on the blade **11** by the rope holding device **200.** When at least two ropes are held on the blade, a first rope group comprising at least one rope would extend from the first side of the blade and a second rope group comprising at least one rope would extend from the second side of the blade as the at least two ropes held on the blade as shown in Figure **3****.**

For example, as a result of moving the rope holding device **200** to which at least one rope is connected onto the blade of the wind turbine without using the rope placed on the wind turbine and disposing the rope holding device **200** on the blade **11,** the at least one rope connected to the rope holding device **200** is held on the blade **11.** In other words, the at least one rope connected to the rope holding device **200** would be held on the blade **11** by the rope holding device **200.** When at least two ropes are held on the blade, a first rope group comprising at least one rope would extend from the first side of the blade and a second rope group comprising at least one rope would extend from the second side of the blade as the at least two ropes held on the blade as shown in Figure **3****.**

For example, at least one rope may be held on the blade **11** by the rope holding device **200** by moving the rope holding device **200** to the blade **11** and disposing the rope holding device **200** on the blade **11,** followed by carrying the rope to the rope holding device **200** by another device (e.g., drone) and connecting (e.g., hooking) the rope to the rope holding device **200.**

Step **S603** is a step of connecting the at least one rope held on the blade by the rope holding device **200** at step **S602** to the maintenance device **100.** For example, the at least one rope is connected to the maintenance device **100** by connecting the at least one rope to a winch of the maintenance device **100.**

For example, step **S603** can be manually performed by a worker.

At step **S604,** the maintenance device **100** is moved to the blade on the at least one rope held by the rope holding device **200** in a state where the rope holding device **200** holds the at least one rope on the blade. For example, as shown in Figures **1E** to **1F****,** the maintenance device **100** is moved to the blade **11.** The maintenance device **100** can move to the blade along the at least one rope held by the rope holding device **200.**

After the maintenance device **100** moves to the blade, the rope holding device **200** may be configured to release the restrained rope as shown in Figure **4****.** Furthermore, the rope holding device **200** may release the engagement with the rope with which the rope holding device engages. This enables the rope holding device **200** to move along with the maintenance device **100** without interfering with the movement of the maintenance device **100.**

Step **S605** is a step of moving the maintenance device **100** on the blade after the maintenance device **100** moves to the blade. In this case, the maintenance device **100** is moved on the blade **11** in any manner.

For example, the maintenance device **100** can be moved on the blade **11** along the at least one rope **20** placed at step **S6011** as shown in Figure **1G****.** In another example, the maintenance device **100** can be moved on the blade **11** by utilizing a driving wheel that the maintenance device **100** can comprise. In another example, the maintenance device **100** can be moved on the blade **11** by utilizing a different rope from the at least one rope with which the maintenance device **100** moved onto the blade. As a specific example, after the maintenance device **100** is moved to the blade **11** on at least one rope held by the rope holding device **200,** which is different from the rope placed on the wind turbine, in a state where the rope placed on the wind turbine is connected to the maintenance device **100** in advance, the maintenance device **100** can be moved on the blade **11** by utilizing the rope placed on the wind turbine.

In doing so, the maintenance device **100** can fixedly attach to the blade **11** via any attaching means. This enables the maintenance device **100** to move on the leading edge of the blade **11** without floating up. Further, since the leading edge of the blade **11** is inclined by about 5 degrees relative to the vertical direction, the gravity exerted on the maintenance device **100** acts so as to push the maintenance device **100** against the leading edge of the blade **11,** thereby preventing the maintenance device **100** from floating up. For example, step **S605** may be performed in response to transmission of a control signal to the maintenance device **100** by a worker using a terminal for operation, or may be performed in response to transmission of a control signal to the maintenance device **100** by a robot. Alternatively, the maintenance device **100** may be configured to autonomously perform step **S605.**

The step of moving the maintenance device **100** at step **S605** may comprise: moving the maintenance device **100** on the blade in a first direction of the directions in which the at least one rope extends; and moving the maintenance device **100** on the blade in a second direction of the directions in which the at least one rope extends. For example, the first direction is a direction from the tip of the blade to the root of the blade while the second direction is a direction from the root of the blade to the tip of the blade. The maintenance device **100** can move in the first direction or the second direction by controlling the winding or delivery by a winch.

Step **S606** is a step of causing the maintenance device **100** to perform maintenance on the blade during movement of the maintenance device **100** on the blade. For example, as shown in Figure **1G****,** the maintenance device **100** is caused to perform maintenance on the blade **11** during movement of the maintenance device **100** on the leading edge of the blade **11.** In doing so, the maintenance device **100** fixedly attaches to the blade **11** via any attaching means. This enables the maintenance device **100** to push a maintenance means such as a washing means or polishing means against the leading edge of the blade **11** without floating up. Further, since the leading edge of the blade **11** is inclined by about 5 degrees relative to the vertical direction, the gravity exerted on the maintenance device **100** acts so as to push the maintenance device **100** against the leading edge of the blade **11,** thereby preventing the maintenance device **100** from floating up. For example, step **S606** may be performed in response to transmission of a control signal to the maintenance device **100** by a worker using a terminal for operation, or may be performed in response to transmission of a control signal to the maintenance device **100** by a robot. Alternatively, the maintenance device **100** may be configured to autonomously perform step **S606.**

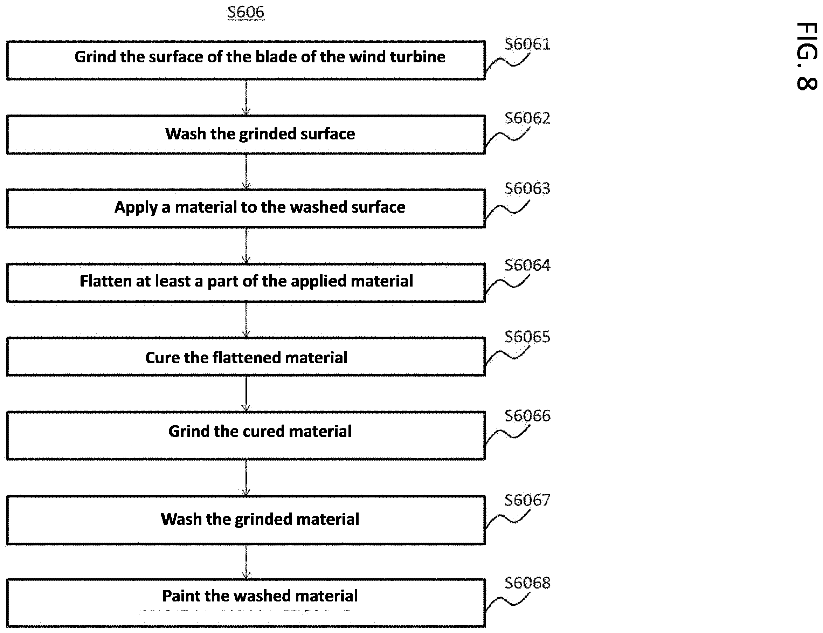

Figure **8** shows one example of a maintenance method of when step **S606** is performed by the maintenance device **100'.** For example, the method shown in Figure **8** is performed for a site requiring maintenance on a blade. For example, the maintenance device **100'** moves on the blade, and when the maintenance device reaches the site requiring maintenance, the maintenance device can perform each step shown in Figure **8****.** Each of the plurality of maintenance means **120** and the mounting portion **140** can be controlled by the controlling means **130.**

First, the controlling means **130** recognizes that grinding should be performed at step **S6061** and selects the grinding means **121** among the plurality of maintenance means **120.** The controlling means **130** controls the rotation mechanism of the mounting portion **140** to direct the grinding means **121** to the site requiring maintenance on the blade so that grinding by the selected grinding means **121** can be performed.

At step **S6061,** the grinding means **121** grinds the surface of the site requiring maintenance on the blade of the wind turbine. For example, the grinding means **121** can perform grinding by using a leutor. The leutor can grind the surface of the site requiring maintenance while the position of the leutor relative to the site requiring maintenance on the blade is being adjusted by the translation mechanism of the mounting portion **140.** In doing so, the rotational axis of the grinding body of the leutor is preferably perpendicular to the surface of the site requiring maintenance. The grinding body of the leutor is pushed against the surface of the site requiring maintenance and moved along the surface of the site requiring maintenance in a state where the rotational axis of the grinding body of the leutor is perpendicular to the surface of the site requiring maintenance, whereby a desired range on the surface of the site requiring maintenance is grinded.

When grinding at step **S6061** is complete, the controlling means **130** recognizes that washing should be performed next and selects the washing means **122** among the plurality of maintenance means **120.** The controlling means **130** controls the rotation mechanism of the mounting portion **140** to direct the washing means **122** to the site requiring maintenance on the blade so that washing by the selected washing means **122** can be performed.

At step **S6062,** the washing means **122** washes the surface grinded at step **S6061.** For example, the washing means **122** can wipe off dirt by using washing liquid and rag.

When washing at step **S6062** is complete, the controlling means **130** recognizes that application of a material should be performed next and selects the applying means **123** among the plurality of maintenance means **120.** The controlling means **130** controls the rotation mechanism of the mounting portion **140** to direct the applying means **123** to the site requiring maintenance on the blade so that application of a material by the selected applying means **123** can be performed.

At step **S6063,** the applying means **123** applies a material to the surface washed at step **S6062.** In this case, the material can be putty for filling the portion which is hollow by grinding. For example, the applying means **123** can apply putty by using a caulking gun.

When application of the material at step **S6063** is complete, the controlling means **130** recognizes that flattening of the material should be performed next and selects the flattening means **124** among the plurality of maintenance means **120.** The controlling means **130** controls the rotation mechanism of the mounting portion **140** to direct the flattening means **124** to the site requiring maintenance on the blade so that flattening of the material by the selected flattening means **124** can be performed.

At step **S6064,** the flattening means **124** flattens the material applied at step **S6063.** For example, the flattening means **124** can flatten the applied material (putty) by using a spatula as shown in Figure **8****.** For example, flattening by a spatula can be performed so that the material would not be flush with the surface of the blade (e.g., so that the material would rise from the surface of the blade).

When application of the material at step **S6064** is complete, the controlling means **130** can control the flattening means **124** to clean the putty adhered to the spatula. For example, cleaning can be performed by rubbing the spatula against a wire net.

When application of the material at step **S6064** is complete or cleaning of the spatula is complete, the controlling means **130** recognizes that curing of the material should be performed next and selects the curing means **125** among the plurality of maintenance means **120.** The controlling means **130** can control the rotation mechanism of the mounting portion **140** to direct the curing means **125** to the site requiring maintenance on the blade so that curing of the material by the selected curing means **125** can be performed.

At step **S6065,** the curing means **125** cures the material flattened at step **S6064.** For example, the curing means **125** can cure the material by irradiating the material with UV using a UV light source.

When curing of the material at step **S6065** is complete, the controlling means **130** recognizes that grinding of the cured material should be performed next and selects the grinding means **121** among the plurality of maintenance means **120.** Since the material after flattening of the material at step **S6064** is risen, grinding can be performed to make the material flush with the surface of the blade. The controlling means **130** can control the rotation mechanism of the mounting portion **140** to direct the grinding means **121** to the site requiring maintenance on the blade so that grinding of the material by the selected grinding means **121** can be performed.

At step **S6066,** the grinding means **121** grinds the material cured at step **S6065.** For example, the grinding means **121** can perform grinding by using a belt sander. The belt sander can grind the surface of the site requiring maintenance while the position of the belt sander relative to the site requiring maintenance on the blade is being adjusted by the translation mechanism of the mounting portion **140.** In doing so, the moving direction of the grinding surface of the belt sander is preferably inclined relative to a direction in which the leading edge of the blade extends. This can release the grinding force of the belt sander well and prevent excessive grinding by the belt sander. The grinding surface of the belt sander is pushed against the surface of the site requiring maintenance and moved along the surface of the site requiring maintenance in a state where the moving direction of the grinding surface of the belt sander is inclined relative to the direction in which the leading edge of the blade extends, whereby a desired range on the surface of the site requiring maintenance is grinded.

When grinding at step **S6066** is complete, the controlling means **130** recognizes that washing should be performed next and selects the washing means **122** among the plurality of maintenance means **120.** The controlling means **130** controls the rotation mechanism of the mounting portion **140** to direct the washing means **122** to the site requiring maintenance on the blade so that washing by the selected washing means **122** can be performed.

At step **S6067,** the washing means **122** washes the material grinded at step **S6066.** For example, the washing means **122** can wipe off dirt by using washing liquid and rag.

When washing at step **S6067** is complete, the controlling means **130** recognizes that application of paint should be performed next and selects the applying means **123** among the plurality of maintenance means **120.** The controlling means **130** controls the rotation mechanism of the mounting portion **140** to direct the applying means **123** to the site requiring maintenance on the blade so that application of paint by the selected applying means **123** can be performed.

At step **S6068,** the applying means **123** applies paint to the material washed at step **S6067.** For example, the applying means **123** can apply paint by using a spraying device that is able to spray paint or a paint roller.

In this manner, the surface of the site requiring maintenance on the blade of the wind turbine can be repaired as step **S606.**

As described above, each step of the method for performing maintenance on a blade of a wind turbine may be initiatively performed by a worker, or may be automatically performed by a robot. When each step is performed by a robot, a worker does not need to be in a work site, which enables maintenance on a blade of a wind turbine to be safely performed.

### 4. Maintenance on a blade of a wind turbine (second aspect)

The second aspect of the present invention is explained hereinafter.

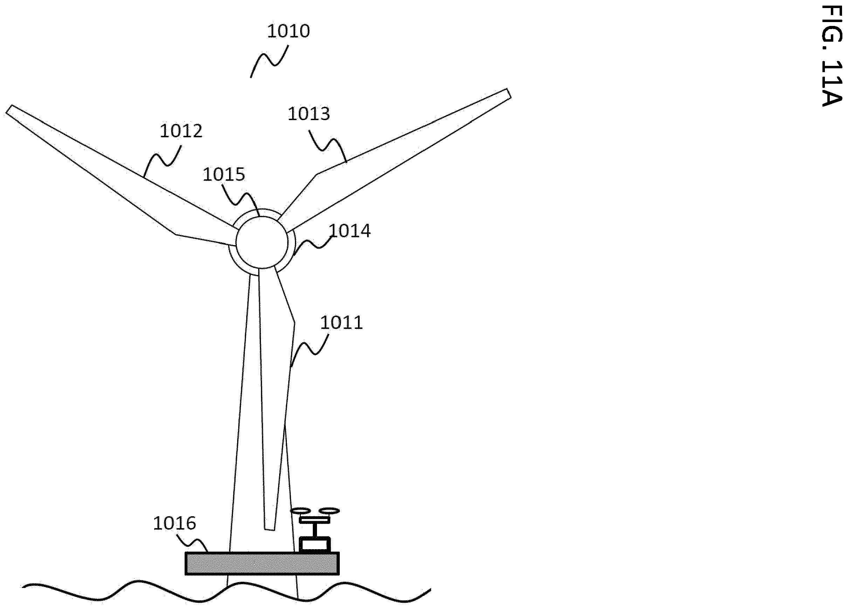

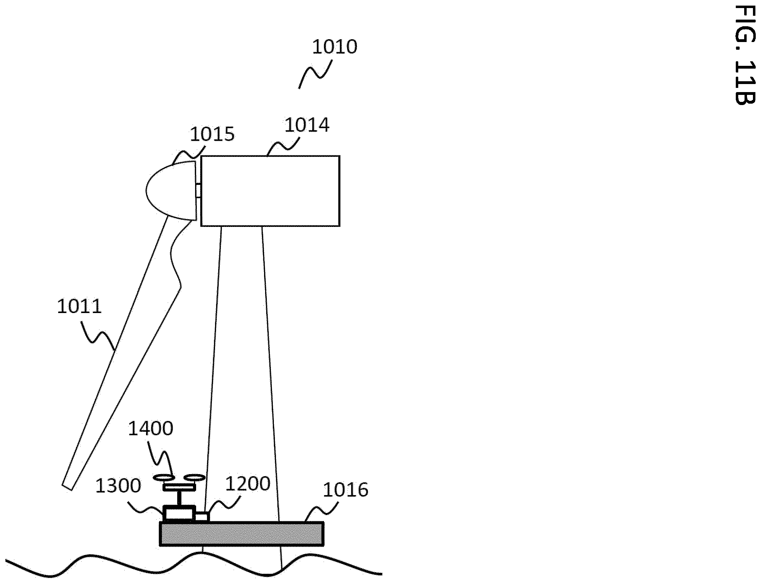

Referring to Figures **11A** to **11R****,** a procedure of performing maintenance on a blade of a wind turbine by using the system of the present invention is explained. Figure **11A** shows the front of a wind turbine **1010** while Figures **11B** to **11R** show the right side view of the wind turbine **1010.** Figures **11B** to **11R** show only a blade **1011** that is the subject of maintenance and omits the other two blades **1012** and **1013.** The wind turbine shown in Figure **11A** is a wind turbine which rotates clockwise on the drawings, in which a linear edge of each blade is a leading edge (front edge).

The wind turbine **1010** comprises blades **1011, 1012** and **1013,** a nacelle **1014,** and a hub **1015.** The nacelle **1014** is a case housing a generator, a gear box or the like. The hub **1015** is a member which rotatably couples the blades **1011, 1012** and **1013** and the nacelle **1014.** The wind turbine **1010** shown in Figures **11A** to **11R** is a wind turbine built on the sea. The wind turbine **1010** further comprises a deck **1016.** Workers, facilities for working and the like can use the deck **1016** as a scaffold on the sea.

The system of the present invention comprises a maintenance device **1100,** a rope holding device **1200,** and an attaching device **1300.** The system of the present invention can also comprise a moving device **1400.** The maintenance device **1100** is a device which performs maintenance on a blade. The rope holding device **1200** is a device which holds a rope extending from the attaching device **1300** on the blade. The attaching device **1300** is a device which attaches to the blade. The rope is fixed to the attaching device **1300.** The attaching device **1300** attaches to the blade, whereby the rope would be fixed on the blade via the attaching device **1300.** The moving device **1400** is a device which moves the attaching device **1300** and the rope holding device **1200** from the deck to the blade. The moving device **1400** can be, but is not limited to, a moving device which is able to fly such as a drone. The moving device can be any means as long as it can move the attaching device **1300** and the rope holding device **1200** to the blade.

Figures **11A** and **11B** show the state of an initial stage before attaching the system of the present invention to the blade **1011** of the wind turbine **1010.** Figure **11B** shows the right side view of Figure **11A****.**

Maintenance on the blade **1011** is performed while positioning the blade **1011** so that the blade **1011** extends vertically downwards. Since this is the same state as the state of a blade in a conventional method in which a worker moves on a blade along a rope stretched over the blade and performs maintenance, this state is readily accepted in existing work sites. When the blade **1011** is positioned to extend vertically downwards, the leading edge is inclined relative to the vertical direction as shown in Figure **11B****.** The inclination angle can be about 5 degrees (about 1 degree to about 10 degrees in some cases). Figures **11B** to **11R** exaggeratedly depict the angle.

In a preparation stage before attaching the system of the present invention to the blade **1011** of the wind turbine **1010,** each element of the system is prepared on the deck **1016.** The example shown in Figure **11B** shows a state where the rope holding device **1200** and the attaching device **1300** are prepared on the deck **1016,** and the moving device **1400** is coupled to the attaching device **1300** to which the rope holding device **1200** is attached. Although Figure **11B** omits the maintenance device **1100,** the maintenance device **1100** can also be prepared on the deck **1016.**

In this case, the rope holding device **1200** can be coupled to the attaching device **1300** by any means as long as the rope holding device **1200** is separatable from the attaching device **1300.** For example, the rope holding device **1200** may be coupled to the attaching device **1300** by mechanical force, may be coupled to the attaching device **1300** by magnetic force, may be coupled to the attaching device **1300** by electric power, or may be coupled to the attaching device **1300** by pressure or suction force.

Further, the moving device **1400** can be coupled to the attaching device **1300** by any means as long as the moving device **1400** is separatable from the attaching device **1300.** For example, the moving device **1400** may be coupled to the attaching device **1300** by mechanical force, may be coupled to the attaching device **1300** by magnetic force, may be coupled to the attaching device **1300** by electric power, or may be coupled to the attaching device **1300** by pressure or suction force.

At least one nylon string which can be used at a stage of fixing a part of at least one rope described below can pass inside the attaching device **1300** and the rope holding device **1200.** For example, the nylon string can be removably fixed to the attaching device **1300** by passing through an eye bolt on the attaching device **1300** and winding around the eye bolt and extending. Both ends of the nylon string passing through the attaching device **1300** and the rope holding device **1200** are held on the deck **1016** by, for example, a worker. That is, the at least one nylon string would extend from one end on the deck **1016** to the other end on the deck **1016** after passing through the attaching device **1300** and the rope holding device **1200.**

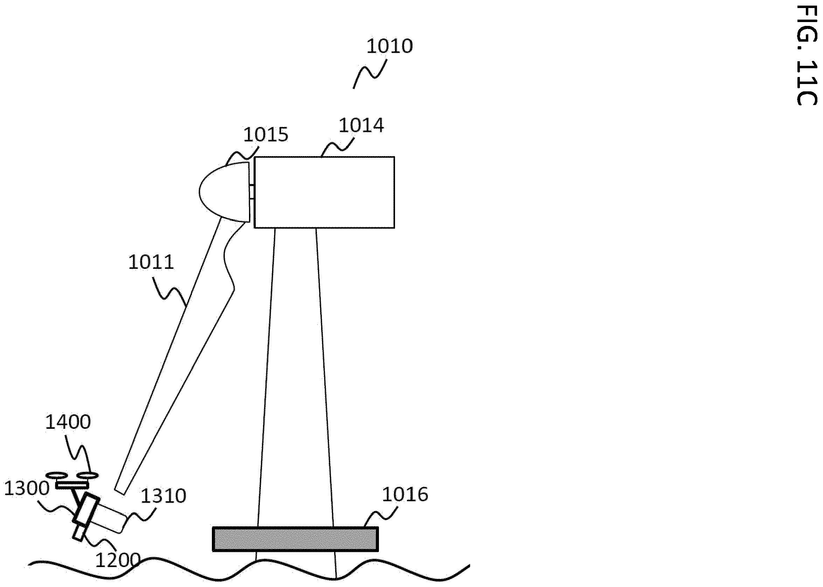

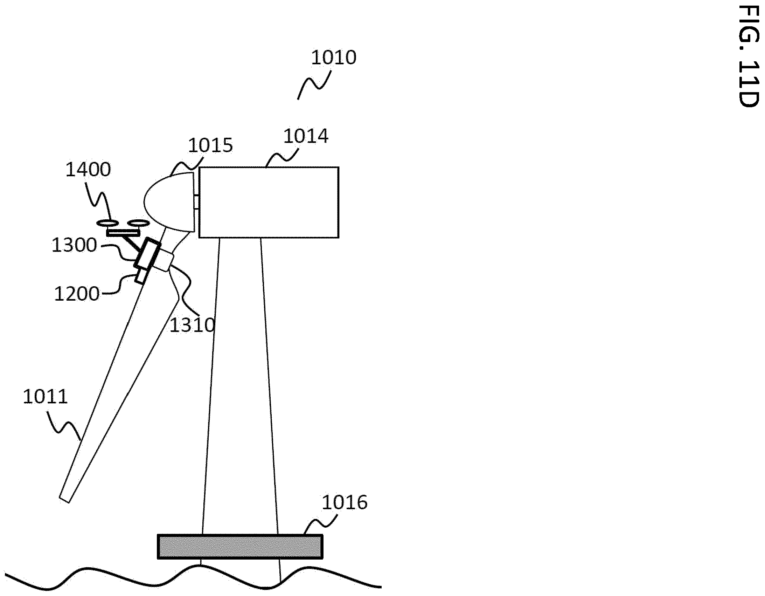

Figures **11C** and **11D** show the state of an attaching stage of attaching the attaching device **1300** to the blade **1011** of the wind turbine **1010.**

Figure **11C** shows the state where the moving device **1400** carries the attaching device **1300** along with the rope holding device **1200.** The attaching device **1300** comprises an attaching mechanism **1310** for attaching the attaching device **1300** to the blade **1011.**

The attaching mechanism **1310** can be any mechanism as long as it enables the attaching device **1300** to attach to the blade **1011.** For example, the attaching mechanism **1310** may be a mechanism which attaches the attaching device **1300** to the blade **1011** by mechanical force, may be a mechanism which attaches the attaching device **1300** to the blade **1011** by magnetic force, may be a mechanism which attaches the attaching device **1300** to the blade **1011** by electric power, or may be a mechanism which attaches the attaching device **1300** to the blade **1011** by pressure or suction force. Preferably, the attaching mechanism **1310** can be a mechanism which attaches the attaching device **1300** to the blade **1011** by mechanical force.

In one example, the attaching mechanism **1310** can be a band or a belt which is able to tighten.

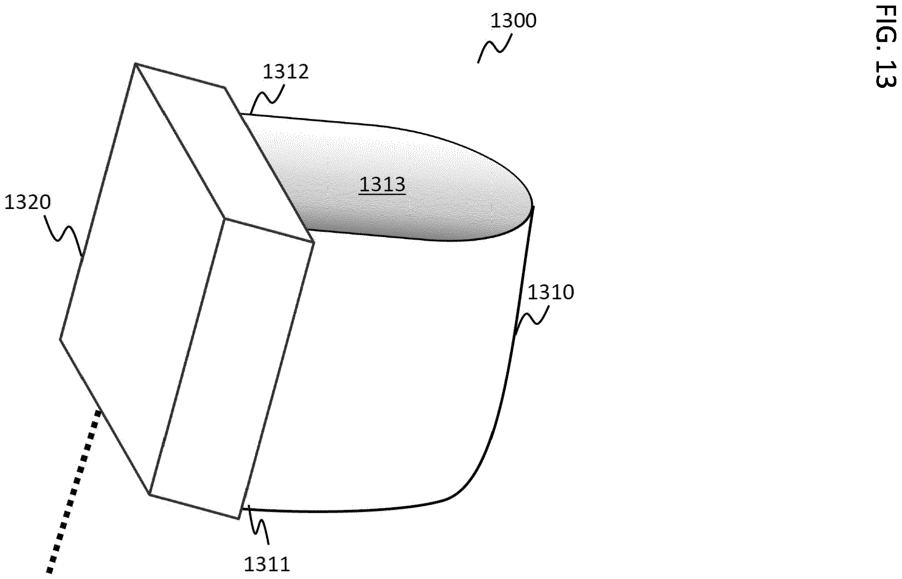

Figure **13** schematically shows the configuration of the attaching device **1300** in this example. The attaching device **1300** comprises an attaching mechanism **1310** and a body **1320.** The attaching mechanism **1310,** which is a band or a belt, has a first end portion **1311** fixed to the body **1320** and a second end portion **1312** coupled to the body **1320** in a windable manner, whereby the body **1320** and the attaching mechanism **1310** form a space **1313.**

For example, it is possible to tighten the blade **1011** by the attaching mechanism **1310** by winding the second end portion **1312** of the attaching mechanism **1310** in a state where the blade **1011** passes through the space **1313.** In this case, a mechanism for winding the second end portion **1312** can be any mechanism. The attaching device **1300** can wind the second end portion **1312** by using any mechanism. For example, the attaching device **1300** can wind the second end portion **1312** by rotating a pulley or a roller to which the second end portion **1312** is fixed. In doing so, the pulley or the roller may be built in the body **1320** of the attaching device **1300,** or may be externally attached to the body **1320.**

Although it was explained that the first end portion **1311** is fixed to the body **1320** and the second end portion **1312** is windable in the above-described example, the manner of the attaching mechanism **1310** is not limited thereto. For example, both the first end portion **1311** and the second end portion **1312** may be windable. For example, the band or belt may be configured to be expandable and contractable so as to tighten the blade **1011** passing through the space **1313.**

Referring to Figures **11C** and **11D** again, the attaching device **1300** is moved, along with the rope holding device **1200,** to a predetermined position on the wind turbine **1010** by the moving device **1400.** After the attaching device is moved to the predetermined position, the attaching device **1300** is attached to the predetermined position as shown in Figure **11D****.**

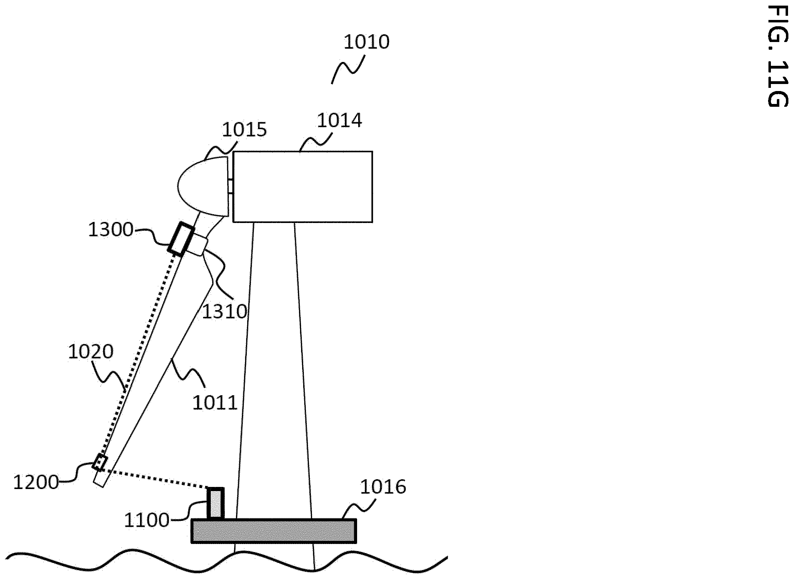

In this example, the predetermined position is a narrowed portion at the root of the blade **1011** of the wind turbine **1010.** It is preferable that the predetermined position is on the blade that is the subject of maintenance because a rope can be positioned near the surface of the blade **1011** when the rope is extended from the attaching device **1300** as shown in, for example, Figure **11G** and the like described below. Further, it is preferable that the predetermined position is a narrowed portion of the blade because the attaching device **1300** can be attached by an expanded portion adjacent to the narrowed portion so that the attaching device would not be shifted. Further, it is preferable that the predetermined position is at the root of the blade because a rope can be extended across the entire blade **1011** when the rope is extended from the attaching device **1300** as shown in, for example, Figure **11G** and the like described below.

The attaching device **1300** can be attached to a predetermined position by using the attaching mechanism **1310.** For example, the attaching device **1300** can be attached to a predetermined position on the blade **1011** by tightening the blade **1011** by the above-described band or belt which is able to tighten.

The rope holding device **1200** is moved along with the attaching device **1300.** Thus, when the attaching device **1300** is attached to a predetermined position on the blade **1011,** the rope holding device **1200** would be also attached to the predetermined position on the blade.

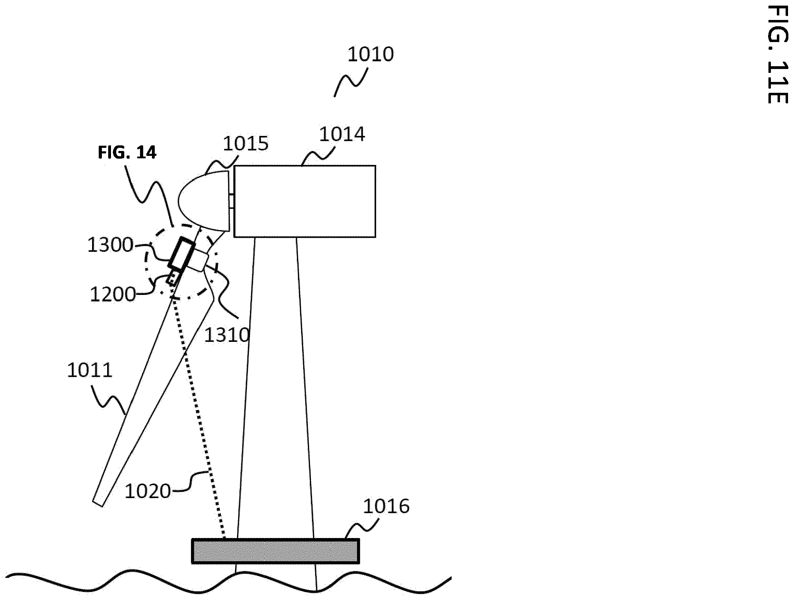

Figure **11E** shows the state of a stage of fixing a part of at least one rope **1020** to the attaching device **1300.** Although it is explained in this example that a part of the at least one rope **1020** is fixed to the attaching device **1300** after the attaching device **1300** is attached to a predetermined position on the blade **1011,** the timing at which a part of the at least one rope **1020** is fixed to the attaching device **1300** is not limited thereto. For example, the attaching device **1300** may be attached to a predetermined position on the blade **1011** as shown in Figures **11B** to **11D** after a part of the at least one rope **1020** is fixed to the attaching device **1300.** In this case, the above-described at least one nylon string can be omitted.

For example, one rope **1020** is attached to a first end of a nylon string extending from the attaching device **1300** and the rope holding device **1200** on the blade **1011** to the deck **1016,** and a second end of the nylon string is pulled, whereby the rope **1020** would pass through the attaching device **1300** and the rope holding device **1200** on the blade **1011** instead of the nylon string. Both ends of the rope **1020** would be aligned on the deck **1016** by further pulling the second end of the nylon string so that the first end of the nylon string would return to the deck **1016.** As a result, two rope portions (first portion and second portion of one rope) would extend from the attaching device **1300** to the deck **1016.** An example where two rope portions **1020** extend to the deck **1016** is explained below. Of course, it is understood that the present invention is not limited to utilization of two rope portions, but one rope or two or more rope portions can be utilized.

For example, the at least one rope **1020** passes through an eye bolt on the attaching device **1300** in the same manner as a nylon string, whereby a part of the at least one rope would be fixed to the attaching device **1300.** In this case, "fix" refers to a state where one element does not move relative to the other element. A part of the at least one rope being fixed to the attaching device **1300** refers to a state where a part of the at least one rope does not move relative to the attaching device **1300.** "Fix" includes not only permanent fixation but also temporary fixation. For example, the at least one rope passes through an eye bolt on a first side of the attaching device **1300** and winds around the eye bolt, passes through an eye bolt on a second side and winds around the eye bolt, and extends, whereby a portion of the rope extending between the eye bolt on the first side and the eye bolt on the second side would be fixed to the attaching device **1300.** The manner of fixing a part of the at least one rope to the attaching device **1300** is not limited thereto. A part of the at least one rope can be fixed to the attaching device **1300** in any manner.

For example, attaching the attaching device **1300** to a predetermined position on the blade **1011** in a state where a nylon string lighter than a rope is put through the attaching device **1300,** followed by replacing the nylon string with the rope to fix at least one rope to the attaching device **1300** is more advantageous than fixing a part of at least one rope to the attaching device **1300,** followed by attaching the attaching device **1300** to a predetermined position on the blade **1011** as shown in Figures **11B** to **11D** in that a weight which is carried by the moving device **1400** can be reduced.

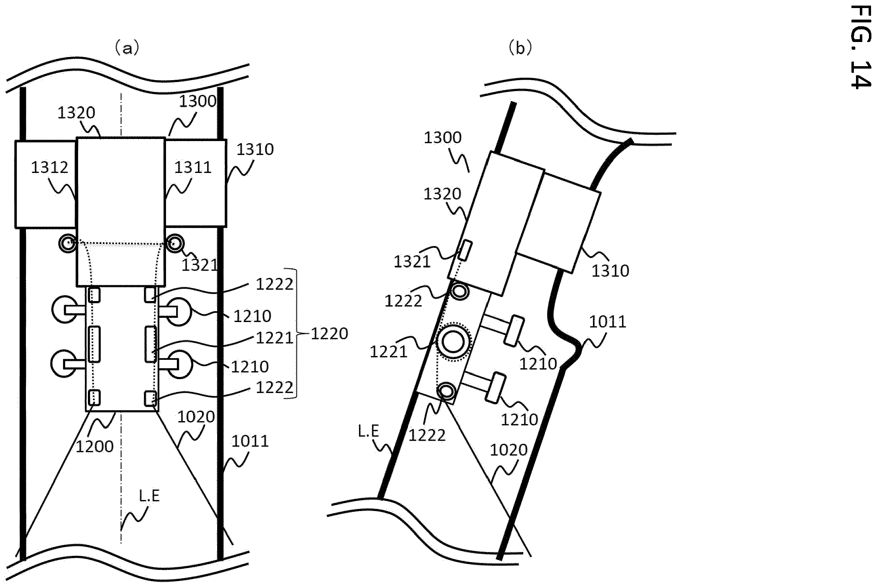

Figure **14** shows a detail of the portion surrounded by a dashed-line circle in Figure **11E****.** Figure **14** shows a state where the attaching device **1300,** to which the rope holding device **1200** is coupled, is attached to a narrowed portion of the blade **1011** on the leading edge L.E of the blade **1011.** Figure **14(a)** is a figure of the leading edge L.E viewed from above while Figure **14(b)** is a figure of the leading edge L.E viewed from a side. For convenience sake, the right side of the L.E in Figure **14(a)** is referred to as the first side while the left side of the L.E is referred to as the second side.

The attaching device **1300** is attached to the narrowed portion of the blade **1011** via the attaching mechanism **1310.** The attaching mechanism **1310** is a band which is able to tighten and fixed to the body **1320** at the first end portion **1311** and the second end portion **1312.**

The attaching device **1300** comprises a rope fixing means **1321.** The rope fixing means **1321** is shown as, but not limited to, a plurality of eye bolts. The rope fixing means **1321** can be any means as long as it can fix a part of at least one rope to the attaching device **1300.** A plurality of eye bolts **1321** are disposed on both the first side and the second side of the attaching device **1300.**

The rope holding device **1200** comprises a moving means **1210.** The moving means **1210** is shown as, but not limited to, a wheel. The moving means **1210** can be any means as long as it enables the rope holding device **1200** to move on a blade. The wheel may be a non-driving wheel, or may be a driving wheel driven by a power source. For example, the rope holding device **1200** may be configured to move on the blade **1011** by utilizing a winch and a non-driving wheel, or may be configured to move on the blade **1011** by utilizing a driving wheel without utilizing a winch (and a rope). In the case of movement on the blade using a winch, the winch (not shown in Figure **1**) may be installed in the rope holding device **1200,** or may be installed outside the rope holding device **1200** (e.g., attaching device **1300** or deck **1016**). When the rope holding device **1200** is moved by utilizing a winch, for example, a rope or wire for movement which is separate from the rope **1020** can be utilized. For example, the rope or wire for movement may extend from the attaching device **1300** to the rope holding device **1200,** or may extend from the deck **1016** to the rope holding device **1200** via the attaching device **1300.** The winch may be an electric winch or may be a manual winch operated by a worker on the deck **1016.**

The rope holding device **1200** comprises a rope connecting means **1220.** The rope connecting means **1220** can comprise an engaging portion **1221** which engages with a rope and a guiding portion **1222** which guides the rope.

For example, the engaging portion **1221** can be an engaging roller driven by a driving portion. Force for delivering a rope forward or backward can be exerted on the rope by driving the engaging roller by the driving portion in a state where the rope is wound around the engaging roller. This enables the rope holding device **1200** to move along the rope. The engaging portion **1221** can be implemented by any other mechanism as long as it can achieve a similar function.

The guiding portion **1222** is any mechanism that guides a rope to the engaging portion **1221.** For example, the guiding portion **1222** can be a guiding roller.

The moving means **1210** and the rope connecting means **1220** are disposed on both the first side and the second side of the attaching device **1300.**

The rope **1020** enters the rope holding device **1200** from the first side of the rope holding device **1200,** winds around the engaging portion **1221** through a first guiding portion **1222,** and exits from the rope holding device **1200** through a second guiding portion **1222.** The rope **1020** then enters the attaching device **1300** from the first side of the attaching device **1300,** winds around a first eye bolt **1321,** extends to a second eye bolt **1321** on the second side of the attaching device **1300,** winds around the second eye bolt, and exits from the attaching device **1300.** The rope **1020** then enters from the second side of the rope holding device **1200,** winds around the engaging portion **1221** through the second guiding portion **1222,** and exits from the rope holding device **1200** through the first guiding portion **1222.** In this manner, a part of the rope **1020** is fixed by a plurality of eye bolts **1321,** and the rope holding device **1200** receives the rope **1020** extending from the attaching device **1300.** In Figure **14****,** the portion of the rope passing inside the rope holding device **1200** and the attaching device **1300** is depicted in a broken line.

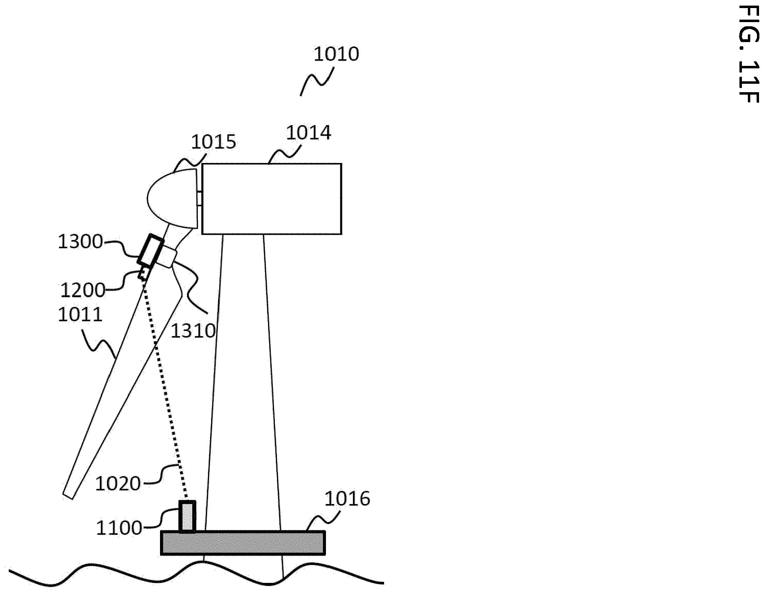

Figure **11F** shows the state of a stage of connecting two rope portions **1020** to the maintenance device **1100** on the deck **1016.**

The maintenance device **1100** comprises a moving means for moving the maintenance device **1100** along the rope portions **1020.** For example, the moving means is a winch. For example, the maintenance device **1100** comprises two winches, wherein one rope portion is connected to one of the two winches while the other rope portion is connected to the other of the two winches. The maintenance device **1100** can rise along the rope portions **1020** by winding the rope portions **1020** by using a winch.

Alternatively, the moving means for moving the maintenance device **1100** along the rope portions **1020** can be installed outside the maintenance device **1100.** For example, the attaching device **1300** can comprise a moving means such as a winch and the attaching device **1300** winds the rope portions **1020** by using the winch, which enables the maintenance device **1100** to move along the rope portions **1020.**

Figure **11G** shows the state of a stage of disposing the rope holding device **1200** in any position on the blade **1011** of a wind turbine.

Two rope portions **1020** extend from the attaching device **1300** to the rope holding device **1200.** The rope holding device **1200** can receive these rope portions **1020.** The two rope portions **1020** pass through the rope holding device **1200** and extend to the maintenance device **1100** on the deck **1016.** The rope holding device **1200** can hold the rope portions **1020** by engaging with the rope portions **1020** passing through the rope holding device **1200.**

In one example, it is preferable to move the rope holding device **1200** on the blade **1011** by utilizing a winch installed on the deck **1016** because the mechanism of the rope holding device **1200** can be simplified and the weight thereof can be reduced. This can facilitate the movement of the rope holding device **1200** by the moving device **1400.** Further, the need for utilizing a large moving device **1400** is eliminated.

In another example, it is preferable to perform movement on the blade **1011** by utilizing an electric winch or by utilizing a driving wheel without utilizing a winch (and a rope) because this can eliminate the need for performing a manual winch by a worker on the deck **1016,** which can reduce manpower. Further, the need for performing operation by a worker in a place which is not safe (e.g., on the sea) can also be reduced.

The rope holding device **1200** moves on the blade **1011** and stays in a position on the blade **1011,** whereby the rope portions **1020** can be held in the position.

For example, the rope holding device **1200** can hold the rope portions **1020** on the blade **1011** so that the two rope portions **1020** are positioned on both sides of when the blade **1011** is divided into two by the leading edge. Specifically, the rope holding device **1200** can hold the rope portions **1020** on the blade **1011** so that a first rope portion **1020** is positioned on a first side on the blade while a second rope **1020** is positioned on a second side which is opposite to the first side across the leading edge of the blade. As a result, the two rope portions would extend from both sides of the blade **1011.**

In this case, for example, when the rope holding device **1200** is positioned at the tip of the blade **1011,** each of the two rope portions **1020** has a significant length by extending from the narrow portion to the tip of the wind turbine. Thus, the weight thereof is also significant. The weight of the rope holding device **1200** is reduced, whereby the rope holding device **1200** can be lighter than each of the rope portions. Thus, the rope holding device **1200** can be stably disposed on the blade **1011** by the weight of the two rope portions **1020** positioned on both sides across the leading edge of the blade **1011** and the friction between the rope holding device **1200** and the blade **1011.**

After the rope holding device **1200** has moved to the right place on the blade **1011** of the wind turbine (e.g., the tip of the blade), the maintenance device **1100** is moved to the blade **1011.**

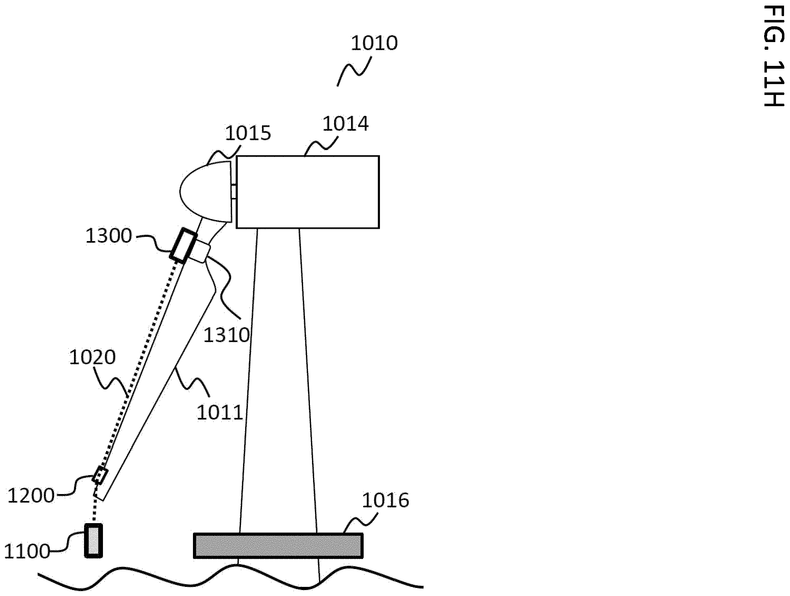

Figure **11H** shows the state of a stage of moving the maintenance device **1100** onto the blade **1011** of the wind turbine **1010.**

The maintenance device **1100** can move to the blade **1011** along the two rope portions **1020** extending from the rope holding device **1200** disposed on the blade **1011.** As described above, for example, the maintenance device **1100** may be configured to move to the blade **1011** along the two rope portions **1020** by using a moving means such as a winch that the maintenance device **1100** comprises, or may be configured to move to the blade **1011** along the two rope portions **1020** by utilizing a moving means such as a winch that is installed outside the maintenance device **1100.**

The rope holding device **1200** can move on the blade **1011** so that the spatial position of the maintenance device **1100** moving to the blade **1011** and the position of the rope holding device **1200** on the blade **1011** are in concert with each other, which can allow the position in which the two rope portions **1020** are held on the blade **1011** to be in concert with the spatial position of the maintenance device **1100.** For example, the rope holding device **1200** can move on the blade so that the position of the rope holding device **1200** on the blade would be approximately right above the maintenance device **1100,** thereby changing the position in which the two rope portions **1020** are held on the blade **1011.** As a result, the rope portions **1020** would vertically extend from the rope holding device **1200** disposed on the blade **1011** to the maintenance device **1100,** and the maintenance device **1100** can rise to the blade **1011** without the need for controlling the posture or spatial position of the maintenance device or without horizontally swinging. Further, the rope holding device **1200** holds the two rope portions in proximity to each other, whereby the rope portions along which the maintenance device **1100** rises would be also in proximity to each other. This enables the maintenance device **1100** to effectively utilize the two rope portions **1020** for rising. For example, rising along two or more rope portions enables safer and more stable rising as compared to rising along one rope.

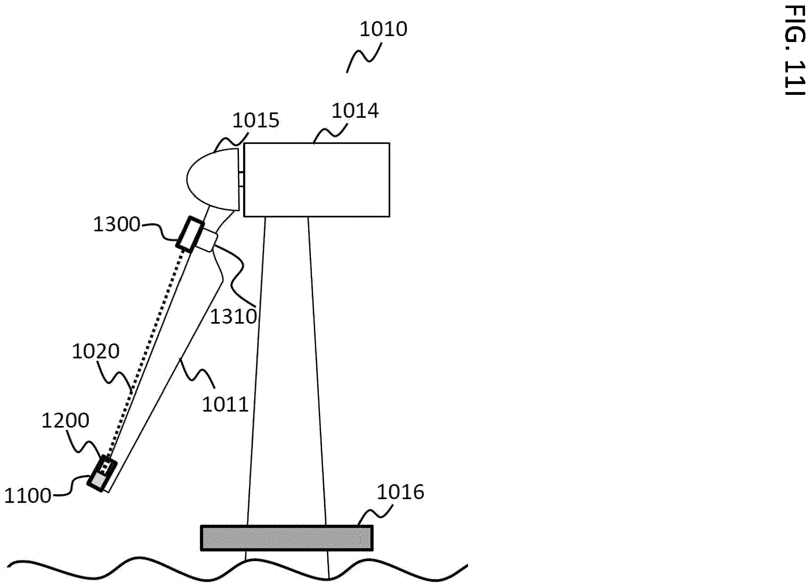

The maintenance device **1100** rises along the rope **1020** to reach the blade **1011** as shown in Figure **11I****.** This can dispose the maintenance device **1100** on the blade **1011.**

The maintenance device **1100** which has reached the blade **1011** can attach to the blade **1011** by any mechanism. For example, the maintenance device **1100** may be configured to attach the blade **1011** by mechanical force, may be configured to attach to the blade **1011** by magnetic force, may be configured to attach to the blade **1011** by electric power, or may be configured to attach to the blade **1011** by pressure. A mechanism for attaching to the blade **1011** by mechanical force can be, for example, a pair of frames that are biased to hold the blade **1011** therebetween. A mechanism for attaching to the blade **1011** by pressure can be, for example, a mechanism which generates negative pressure to be stuck to the blade **1011.**

When the maintenance device **1100** reaches the blade **1011,** maintenance on the blade **1011** of the wind turbine is performed.

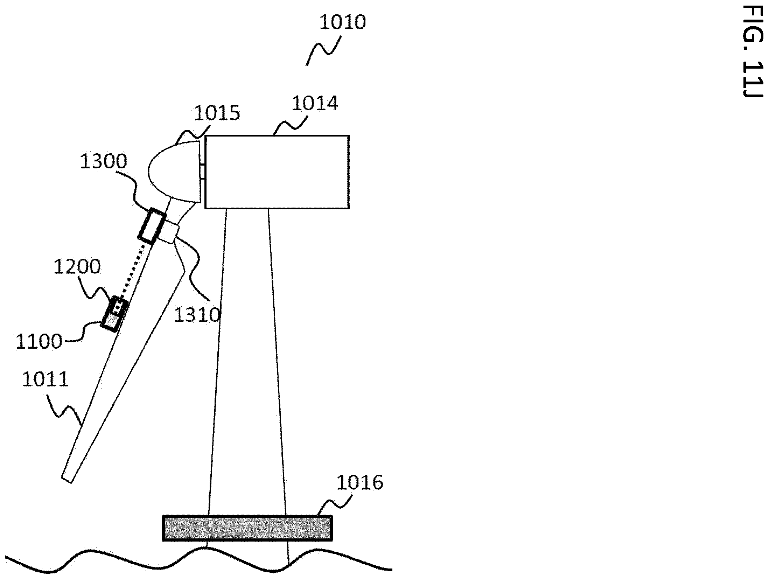

Figure **11J** shows a state where the maintenance device **1100** is moving on the leading edge of the blade **1011** along the rope portions **1020.** The maintenance device **1100** can move on the blade **1011** along with the rope holding device **1200.**

When the maintenance device **1100** moves along the leading edge, the maintenance device **1100** can maintain a state in which the maintenance device attaches to the blade **1011,** whereby the maintenance device **1100** can move on the leading edge of the blade **1011** without floating up. Further, since the leading edge of the blade **1011** is inclined by about 5 degrees (inclined by about 1 degree to about 10 degrees in some cases) relative to the vertical direction as described above, the gravity exerted on the maintenance device **1100** acts so as to push the maintenance device **1100** against the leading edge of the blade **1011,** thereby preventing the maintenance device **1100** from floating up.

The maintenance device **1100** performs maintenance on the blade **1011** while moving on the leading edge of the blade **1011.** For example, the maintenance device **1100** images the surface of the leading edge by using a camera while moving on the leading edge of the blade **1011.** For example, the maintenance device **1100** examines the conduction of a lightning receiving portion (receptor) by using a probe while moving on the leading edge of the blade **1011.** For example, the maintenance device **1100** supplies a radio wave or a pulse signal to a lightning receiving portion (receptor) by using a probe to examine disconnection or a disconnected portion of a down conductor while moving on the leading edge of the blade **1011.** For example, the maintenance device **1100** washes the surface of the leading edge by using a washing device while moving on the leading edge of the blade **1011.** For example, the maintenance device **1100** polishes the surface of the leading edge by using a sander while moving on the leading edge of the blade **1011.** For example, the maintenance device **1100** applies paint to the surface of the leading edge by using a paint applying device while moving on the leading edge of the blade **1011.** For example, the maintenance device **1100** applies a material such as putty, adhesive, or sealant to the surface of the leading edge by using an electric gun while moving on the leading edge of the blade **1011.** A hole made on the blade **1011** can be filled with an applied material. The objective of filling a hole is to cover the hole to prevent water from entering the blade **1011** and the like. Aesthetics or perfection do not need to be required.

By controlling winding and delivering by a winch, the maintenance device **1100** can move on the leading edge of the blade **1011** in a direction in which the rope **1020** extends, for example, in a direction from the tip of the blade toward the base of the blade and a direction from the base of the blade toward the tip of the blade. This enables the maintenance device **1100** to perform maintenance while reciprocatively moving on the leading edge of the blade **1011.** Further, even if the maintenance device **1100** comes off the blade **1011,** the rope **1020** to which the winch of the maintenance device **1100** is connected serves as a lifeline, which can prevent the maintenance device **1100** from falling down.

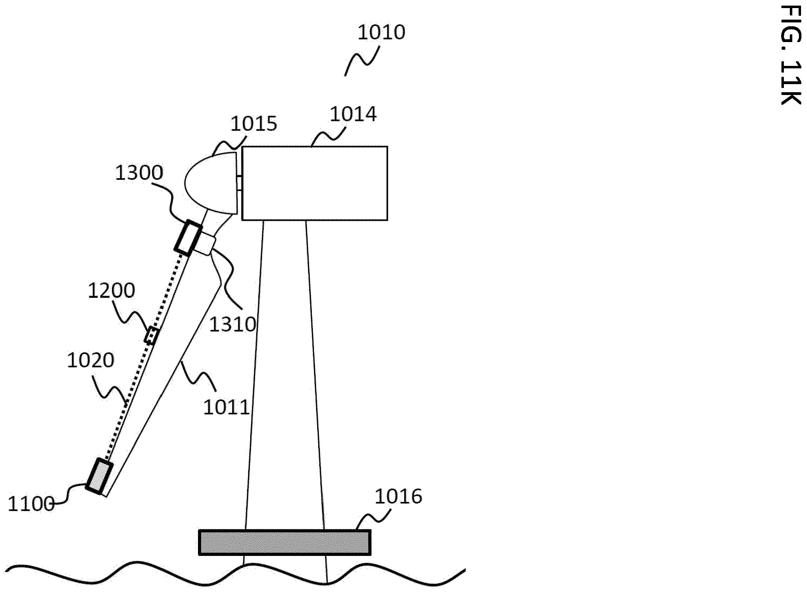

Figure **11K** shows a state where the rope holding device **1200** is moving on the leading edge of the blade **1011** along the rope portions **1020.**

When the rope holding device **1200** moves along the leading edge, the rope holding device **1200** can maintain a state in which the rope holding device attaches to the blade **1011,** whereby the rope holding device **1200** can move on the leading edge of the blade **1011** without floating up. Further, since the leading edge of the blade **1011** is inclined by about 5 degrees (inclined by about 1 degree to about 10 degrees in some cases) relative to the vertical direction as described above, the gravity exerted on the rope holding device **1200** acts so as to push the rope holding device **1200** against the leading edge of the blade **1011,** thereby preventing the maintenance device **1100** from floating up.

The rope holding device **1200** performs maintenance on the blade **1011** in cooperation with the maintenance device **1100** while moving on the leading edge of the blade **1011.** For example, the rope holding device **1200** images the surface of the leading edge by using a camera while moving on the leading edge of the blade **1011.** For example, the rope holding device **1200** detects a signal depending on a radio wave of when a radio wave transmitted by the maintenance device **1100** is propagated in a down conductor in the blade **1011** to examine disconnection or a disconnected portion of the down conductor while moving on the leading edge of the blade **1011.** For example, the maintenance device **1100** disposes a reference conductive wire approximately in parallel to a down conductor in the blade **1011** while moving on the leading edge of the blade **1011,** which enables the maintenance device **1100** to examine disconnection or a disconnected portion of the down conductor.

By controlling winding and delivering by a winch, the rope holding device **1200** can move on the leading edge of the blade **1011** in a direction in which the rope **1020** extends, for example, in a direction from the tip of the blade toward the base of the blade and a direction from the base of the blade toward the tip of the blade. This enables the rope holding device **1200** to perform maintenance while reciprocatively moving on the leading edge of the blade **1011.** Further, even if the rope holding device **1200** comes off the blade **1011,** the rope **1020** to which the rope holding device **1200** is connected serves as a lifeline, which can prevent the rope holding device **1200** from falling down.

In this manner, maintenance on the blade **1011** of the wind turbine **1010** is performed by cooperation of the maintenance device **1100** and the rope holding device **1200.** When the maintenance is complete, the system of the present invention would be retrieved from the blade **1011** of the wind turbine **1010.**

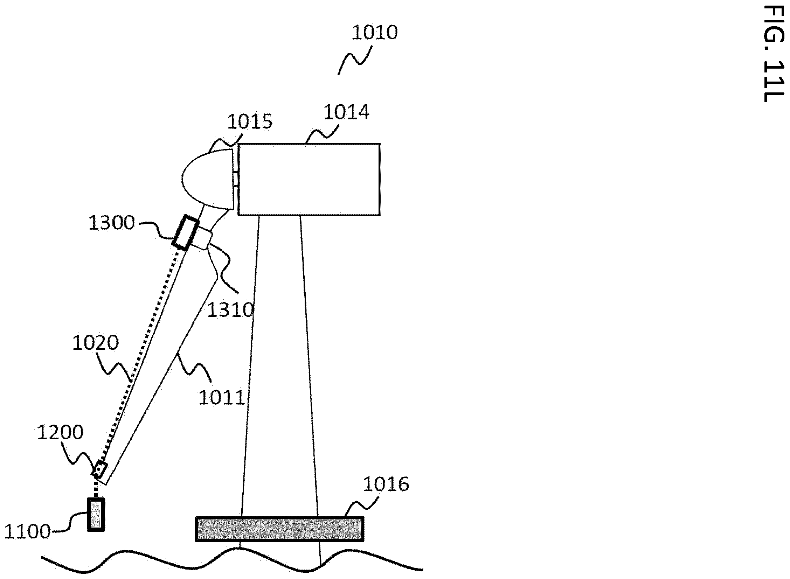

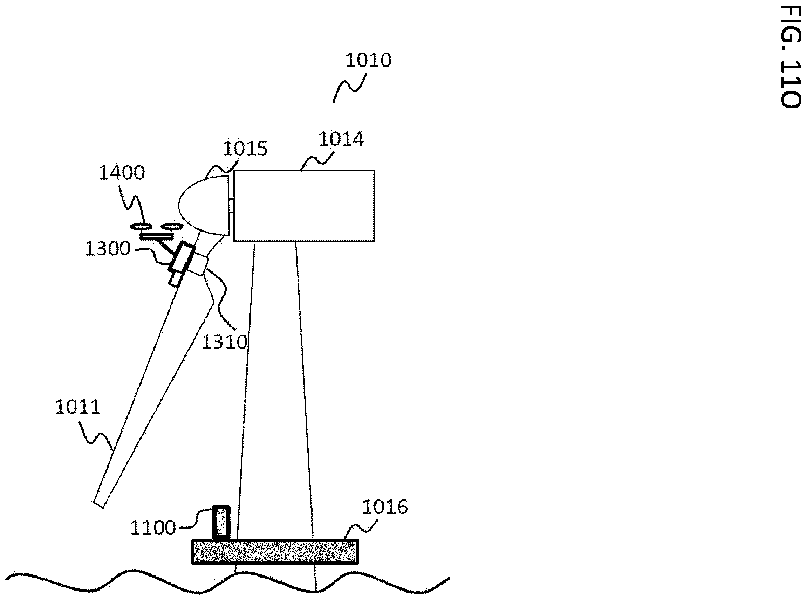

Figures **11L** to **11R** show the state of a stage of retrieving the system of the present invention from the blade **1011** of the wind turbine **1010.** Figures **11L** to **11N** show the state of a stage of moving the maintenance device **1100** from the blade **1011** while Figures **11O** to **11R** show the state of a stage of moving the rope holding device **1200** and the attaching device **1300** from the blade **1011.**

As shown in Figure **11L****,** when the rope holding device **1200** moves to the right place on the blade **1011** (e.g., the tip of the blade), the maintenance device **1100** would be moved from the blade **1011.** The maintenance device **1100** can go down along the rope portions **1020** held by the rope holding device **1200.** The maintenance device **1100** can be positioned vertically beneath the rope holding device **1200.**

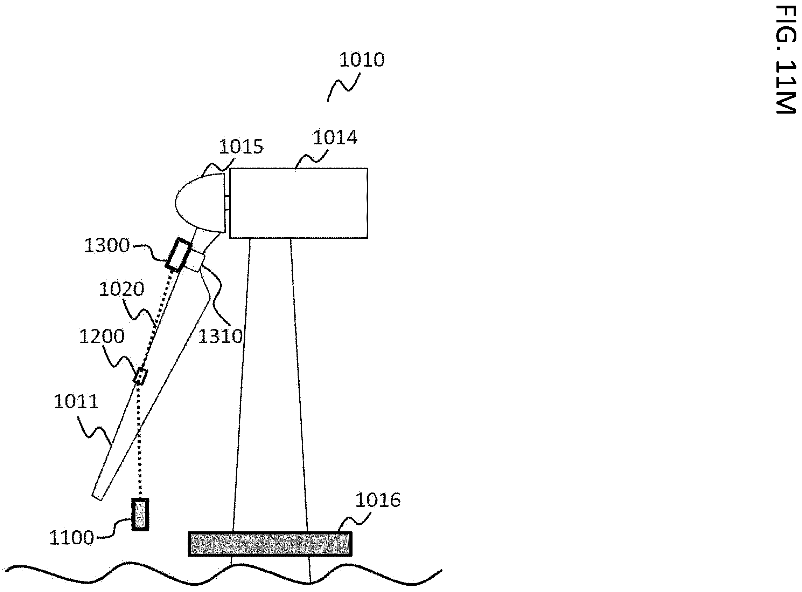

As shown in Figures **11L** to **11N****,** the rope holding device **1200** can move on the blade **1011** so that the spatial position of the maintenance device **1100** moving from the blade **1011** and the position of the rope holding device **1200** on the blade **1011** are in concert with each other, which can allow the position in which the two rope portions **1020** are held on the blade **1011** to be in concert with the spatial position of the maintenance device **1100.** For example, when the rope holding device **1200** moves on the blade **1011** in a direction towards the root (the diagonally upper right direction in the figures of Figures **11L** and **11M**), the maintenance device **1100** also moves in the diagonally upper right direction in Figures **11L** and **11M** so that the position of the maintenance device **1100** would be approximately right below the rope holding device **1200.** This can maintain vertical alignment of the rope holding device **1200** disposed on the blade **1011** and the maintenance device **1100,** which enables the maintenance device **1100** to go down from the blade **1011** without the need for controlling the posture or spatial position of the maintenance device or without horizontally swinging. Further, the rope holding device **1200** holds the two rope portions in proximity to each other, whereby the rope portions along which the maintenance device **1100** goes down would be also in proximity to each other. This enables the maintenance device **1100** to effectively utilize the two rope portions **1020** for going down. For example, going down along two or more rope portions enables safer and more stable rising as compared to going down along one rope.

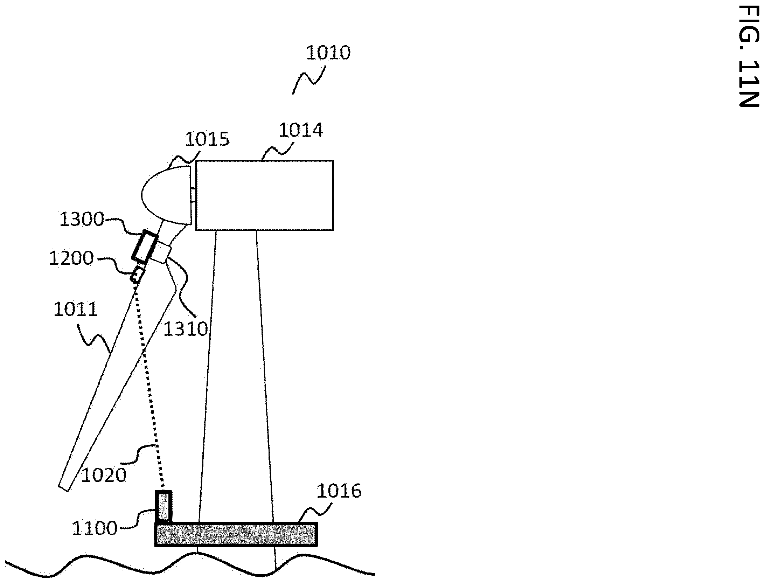

By causing the maintenance device **1100** to go down while controlling the position of the rope holding device **1200** on the blade **1011,** the maintenance device **1100** reaches the deck **1016** as shown in Figure **11N****.** When the maintenance device **1100** reaches the deck **1016,** the rope portions **1020** are removed from the maintenance device **1100.** Furthermore, the rope portions **1020** are also removed from the rope holding device **1200** and the attaching device **1300.** The rope portions **1020** are removed from the rope holding device **1200** and the attaching device **1300** in any manner. For example, the rope portions **1020** may be removed from the rope holding device **1200** and the attaching device **1300** by replacing the rope portions **1020** with a nylon string in the same manner as the above-described replacement of a nylon string with a rope (instead, a nylon string may be connected to the rope holding device **1200** and the attaching device **1300**). Alternatively, for example, the rope holding device **1200** and the attaching device **1300** are coupled by any mechanism, followed by pulling one end of the rope portions **1020** (connected to the maintenance device **1100**), whereby the other end of the rope portions **1020** (connected to the maintenance device **1100**) passes through the rope holding device **1200** and the attaching device **1300** and comes off.

Next, the moving device **1400** is coupled to the attaching device **1300** as shown in Figure **11O****.** The moving device **1400** can be coupled to the attaching device **1300** by any means. For example, the moving device **1400** may be coupled to the attaching device **1300** by mechanical force, may be coupled to the attaching device **1300** by magnetic force, may be coupled to the attaching device **1300** by electric power, or may be coupled to the attaching device **1300** by pressure or suction force. The moving device **1400** is a device which moves the attaching device **1300** and the rope holding device **1200** from the blade to the deck. The moving device **1400** can be, but is not limited to, a moving device which is able to fly such as a drone. The moving device can be any means as long as it can move the attaching device **1300** and the rope holding device **1200** from the blade. The moving device **1400** may be the same device as or a different device from the moving device used for moving the attaching device **1300** and the rope holding device **1200** to the blade. The moving device is preferably the same device because using the same device can prevent additional costs from being incurred.

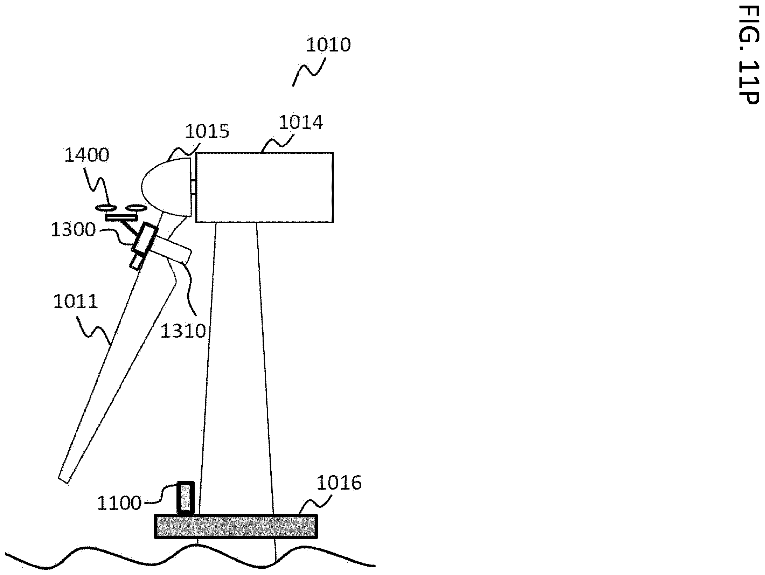

Next, attachment to the blade **1011** by the attaching mechanism **1310** is released as shown in Figure **11P****.** For example, attachment to the blade **1011** by the attaching mechanism **1310** is released by releasing tightening of the attaching mechanism **1310** which is a band or belt which is able to tighten. For example, the attaching device **1300** can release tightening of the attaching mechanism **1310** by rotating a pulley or roller to which the second end portion **1312** is fixed to deliver the second end portion **1312.** Alternatively, for example, the attaching device **1300** can release tightening of the attaching mechanism **1310** by separating the first end portion **1311** or the second end portion **1312** from the body **1320.** The attaching device **1300** can separate the first end portion **1311** or the second end portion **1312** from the body **1320** by any mechanism.

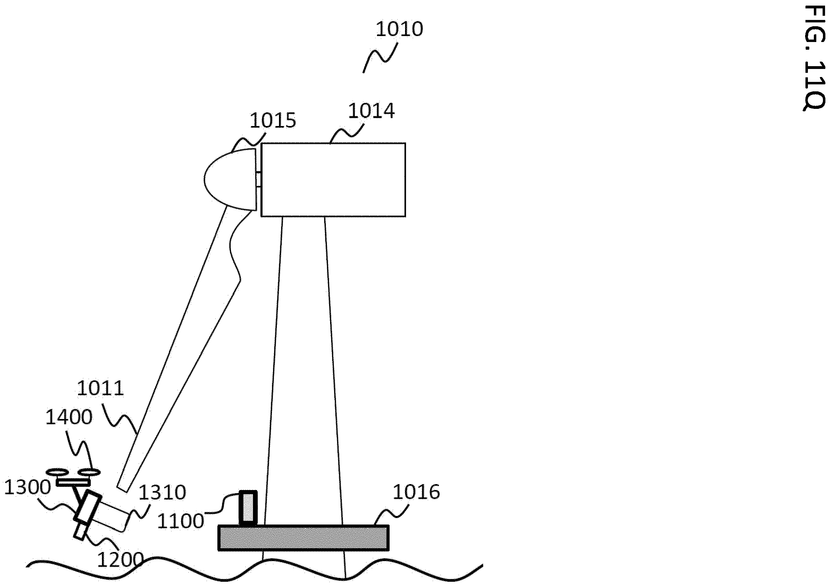

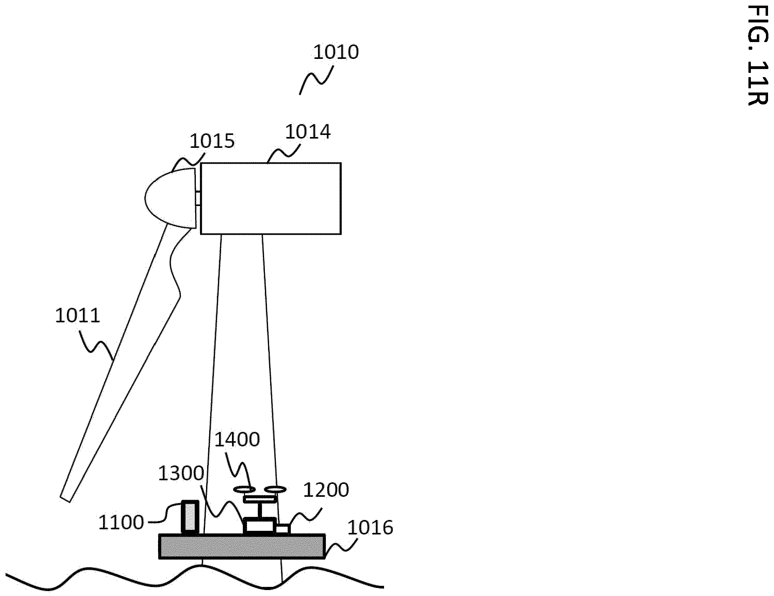

Next, the attaching device **1300** is moved, along with the rope holding device **1200,** from a predetermined position on the blade **1011** by the moving device **1400** as shown in Figures **11Q** and **11R****.** The attaching device **1300** is then moved to the deck **1016** along with the rope holding device **1200.**

In this manner, the maintenance device **1100** and the rope holding device **1200** and the attaching device **1300** are retrieved from the blade **1011** of the wind turbine **1010.** After the maintenance device **1100** and the rope holding device **1200** and the attaching device **1300** are retrieved from the blade **1011** of the wind turbine **1010,** the blades **1011, 1012,** and **1013** are rotated so that the blade **1012** or **1013** that is the next subject of maintenance is positioned to extend vertically downwards. In a state where the blade **1012** or **1013** that is the next subject of maintenance is positioned to extend vertically downwards, maintenance on the blade is performed in the same procedure as Figures **11B** to **11R****.** This can be repeated until maintenance on every blade that is the subject of maintenance is complete.

By using the system of the present invention, it is possible to safely and easily perform maintenance on a blade of a wind turbine even when the wind turbine is a wind turbine without a sufficient scaffold such as the wind turbine **1010** on the sea. For example, since a rope can be placed on a wind turbine by the attaching device **1300,** a worker does not need to attach a rope.

Although it was explained in this example that the rope **1020** is removed from the attaching device **1300** before moving the attaching device **1300** from a predetermined position on the blade **1011,** the timing at which the rope **1020** is removed from the attaching device **1300** is not limited thereto. For example, the rope **1020** may be removed from the attaching device **1300** after moving the attaching device **1300** from a predetermined position on the blade **1011** to the deck **1016** as shown in Figures **11O** to **11R****.** However, the rope **1020** is preferably removed from the attaching device **1300** before moving the attaching device **1300** from a predetermined position on the blade **1011** because the weight carried by the moving device **1400** can be reduced by removing the rope **1020** from the attaching device **1300,** which eliminates the need for utilizing a large moving device **1400.** This can lead to easy maintenance.

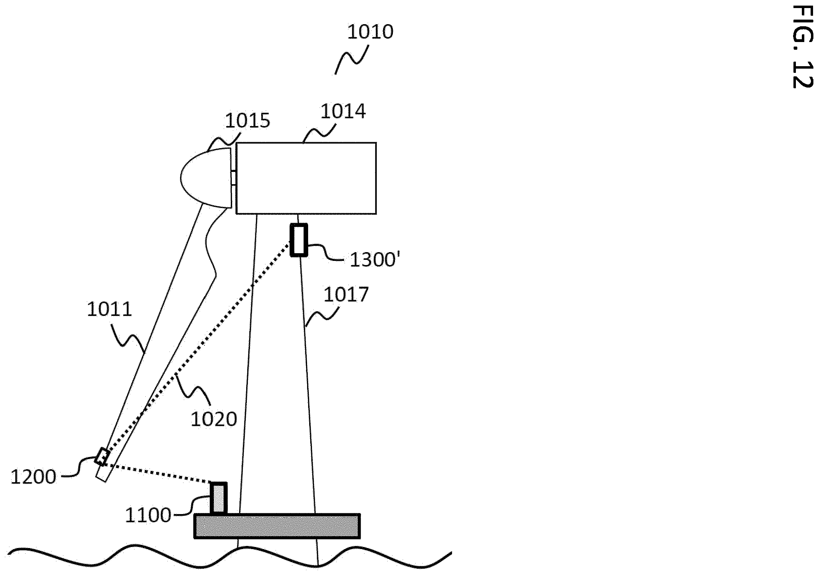

Although it was explained in the above example that the attaching device **1300** is moved to a predetermined position on the blade **1011** and the attaching device **1300** is attached to the predetermined position, the attaching device **1300** can be moved to any position on the wind turbine **1010** and attached to any position. For example, the attaching device can be attached to a predetermined position on a tower **1017** of the wind turbine **1010** as shown in Figure **12****.**

Figure **12** shows an example of attaching a rope to a predetermined position on the tower **1017** of the wind turbine **1010** by using an attaching device **1300'** in an alternative embodiment. As one example, Figure **12** shows the state of a stage of disposing the same rope holding device **1200** as that in Figure **11G** in any position on the blade **1011** of the wind turbine.

In this example, the moving device **1400** can move the attaching device **1300'** to a predetermined position on the tower **1017,** and the moving device **1400** can separately move the rope holding device **1200** to any position on the blade **1011,** whereby at least one rope extending from the attaching device **1300'** is held on the blade by the rope holding device **1200.**

The attaching device **1300'** can be attached to a predetermined position on the tower **1017** of the wind turbine **1010** by any means. For example, the attaching device **1300'** may be attached by mechanical force, may be attached by magnetic force, may be attached by electric power, or may be attached by pressure or suction force.

When at least one rope is held by the rope holding device **1200** in any position on the blade **1011,** maintenance on the blade **1011** is performed in the same manner as Figures **11H** to **11K****.**

After maintenance is performed, the attaching device **1300'** and the rope holding device **1200** would be separately retrieved.

The procedure that was explained while referring to Figures **11A** to **11R** is more advantageous than the procedure of the alternative embodiment that was explained while referring to Figure **12** at least in terms of the following points.

First, in the procedure that was explained while referring to Figures **11A** to **11R****,** both the rope holding device **1200** and the attaching device **1300** can be moved to a position on the blade **1011** of the wind turbine **1010** in one step, which can contribute to prompt positioning of the rope holding device **1200** and the attaching device **1300** on the blade **1011.** For example, from the experience of the inventors of the present invention, it took at least one hour for a worker to perform an operation of attaching a rope onto a nacelle of a wind turbine. It took more time when the wind turbine was a wind turbine on the sea. On the other hand, the inventors of the present application found that the operation of attaching a rope can be completed in a very short period of time (e.g., about 5 minutes) by moving both the rope holding device **1200** and the attaching device **1300** to a position on a blade of a wind turbine by the moving device **1400,** a device which is able to fly, and attaching the attaching device **1300** to the position.

Secondly, in the procedure that was explained while referring to Figures **11A** to **11R****,** the operation of attaching a rope can be completed in a very short period of time even in a place without a sufficient scaffold such as a wind turbine on the sea in the same manner as a place with a sufficient scaffold because the moving device **1400,** a device which is able to fly, is used. Furthermore, since a rope does not need to be manually attached by a human, maintenance on a wind turbine can be safely performed even in a place without a sufficient scaffold such as a wind turbine on the sea.

Thirdly, in the procedure that was explained while referring to Figures **11A** to **11R****,** it is not necessary to cause the rope holding device **1200** alone to approach a blade because, if the attaching device **1300** is mounted on the blade, the rope holding device **1200** would be also simultaneously mounted on the blade. In particular, causing a relatively small rope holding device **1200** to approach a blade requires a skilled technique, which is difficult. However, the procedure that was explained while referring to Figures **11A** to **11R** does not require such a skilled technique and has a minimum risk that the rope holding device **1200** comes into contact with the blade while approaching the blade and breaks the blade.

Fourthly, in the procedure that was explained while referring to Figures **11A** to **11R****,** both the rope holding device **1200** and the attaching device **1300** can be also retrieved from the blade **1011** of the wind turbine **1010** in one step, which can reduce the operation time for maintenance.

Although it was explained that maintenance is performed on a blade of a wind turbine by using one maintenance device **1100** in the above example, maintenance can be also performed on a blade of a wind turbine by using a plurality of maintenance devices **1100.**

Although it was explained that one rope holding device **1200** is used in the above example, the number of rope holding devices **1200** can be any number of 1 or greater. For example, two rope holding devices **1200,** three rope holding devices **1200,** or four or more rope holding devices **1200** can be used. Furthermore, although it was explained that two rope portions **1020** are used in the above example, the present invention is not limited thereto. The present invention can perform maintenance on a blade of a wind turbine by using at least one rope.

According to the maintenance method that was explained while referring to Figures **11A** to **11R** and Figure **12****,** the maintenance device **1100** can be easily disposed on the blade **1011.** The maintenance device **1100** can reach the blade **1011** and land on the blade **1011** only by following a rope held by the rope holding device **1200.** In this case, when landing on the blade **1011,** the posture of the maintenance device **1100** does not need to be finely controlled. This is because the maintenance device **1100** can be guided to a suitable landing position on the blade **1011** by the rope held by the rope holding device **1200.** This can simplify or omit a mechanism for landing that the maintenance device **1100** should have. Further, since landing is easy, manpower upon landing can be reduced. Furthermore, since it is not necessary to finely control the posture upon landing, even when the weight of the maintenance device is increased, the difficulty in landing would be less affected. Thus, it is possible to install many functions on the maintenance device to cause the maintenance device to perform many types of maintenance at once. This leads to more efficient maintenance.

### 5. Configuration of a system for performing maintenance on a blade of a wind turbine

The system for performing maintenance on a blade of a wind turbine of the present invention comprises a maintenance device **1100,** a rope holding device **1200,** and an attaching device **1300.** The system can comprise any number of maintenance devices **1100,** any number of rope holding devices **1200,** and any number of attaching devices **1300.** The system can also comprise a moving means **1400.**

The maintenance device **1100** can have any configuration as long as it is configured to perform maintenance on a blade of a wind turbine, move to the blade on a rope, and move on the blade.

The maintenance device **1100** can comprise any means for performing maintenance. For example, the means for performing maintenance can comprise at least one of an imaging means, a conduction examining means, a disconnection examining means, a washing means, a polishing means, a grinding means, and an applying means.

The imaging means can be any camera that is able to image a still picture or movie of an object.

The conduction examining means can be any means that is able to examine whether current flows in a conducting portion on the surface of an object. For example, the conduction examining means comprises a probe that is able to examine whether current flows in a lightning receiving portion provided to a blade of a wind turbine.

The disconnection examining means can be any means that is able to examine whether a conductive wire extending inside an object (e.g., a down conductor of a blade of a wind turbine) is disconnected, or where the disconnected portion is. For example, the disconnection examining means comprises a transceiver which is able to transmit a pulse signal to a receptor of a down conductor and detect a reflected waveform thereof. For example, the disconnection examining means comprises a probe which is able to supply a radio wave to a receptor of a down conductor. In doing so, a transmitter which actually generates a radio wave may be installed in the maintenance device **1100,** or may be installed outside the maintenance device **1100** (e.g., a deck of a wind turbine). Further, the rope holding device **1200** can comprise a detector which detects a signal in response to a radio wave supplied via the disconnection examining means.

The washing means can be any means that is able to wash an object. For example, the washing means may be a mechanism that uses washing liquid and rag to wipe off dirt. When such a mechanism is used to wash the blade **1011** of the wind turbine **1010** while moving on the blade **1011** of the wind turbine **1010** as shown in Figure **11J****,** washing is performed by the maintenance device **1100** moving on the blade while pushing the rag against the blade.

The polishing means can be any means that is able to polish an object. For example, the polishing means may be a mechanism that uses a sandpaper, a grinder, a disk grinder or the like to perform polishing. When a sandpaper, a grinder, or a disk grinder is used to polish the blade **1011** of the wind turbine **1010** while moving on the blade **1011** of the wind turbine **1010** as shown in Figure **11J****,** polishing is performed by the maintenance device **1100** moving on the blade while pushing the sandpaper or rotating grinder against the blade.

The grinding means can be any means that is able to grind an object. For example, the grinding means may be a mechanism that uses a leutor (or hand grinder or precision grinder), a belt sander or the like to perform grinding. For example, the grinding means can grind the surface of the blade **1011** by pushing a leutor or a belt sander against the blade **1011** of the wind turbine **1010.**

The applying means can be any means that is able to apply a material to an object. Examples of the material applied by the applying means include paint, putty, adhesive, and sealant. For example, the applying means may be a spraying device that is able to spray paint. When such a spraying device is used to apply paint to the blade **1011** of the wind turbine **1010** while moving on the blade **1011** of the wind turbine **1010** as shown in Figure **11J****,** the paint is applied by the maintenance device **1100** moving on the blade while spraying the paint from the spraying device. For example, the applying means may be a caulking gun that is able to extrude putty, adhesive, sealant or the like. When such a caulking gun is used to apply a material such as putty, adhesive, or sealant to the blade **1011** of the wind turbine **1010** while moving on the blade **1011** of the wind turbine **1010** as shown in Figure **11J****,** the material is applied by identifying a portion to which the material should be applied with the imaging means or the like in advance, moving the maintenance device **1100** on the blade **1011,** and extruding the material when the maintenance device reaches the portion to which the material should be applied.

It should be noted that the means for performing maintenance is not limited to the imaging means, the conduction examining means, the disconnection examining means, the washing means, the polishing means, the grinding means, and the applying means. The maintenance device **1100** may comprise another means for performing maintenance instead of or in addition to the above-described means.

For example, the maintenance device **1100** can comprise a communicating means. It is thereby possible to receive a signal from the outside of the maintenance device **1100** and transmit a signal to the outside of the maintenance device **1100.** The communication means may receive a signal from the outside of the maintenance device **1100** wirelessly or by wire. The communication means may transmit a signal to the outside of the maintenance device **1100** wirelessly or by wire. For example, the communicating means can receive a signal for controlling each action of the maintenance device **1100** from the outside of the maintenance device **1100** (e.g., a terminal for operation used by an operator). For example, the communicating means can transmit image data obtained by the imaging means to the outside of the maintenance device **1100** (e.g., a terminal for operation used by an operator). For example, the communicating means can transmit a signal indicating the spatial position of the maintenance device **1100** to the rope holding device **1200.** For example, the communicating means can receive a signal indicating the position of the rope holding device **1200** on a blade from the rope holding device **1200.**

Although it was explained that each action of the maintenance device **1100** is controlled in accordance with a signal from the outside of the maintenance device **1100,** the present invention is not limited thereto. For example, a program for realizing a series of actions for performing maintenance on a blade may be stored in a memory of the maintenance device **1100.** A processor of the maintenance device **1100** can read out and execute the program to cause the maintenance device **1100** to function as a device automatically performing maintenance on a blade.

The maintenance device **1100** comprises a moving means that enables the maintenance device **1100** to move along a rope. The moving means also enables the maintenance device **1100** to move on a blade. For example, the moving means comprises a winch that enables the maintenance device **1100** to move along a rope. For example, the moving means comprises a wheel that enables the maintenance device **1100** to move on a blade. While the wheel can be a non-driving wheel, the wheel may be a driving wheel driven by a power source. For example, the maintenance device **1100** may be configured to move on a blade by using a winch and a non-driving wheel, or may be configured to move on a blade by using a driving wheel without utilizing a winch (and a rope).

Although an example in which the maintenance device **1100** can comprise a means for performing maintenance, a communicating means, a memory, a processor, and a moving means was explained in the above-described examples, the present invention is not limited thereto. A system in which at least one of the components of the maintenance device **1100** is positioned outside the body of the maintenance device **1100** is also within the scope of the present invention. For example, the attaching device **1300** may comprise a winch instead of the maintenance device **1100** comprising a winch. In this case, the maintenance device **1100** may be configured so that a rope extending from the winch of the attaching device **1300** is fixed to the maintenance device **1100** and the winch of the attaching device **1300** winds or delivers the rope, whereby the maintenance device **1100** moves to the blade **1011** or on the blade **1011.**

The rope holding device **1200** can have any configuration as long as it is configured to receive at least one rope extending from the attaching device **1300,** hold the at least one rope in any position on a blade of a wind turbine, and be able to move on the blade.

As described above while referring to Figure **14****,** the rope holding device **1200** comprises a moving means **1210** and a rope connecting means **1220.**

The moving means **1210** can be any means as long as it enables the rope holding device **1200** to move on a blade. For example, the moving means **1210** may be a wheel or a continuous track or the like, or may be a combination of a winch and a wheel or a continuous track.

The rope connecting means **1220** can be any means as long as it enables a rope to be connected to the rope holding device **1200.** The rope connecting means **1220** can comprise an engaging portion **1231** which engages with a rope and a guiding portion **1232** which guides the rope.

The engaging portion **1231** can be an engaging roller driven by a driving portion as shown in Figure **14****.** Force for delivering a rope forward or backward can be exerted on the rope by driving the engaging roller by the driving portion in a state where the rope is wound around the engaging roller. This enables the rope holding device **1200** to move along the rope. The engaging portion **1231** can be implemented by any other mechanism as long as it can achieve a similar function.

The guiding portion **1232** is any mechanism that guides a rope to the engaging portion **1231.** For example, the guiding portion **1232** can be a guiding roller.

For example, the rope holding device **1200** can further comprise a controlling unit and a communicating unit.

The controlling unit is configured to control the overall action of the rope holding device **1200.** For example, the controlling unit can control the components of the rope holding device **1200** in accordance with a control signal received by the communicating unit. For example, the controlling unit can drive the rope connecting means **1220** and move along a connected rope in accordance with a control signal received by the communicating unit. For example, the controlling unit can drive the moving means **1210** and move on a blade in accordance with a control signal received by the communicating unit.

For example, a controlling unit **1210** can be implemented by any controlling means such as one or more processors.

Although it was explained that each component of the rope holding device **1200** is controlled in accordance with a signal from the outside of the rope holding device **1200,** the present invention is not limited thereto. For example, a program for realizing a series of actions of each component of the rope holding device **1200** may be stored in a memory that the rope holding device **1200** can comprise. The controlling unit **1210** can read out and execute the program to cause the rope holding device **1200** to function as an autonomous device.

The communicating unit can receive a signal from the outside of the rope holding device **1200.** In addition, the communicating unit may be also configured to transmit a signal to the outside of the rope holding device **1200.** The communicating unit may receive a signal from the outside of the rope holding device **1200** wirelessly or by wire. The communicating unit may transmit a signal to the outside of the rope holding device **1200** wirelessly or by wire. For example, the communicating unit can receive a control signal for controlling each component of the rope holding device **1200** from the outside of the rope holding device **1200** (e.g., a terminal for operation used by an operator, the maintenance device **1100,** or the attaching device **1300**). For example, a signal indicating the position of the rope holding device **1200** on a blade can be transmitted to the maintenance device **1100.** For example, the communicating means can receive a signal indicating the spatial position of the maintenance device **1100** from the maintenance device **1100.** For example, the communicating unit can be implemented by any communicating means such as an antenna.

The rope holding device **1200** can further comprise a camera. A camera can be any camera that is able to image a still picture or movie of an object. A still picture or movie imaged by a camera can be utilized, for example, to examine the state of the surface of a blade, to identify the position of the rope holding device **1200** on a blade, or to identify the position of the maintenance device **1100** relative to the rope holding device **1200.** Alternatively, a still picture or movie imaged by a camera can be utilized to confirm a display screen of a detector described below.

The rope holding device **1200** can further comprise a detector which detects a signal in response to a radio wave transmitted via the disconnection examining means of the maintenance device **1100.** For example, a detector can detect a signal depending on a radio wave transmitted to a down conductor of a blade. Since a detected signal is different between a disconnected portion and a non-disconnected portion or a signal cannot be detected in a non-disconnected portion, it is possible to examine the presence or absence of disconnection or detect a disconnected portion based on an output from a detector. For example, a detector can detect disconnection in a down conductor by utilizing the same principle as that of a buried cable searcher which can search for a cable buried in the ground.

The rope holding device **1200** can further comprise a reference conductive wire which can be disposed on a blade. A reference conductive wire extends between the rope holding device **1200** and the attaching device **1300.** The rope holding device **1200** moves from the attaching device **1300** toward the tip of a blade, which enables the rope holding device **1200** to dispose a reference conductive wire on the blade. In this case, a conductive wire extends inside the blade, and the disposed reference conductive wire can be approximately parallel to the conductive wire. In this case, "approximately parallel" refers to an angle formed by two straight lines being ± 5°.

In this manner, the rope holding device **1200** can have a minimum configuration which can realize a function for receiving at least one rope extending from the attaching device **1300,** holding the at least one rope in any position on a blade of a wind turbine, and moving on the blade. This can reduce the weight of the rope holding device **1200.** For example, the rope holding device **1200** may have a weight of about 2 kg or less, may have a weight of about 1.5 kg or less, or may have a weight of about 1 kg or less. It is preferable to reduce the weight of the rope holding device **1200** as much as possible by mounting bare minimum components because it facilitates movement by the moving device **1400.**

For example, the weight of the rope holding device **1200** is preferably less than at least one rope stretched over a blade. For example, since at least one rope stretched over a blade has a weight of about 5 kg, the rope holding device **1200** preferably has a weight of less than about 5 kg, for example, a weight of about 2 kg.

The weight of the rope holding device **1200** is less than the weight of the maintenance device **1100.** For example, the ratio of the weight of the rope holding device **1200** to the weight of the maintenance device **1100** can be about 1:10, about 1:20, about 1:50, about 1:100 or the like. Preferably, the ratio of the weight of the rope holding device **1200** to the weight of the maintenance device **1100** can be about 1:20 to about 1:50.

For example, the rope holding device **1200** preferably has a small size. For example, the rope holding device **1200** can have a volume of less than about 30000 cm³, a volume of less than about 25000 cm³, a volume of less than about 20000 cm³, a volume of less than about 15000 cm³, a volume of less than about 10000 cm³, a volume of less than about 5000 cm³, a volume of less than about 3000 cm³, or a volume of less than about 1000 cm³. Preferably, the rope holding device **1200** can have a volume of about 2000 cm³ to about 4000 cm³.

For example, the ratio of the size (volume) of the rope holding device **1200** to the size (volume) of the maintenance device **1100** can be about 1:10, about 1:20, about 1:50, about 1:60, about 1:100, about 1:150, about 1:200, about 1:220 or the like. Preferably, the ratio of the size of the rope holding device **1200** to the size of the maintenance device **1100** can be about 1:60 to about 1:220.

The attaching device **1300** can have any configuration as long as it is attached to a predetermined position on a blade of a wind turbine and configured so that a part of at least one rope is fixed thereto.

As described above while referring to Figure **13****,** the attaching device **1300** comprises an attaching mechanism **1310** and a body **1320.**

The attaching mechanism **1310** can be any mechanism as long as it enables the attaching device **1300** to attach to the blade **1011.** For example, the attaching mechanism **1310** may be a mechanism which attaches the attaching device **1300** to the blade **1011** by mechanical force, may be a mechanism which attaches the attaching device **1300** to the blade **1011** by magnetic force, may be a mechanism which attaches the attaching device **1300** to the blade **1011** by electric power, or may be a mechanism which attaches the attaching device **1300** to the blade **1011** by pressure or suction force. Preferably, the attaching mechanism **1310** can be a mechanism which attaches the attaching device **1300** to the blade **1011** by mechanical force.

In one example, the attaching mechanism **1310** can be a band or a belt which is able to tighten. For example, a first end portion of the attaching mechanism **1310** can be fixed to the body **1320** while a second end portion can be coupled to the body **1320** in a windable manner. Alternatively, for example, both the first end portion and the second end portion may be windable. A band or a belt which is able to tighten is preferable in that the attaching device **1300** can be attached onto a blade with an easy mechanism or structure.

The body **1320** can further comprise a controlling unit and a communicating unit.

The controlling unit is configured to control the overall action of the attaching device **1300.** For example, the controlling unit can control the components of the attaching device **1300** in accordance with a control signal received by the communicating unit. For example, the controlling unit can drive the attaching mechanism **1310** and attach the attaching device **1300** to a predetermined position in accordance with a control signal received by the communicating unit. For example, the controlling unit can drive the attaching mechanism **1310** and release the attaching device **1300** from a predetermined position in accordance with a control signal received by the communicating unit.

For example, the controlling unit can be implemented by any controlling means such as one or more processors. The attaching device **1300** may be configured so that each component of the attaching device **1300** is controlled in accordance with a signal from the outside of the attaching device **1300,** or a program for realizing a series of actions of each component of the attaching device **1300** may be stored in a memory that the attaching device **1300** can comprise. The controlling unit can read out and execute the program to cause the attaching device **1300** to function as an autonomous device.

The communicating unit can receive a signal from the outside of the attaching device **1300.** In addition, the communicating unit may be also configured to transmit a signal to the outside of the attaching device **1300.** The communicating unit may receive a signal from the outside of the attaching device **1300** wirelessly or by wire. The communicating unit may transmit a signal to the outside of the attaching device **1300** wirelessly or by wire. For example, the communicating unit can receive a control signal for controlling each component of the attaching device **1300** from the outside of the attaching device **1300** (e.g., a terminal for operation used by an operator, the maintenance device **1100,** or the rope holding device **1200**). For example, the communicating unit can be implemented by any communicating means such as an antenna.

The body **1320** comprises a fixing means for fixing a part of at least one rope. The fixing means can be any means as long as it can fix a part of at least one rope. For example, the fixing means is at least one eye bolt, and a part of at least one rope can be fixed by winding the rope around the at least one eye bolt.

The moving means **1400** can be any means as long as it can at least move the attaching device **1300** to a predetermined position on a wind turbine. For example, the moving means **1400** can be a device which is able to fly such as a drone. Alternatively, for example, the moving means **1400** can be a device having an expandable and contractable structure (e.g., crane or ladder truck). Alternatively, the moving means **1400** can be a moving means that the attaching device **1300** comprises (e.g., wheel, continuous track or the like). For example, the predetermined position can be a position on a blade of a wind turbine, preferably a position at the root of a blade of a wind turbine or a position on a narrowed portion, and further preferably a position on a narrowed portion at the root of a blade of a wind turbine. Alternatively, for example, the predetermined position can be a position on a tower of a wind turbine, preferably a top end of a tower of a wind turbine.

The moving means **1400** can preferably move the attaching device **1300** and the rope holding device **1200** together to a predetermined position. This is advantageous at least in terms of the following points.

First, both the at least one rope holding device **1200** and the at least one attaching device **1300** can be moved to a position on the blade **1011** of the wind turbine **1010** in one step, which can contribute to prompt positioning of the at least one rope holding device **1200** and the at least one attaching device **1300** on the blade **1011.** For example, the operation of attaching a rope can be completed in a very short period of time by moving both the at least one rope holding device **1200** and the at least one attaching device **1300** to a position on a blade of a wind turbine by the moving means **1400,** a device which is able to fly, and attaching the at least one attaching device **1300** to the position.

Secondly, it is not necessary to cause the at least one rope holding device **1200** alone to approach a blade because, if the at least one attaching device **1300** is mounted on the blade, the at least one rope holding device **1200** would be also simultaneously mounted on the blade. In particular, causing a relatively small rope holding device **1200** to approach a blade requires a skilled technique, which is difficult. However, moving the attaching device **1300** and the rope holding device **1200** together to a predetermined position does not require such a skilled technique and has a minimum risk that the at least one rope holding device **1200** comes into contact with the blade while approaching the blade and breaks the blade.

Thirdly, both the at least one rope holding device **1200** and the at least one attaching device **1300** can be also retrieved from the blade **1011** of the wind turbine **1010** in one step, which can reduce the operation time for maintenance.

Although it was explained in the above-described example that the system of the present invention comprises a maintenance device **1100,** at least one rope holding device **1200,** and at least one attaching device **1300** and can also comprise a moving means **1400,** the system of the present invention may be composed of a part of these components, and a component other than these components may be added.

For example, in one embodiment, the system of the present invention can be composed of the maintenance device **1100** and the at least one attaching device **1300** among the above-described components. In this embodiment, the at least one attaching device **1300** would hold at least one rope on a blade.

For example, in one embodiment, the system of the present invention can be composed of the at least one rope holding device **1200** and the at least one attaching device **1300** among the above-described components. In this embodiment, the system of the present invention is considered as a system for supporting maintenance on a blade. In other words, in this embodiment, the system of the present invention can support maintenance on a blade by providing a rope for accessing the blade onto the blade for not only the maintenance device described herein but also other maintenance devices.

Alternatively, in this embodiment, a maintenance function can be imparted to at least one of the at least one rope holding device **1200** and the at least one attaching device **1300,** which can perform maintenance on a blade by the at least one rope holding device **1200** and the at least one attaching device **1300.**

### 6. Method for performing maintenance on a blade of a wind turbine

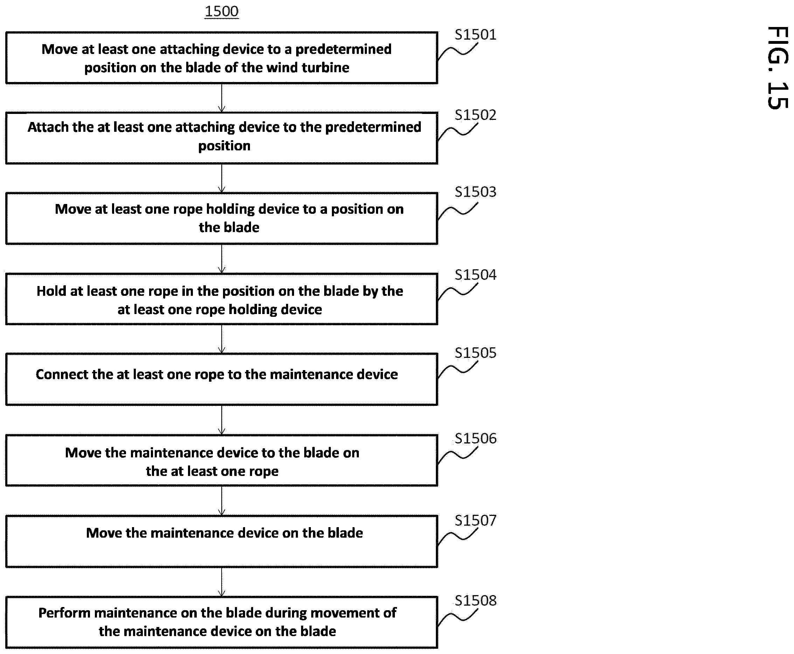

Figure **15** shows one example of a procedure (procedure **1500**) of a method for performing maintenance on a blade of a wind turbine by using the system of the present invention.

Step **S1501** is a step of moving at least one attaching device **1300** to a predetermined position on the wind turbine **1010.** In this case, the at least one attaching device **1300** is moved to a predetermined position in any manner. The movement may be active movement by the at least one attaching device **1300** or may be passive movement by the at least one attaching device **1300.** Preferably, the moving means **1400** can move the at least one attaching device **1300.**

For example, the predetermined position can be a position on the blade **1011** of the wind turbine **1010,** preferably a position at the root of the blade **1011** of the wind turbine **1010** or a position on a narrowed portion, and further preferably a position on a narrowed portion at the root of the blade **1011** of the wind turbine **1010.** Alternatively, for example, the predetermined position can be a position on the tower **1017** of the wind turbine **1010,** preferably a top end of the tower **1017** of the wind turbine **1010.**

Step **S1502** is a step of attaching the at least one attaching device **1300** which has been moved to the predetermined position to the predetermined position. The at least one attaching device **1300** can be attached to the predetermined position by the attaching mechanism **1310.** For example, a controlling unit of the at least one attaching device **1300** controls the attaching mechanism **1310,** whereby the at least one attaching device **1300** can be attached to the predetermined position. For example, the controlling unit may be configured to control the attaching mechanism **1310** in accordance with an instruction stored in a memory or may be configured to control the attaching mechanism **1310** in accordance with an instruction from a worker.

A part of at least one rope only needs to be fixed to the at least one attaching device **1300** before step **S1503.** A part of the at least one rope is fixed to the at least one attaching device **1300** at any timing. For example, a part of the at least one rope may be fixed to the at least one attaching device **1300** before step **S1501** or may be fixed to the at least one attaching device **1300** after step **S1502.** At least before step **S1503,** the at least one rope extends from the at least one attaching device **1300** to the at least one rope holding device **1200,** and the at least one rope holding device **1200** would receive the rope. Attachment of the at least one rope to the wind turbine **1010** is complete by performing both fixation of a part of the at least one rope to the at least one attaching device **1300** and attachment of the at least one attaching device **1300** to a predetermined position of the wind turbine **1010.**

In one embodiment, the moving means **1400** can move the at least one attaching device **1300** to a predetermined position along with the at least one rope holding device **1200** at step **S1501** and attach the at least one attaching device **1300** to the predetermined position at step **S1502.** In this case, the predetermined position is a position on the blade **1011** of the wind turbine **1010.** Further, the moving means **1400** can be a device which is able to fly. This can move both the at least one rope holding device **1200** and the at least one attaching device **1300** to a position on the blade **1011** of the wind turbine **1010** in one step and can attach the at least one attaching device **1300** to the position as shown in Figures **11B** to **11D****.** This can contribute to prompt positioning of the at least one rope holding device **1200** and the at least one attaching device **1300** on the blade **1011.** For example, from the experience of the inventors of the present invention, it took at least one hour for a human to perform an operation of manually attaching a rope onto a nacelle of a wind turbine. It took more time when the wind turbine was a wind turbine on the sea. On the other hand, the inventors of the present application found that the operation of attaching a rope can be completed in a very short period of time (e.g., about 5 minutes) by moving both the at least one rope holding device **1200** and the at least one attaching device **1300** to a position on a blade of a wind turbine by the moving means **1400,** a device which is able to fly, and attaching the at least one attaching device **1300** to the position. The operation of attaching a rope can be completed in a very short period of time even in a place without a sufficient scaffold such as a wind turbine on the sea in the same manner as a place with a sufficient scaffold because the moving means **1400,** a device which is able to fly, is used. The time required for maintenance on a wind turbine can be greatly reduced by reducing the operation time for the operation of attaching a rope. Furthermore, since a rope does not need to be manually attached by a human, maintenance on a wind turbine can be safely performed even in a place without a sufficient scaffold such as a wind turbine on the sea.

Step **S1503** is a step of moving the at least one rope holding device **1200** to any position on the blade **1011.** In this regard, the rope holding device **1200** is moved to any position on the blade **1011** in any manner. The movement may be active movement by the at least one rope holding device **1200** or may be passive movement by the at least one rope holding device **1200.** For example, a controlling unit of the at least one rope holding device **1200** controls the rope connecting means **1220,** which can move the at least one rope holding device **1200.** For example, the controlling unit may be configured to control the rope connecting means **1220** in accordance with an instruction stored in a memory or may be configured to control the rope connecting means **1220** in accordance with an instruction from a worker.

For example, when only the at least one attaching device **1300** was moved to a predetermined position at step **S1501,** the at least one rope holding device **1200** needs to be moved to the blade **1011** at step **S1503.** For example, the at least one rope holding device **1200** can move to the blade **1011** along a rope which can extend from the attaching device **1300** and then move on the blade to any position on the blade.

For example, when the at least one rope holding device **1200** was moved to a predetermined position along with the at least one attaching device **1300** at step **S1501,** step **S1503** comprises a step of moving the at least one rope holding device **1200** from the predetermined position to any position. For example, at step **S1503,** the at least one rope holding device **1200** is moved from the predetermined position to any position as shown in Figures **11F** to **11G****.**

For example, any position on a blade can be a position at the tip of the blade. Alternatively, any position on a blade can be a position suitable for starting pulling up the maintenance device **1100** to the blade **1011.** Alternatively, for example, any position on a blade can be a position in concert with the position of the maintenance device **1100.** For example, the position in concert with the position of the maintenance device **1100** can be a position above the maintenance device **1100.**

Step **S1504** is a step of holding at least one rope in a position on the blade **1011** by the at least one rope holding device **1200.** The position on the blade is a position to which the at least one rope holding device **1200** was moved at step **S1503.** The at least one rope held on the blade **1011** is a rope which extends from the at least one attaching device **1300** to the at least one rope holding device **1200.**

For example, as shown in Figures **11F** to **11G****,** as a result of moving the at least one rope holding device **1200** to any position on the blade **1011** (e.g., the tip of the blade **1011**), the at least one rope received by the at least one rope holding device **1200** is held on the blade **1011.** When at least two ropes are held on the blade **1011,** a first rope group comprising at least one rope would extend from a first side of the blade while a second rope group comprising at least one rope would extend from a second side of the blade as shown in Figure **13** as the at least two ropes held on the blade **1011.**

Step **S1505** is a step of connecting the at least one rope held on the blade **1011** by the at least one rope holding device **1200** at step **S1504** to the maintenance device **1100.** For example, the at least one rope is connected to the maintenance device **1100** by connecting the at least one rope to a winch of the maintenance device **1100.**

For example, step **S1505** can be manually performed by a worker on the deck **1016.**

At step **S1506,** the maintenance device **1100** is moved to the blade **1011** on the at least one rope held by the at least one rope holding device **1200** in a state where the at least one rope holding device **1200** holds the at least one rope on the blade **1011.** For example, the maintenance device **1100** is moved to the blade **1011** as shown in Figures **11G** to **11I****.** The maintenance device **1100** can move to the blade along the at least one rope held by the at least one rope holding device **1200.**

When the maintenance device **1100** is moved to the blade **1011** at step **S1506,** the position of the at least one rope holding device **1200** may be controlled so that the spatial position of the maintenance device **1100** of when the maintenance device **1100** moves to the blade **1011** on the at least one rope and the position of the at least one rope holding device **1200** are in concert with each other. This control can be dynamic control. For example, the at least one rope holding device **1200** is moved on the blade so that the position of the at least one rope holding device **1200** on the blade would be approximately right above the maintenance device **1100,** and the position in which the at least one rope holding device **1200** holds at least one rope on the blade **1011** can be controlled. As a result, the at least one rope would vertically extend from the at least one rope holding device **1200** on the blade **1011** to the maintenance device **1100,** and the maintenance device **1100** can move to the blade **1011** without the need for controlling the posture or spatial position of the maintenance device or without horizontally swinging. Furthermore, horizontal movement of the maintenance device **1100** can also be guided by moving the at least one rope holding device **1200** on the blade **1011** while utilizing the natural movement of the maintenance device **1100** to be approximately right below the at least one rope holding device **1200** by the action of gravity. This can eliminate or reduce the need for controlling the spatial position of the maintenance device **1100** by a worker from the deck **1016** or the like, which leads to reduced manpower.

Step **S1507** is a step of moving the maintenance device **1100** on the blade **1011** after the maintenance device **1100** moves to the blade **1011.** In this case, the maintenance device **1100** is moved on the blade **1011** in any manner.

For example, the maintenance device **1100** can be moved on the blade **1011** along the at least one rope **1020** extending from the attaching device **1300** as shown in Figures **11I** and **11J****.** In another example, the maintenance device **1100** can be moved on the blade **1011** by utilizing a driving wheel that the maintenance device **1100** can comprise. In another example, the maintenance device **1100** can be moved on the blade **1011** by utilizing a different rope from the at least one rope **1020** extending from the attaching device **1300.**

In doing so, the maintenance device **1100** can fixedly attach to the blade **1011** via any attaching means. This enables the maintenance device **1100** to move on the leading edge of the blade **1011** without floating up. Further, since the leading edge of the blade **1011** is inclined by about 5 degrees relative to the vertical direction, the gravity exerted on the maintenance device **1100** acts so as to push the maintenance device **1100** against the leading edge of the blade **1011,** thereby preventing the maintenance device **1100** from floating up. For example, step **S1507** may be performed in response to transmission of a control signal to the maintenance device **1100** by a worker using a terminal for operation, or may be performed in response to transmission of a control signal to the maintenance device **1100** by a robot. Alternatively, the maintenance device **1100** may be configured to autonomously perform step **S1507.**

The step of moving the maintenance device **1100** at step **S1507** may comprise: moving the maintenance device **1100** on the blade **1011** in a first direction of the directions in which the at least one rope extends; and moving the maintenance device **1100** on the blade **1011** in a second direction of the directions in which the at least one rope extends. For example, the first direction is a direction from the tip of the blade to the root of the blade while the second direction is a direction from the root of the blade to the tip of the blade. The maintenance device **1100** can move in the first direction or the second direction by controlling the winding or delivery by a winch.

Step **S1508** is a step of performing maintenance on the blade during movement of the maintenance device **1100** on the blade. For example, as shown in Figure **11J****,** the maintenance device **1100** performs maintenance on the blade **1011** during movement of the maintenance device **1100** on the leading edge of the blade **1011.** In doing so, the maintenance device **1100** fixedly attaches to the blade **1011** via any attaching means. This enables the maintenance device **1100** to push a maintenance means such as a washing means or polishing means against the leading edge of the blade **1011** without floating up. Further, since the leading edge of the blade **1011** is inclined by about 5 degrees relative to the vertical direction, the gravity exerted on the maintenance device **1100** acts so as to push the maintenance device **1100** against the leading edge of the blade **1011,** thereby preventing the maintenance device **1100** from floating up. For example, step **S1508** may be performed in response to transmission of a control signal to the maintenance device **1100** by a worker using a terminal for operation, or may be performed in response to transmission of a control signal to the maintenance device **1100** by a robot. Alternatively, the maintenance device **1100** may be configured to autonomously perform step **S1508.**

After performing maintenance at step **S1508,** the procedure **1500** may comprise a step of retrieving the system of the present invention. For example, the retrieving step comprises a step of retrieving the maintenance device **1100** from the blade **1011** by moving the maintenance device **1100** from the blade **1011** on the at least one rope. This is, for example, moving the maintenance device **1100** from the blade **1011** to the deck **1016** as shown in Figures **11L** to **11N****.**

In doing so, the position of the at least one rope holding device **1200** may be controlled so that the spatial position of the maintenance device **1100** of when the maintenance device **1100** moves from the blade **1011** on the at least one rope and the position of the at least one rope holding device **1200** are in concert with each other. This control can be dynamic control. For example, the at least one rope holding device **1200** is moved on the blade so that the position of the at least one rope holding device **1200** on the blade would be approximately right above the maintenance device **1100,** and the position in which the at least one rope holding device **1200** holds at least one rope on the blade **1011** can be controlled. As a result, the at least one rope would vertically extend from the at least one rope holding device **1200** on the blade **1011** to the maintenance device **1100,** and the maintenance device **1100** can move from the blade **1011** (to, for example, the deck **1016)** without the need for controlling the posture or spatial position of the maintenance device or without horizontally swinging. Furthermore, horizontal movement of the maintenance device **1100** can also be guided by moving the at least one rope holding device **1200** on the blade **1011** while utilizing the natural movement of the maintenance device **1100** to be approximately right below the at least one rope holding device **1200** by the action of gravity. This can eliminate or reduce the need for controlling the spatial position of the maintenance device **1100** by a worker from the deck **1016** or the like, which leads to reduced manpower.

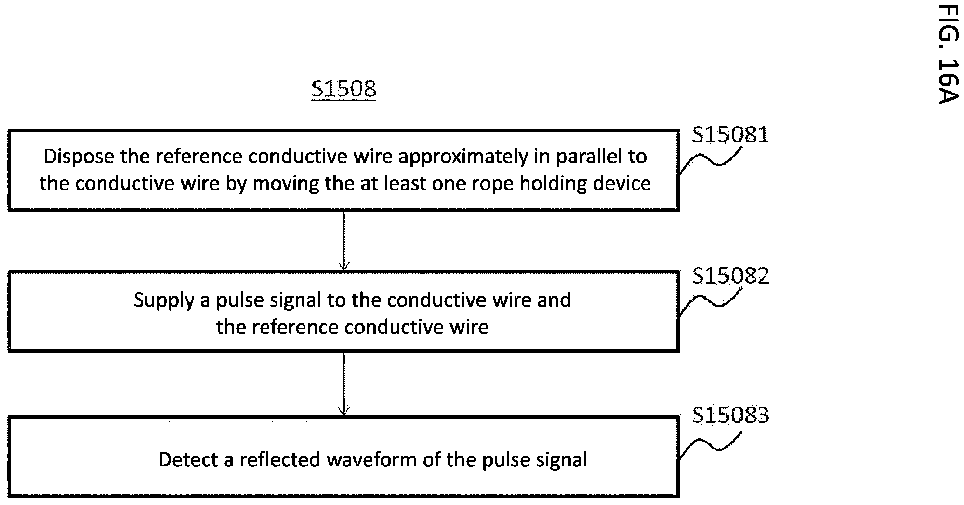

Figure **16A** shows one example of a specific flow which is performed in a step of performing maintenance on a blade at step **S1508.** The flow shown in Figure **16A** is a flow for the maintenance device **1100** to examine disconnection of a conductive wire (down conductor) extending inside a blade in cooperation with the rope holding device **1200,** wherein disconnection examination based on a reflected pulse from the conductive wire is performed. It is assumed that the rope holding device **1200** comprises a reference conductive wire which is utilized for the disconnection examination. One end portion of the reference conductive wire is coupled to the rope holding device **1200** while the other end portion is coupled to the attaching device **1300,** whereby the reference conductive wire extends between the rope holding device **1200** and the attaching device **1300.**

Step **S15081** is a step of disposing the reference conductive wire approximately in parallel to the conductive wire extending inside the blade by moving the at least one rope holding device **1200.** Since one end portion of the reference conductive wire is coupled to the rope holding device **1200** while the other end portion is coupled to the at least one attaching device **1300,** the reference conductive wire can be disposed on the blade by moving the at least one rope holding device **1200** to be away from the at least one attaching device **1300** on the blade. In doing so, the at least one attaching device **1300** is preferably attached onto the blade because the conductive wire disposed on the blade would be along the blade. Furthermore, the reference conductive wire disposed on the blade becomes approximately parallel to the conductive wire extending inside the blade by making the moving direction of the at least one rope holding device **1200** approximately parallel to the extending direction of the conductive wire extending inside the blade.

In general, the conductive wire (down conductor) extending inside the blade extends in a direction from a lightning receiving portion (receptor) at the tip of the blade of a wind turbine to the root, which is consistent with the moving direction of the rope holding device **1200** of the system of the present invention. Thus, it is not necessary to separately design and/or control the movement of the rope holding device **1200** to perform disconnection examination.

The at least one rope holding device **1200** preferably moves to the lightening receiving portion of the blade **1011** because it can align the lightening receiving portion of the blade **1011** and the end of the reference conductive wire.

Next, the maintenance device **1100** moves to the position of the lightening receiving portion of the blade **1011** and the end of the reference conductive wire, and the maintenance device **1100** supplies a pulse signal to the conductive wire and the reference conductive wire via the lightening receiving portion at step **S15082.**

At step **S15083,** the maintenance device detects a reflected waveform of the pulse signal supplied at step **S15082.** The presence or absence of disconnection and further a disconnected portion can be detected based on the detected reflected waveform. This can be achieved by analyzing a reflected waveform obtained from the conductive wire, with a reflected waveform obtained from the reference conductive wire (conductive wire which is not disconnected) as a reference. For example, the presence or absence of disconnection and further a disconnected portion can be identified by using TDR (Time Domain Reflectometry) method.

Identifying a disconnected portion in the conductive wire inside the blade enables the disconnected portion to be promptly repaired.

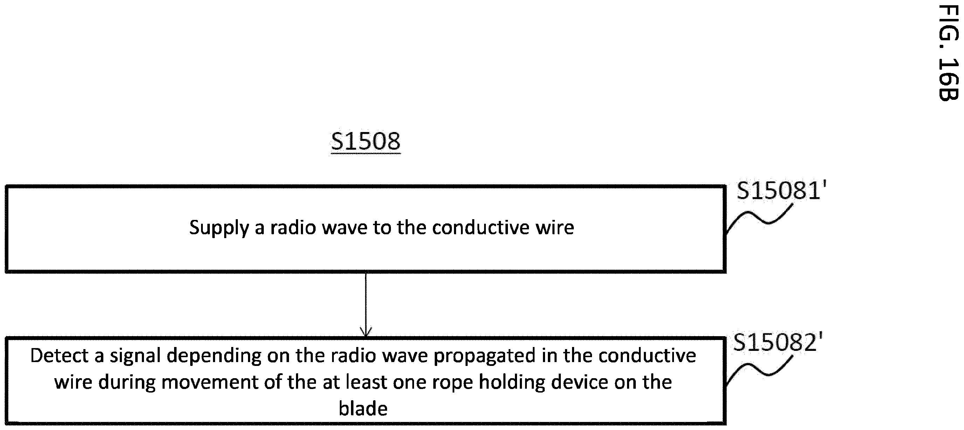

Figure **16B** shows another example of a specific flow which is performed in a step of performing maintenance on a blade at step **S1508.** The flow shown in Figure **16A** is a flow for the maintenance device **1100** to examine disconnection of a conductive wire (down conductor) extending inside a blade in cooperation with the rope holding device **1200,** wherein disconnection examination based on a signal depending on a radio wave propagated in the conductive wire is performed.

Step **S15081'** is a step wherein the maintenance device **1100** supplies a radio wave for examining disconnection of the conductive wire to the conductive wire. The maintenance device **1100** can supply a radio wave to the conductive wire via the lightning receiving portion. For example, the maintenance device **1100** may be configured to supply a radio wave generated by a transmitter that the maintenance device **1100** comprises to the conductive wire, or may be configured to supply a radio wave transmitted from the outside of the maintenance device **1100** (e.g., a transmitter on the deck **1016)** to the conductive wire. Preferably, the maintenance device **1100** can supply a radio wave transmitted from the outside of the maintenance device **1100** (e.g., a transmitter on the deck **1016)** to the conductive wire because it eliminates the need for the maintenance device **1100** to comprise a transmitter, which can prevent the weight of the maintenance device **1100** from increasing.

Step **S15082'** is a step of detecting a signal depending on the radio wave propagated in the conductive wire during movement of the at least one rope holding device **1200** on the blade **1011.** The at least one rope holding device **1200** can detect a signal depending on the radio wave by using a detector.

For example, the at least one rope holding device **1200** detects a signal in a place along the blade during movement along the blade **1011** from the tip to the root of the blade **1011.** For example, the detected signal is recorded or monitored, and it can be determined that there is disconnection in a place in which a specific signal (e.g., no signal is detected, or a signal level is weak, or the like) was detected.

In general, the conductive wire (down conductor) extending inside the blade extends in a direction from a lightning receiving portion (receptor) at the tip of the blade of a wind turbine to the root, which is consistent with the moving direction of the rope holding device **1200** of the system of the present invention. Thus, in this disconnection examination as well, it is not necessary to separately design and/or control the movement of the rope holding device **1200** to perform disconnection examination.

The at least one attaching device **1300** is preferably attached onto the blade in this disconnection examination as well because the at least one rope holding device **1200** can move along the blade and along the conductive wire present inside the blade and the detector can be brought as close as possible to the conductive wire, which can improve the detection accuracy.

Such disconnection examination can detect the presence or absence of disconnection of the conductive wire and further a disconnected portion. Identifying a disconnected portion in the conductive wire inside the blade enables the disconnected portion to be promptly repaired.

As described above, each step of the method for performing maintenance on a blade of a wind turbine may be initiatively performed by a worker, or may be automatically performed by a robot. When each step is performed by a robot, a worker does not need to be in a work site, which enables maintenance on a blade of a wind turbine to be safely performed. This is particularly significant in a place without a sufficient scaffold such as a wind turbine on the sea.

As used herein, "during movement" refers to a period of moving from one position to another position. It is not necessarily required to keep moving. For example, a period during which the maintenance device 100 moves from the tip of a blade to the base of the blade and the maintenance device **100** moves by repeating advancing and stopping is also included in "during movement".

Although a system and method for performing maintenance on a blade of a wind turbine were explained in the examples explained while referring to Figures **1** to **16B****,** the present invention is not limited thereto. The subject of maintenance by the system and method of the present invention can be at least a part of any object on which maintenance needs to be performed and which has a surface on which a rope can be held, wherein a maintenance device can be moved by utilizing the held rope. For example, the subject of maintenance may be the whole or a part of such an object. In the above-described examples, any object is a wind turbine and at least a part of any object is a blade of the wind turbine. For example, any object may be a building and at least a part of any object may be a wall surface of the building, and any object may be a plane and at least a part of any object may be a main wing of the plane. For example, in the case of a wall surface of a building, it is necessary to wash dirt due to rain. For example, in the case of a main wing of a plane, it is necessary to inspect and wash the wing in order to keep the surface of the wing smooth. For example, a rope is held on a rooftop or wall surface of a building and a maintenance device can move to the rooftop or wall surface of the building by utilizing the held rope. For example, a rope is held on a main wing or body of a plane and a maintenance device can move to the main wing or body by utilizing the held rope.

Although the movement of a maintenance utilizing a rope is movement with vertical movement (i.e., rising and going down) in the above-described examples, movement of a maintenance utilizing a rope may be movement without vertical movement. Movement of a maintenance utilizing a rope can also include movement only with movement on a horizontal plane. This is because, even in the case of movement only with movement on a horizontal plane, a rope holding device, which is lighter than a maintenance device and whose spatial position is easily controlled, can be disposed on a subject of maintenance in advance and the maintenance device can be moved to the subject of maintenance along a rope held by the rope holding device, thereby achieving easy maintenance. Further, even in the case of movement only with movement on a horizontal plane, an attaching device can be attached to a subject of maintenance in advance, a rope can be held on the subject of maintenance by a rope holding device, and the maintenance device can be moved to the subject of maintenance along the rope held by the rope holding device, thereby achieving easy maintenance. This is particularly useful for maintenance on a subject which is present in a place without a sufficient scaffold because a rope can be easily attached to the subject by utilizing an attaching device and a rope holding device even in a place without a sufficient scaffold.

Any object that is the subject of maintenance is preferably an object in a high place. A high place in this case refers to a place in a height that a worker on the ground cannot reach. A high place may be, for example, a place about 3 m or more high from the ground, a place about 5 m or more high from the ground, a place about 10 m or more high from the ground, or a place about 100 m or more high from the ground. A high place may be, for example, a place about 3 m to about 100 m high from the ground, a place about 5 m to about 100 m high from the ground, or a place about 10 m to about 100 m high from the ground. It should be noted that the ground may be an outdoor place, or may be an indoor place.

Further, although the surface on which the maintenance device **100, 100',** or **1100** attaches to at least a part of any object has any angle, the surface on which the maintenance device **100, 100',** or **1100** attaches to at least a part of any object is preferably inclined relative to the vertical direction. This is because, in addition to the holding force by an attaching means, the gravity exerted on the maintenance device **100, 100',** or **1100** acts so as to push the device **100, 100',** or **1100** against at least a part of the object due to attachment of the maintenance device **100, 100',** or **1100** to the inclined surface, and the maintenance device **100, 100',** or **1100** is thereby more stable on at least a part of the object.

Further, although a device for performing maintenance on at least a part of an object was explained in the examples explained while referring to Figures **1** to **16B****,** the present invention is not limited thereto. The system of the present invention may be a robot having a function to achieve any objective comprising performing maintenance. For example, any objective may be an objective to carry goods to a high place. It is possible to make it easy to carry goods to a high place by attaching a device mounted with goods to an object in a high place (e.g., an outer wall of a balcony of an apartment). For example, any objective may be an objective to decorate an object. It is possible to easily decorate an object in a high place by attaching a device with decoration to the object in a high place.

As used herein, an element of which number is not particularly mentioned or an element given an article corresponding to "a" or "the" in English is intended to express "at least one" element unless otherwise specified.

The present invention is not limited to the above-described embodiments. It is understood that the scope of the present invention should be interpreted only by the Claims. It is understood that those skilled in the art can practice an equivalent scope based on the descriptions of the present invention and common general knowledge from the descriptions of specific and preferable embodiments of the present invention. For example, at least one feature of the features explained in a first aspect can be incorporated into a second aspect. In the same manner, at least one feature of the features explained in the second aspect can be incorporated into the first aspect.

### [Industrial Applicability]

The present invention is useful for providing a system and method for safely and easily performing maintenance on at least a part of an object.

### [Reference Signs List]

- **10** and **1010**: wind turbine
- **11, 12, 13, 1011, 1012,** and **1013**: blade
- **14** and **1014**: nacelle
- **15** and **1015**: hub
- **1016**: deck
- **1017**: tower
- **20** and **1020**: rope
- **100, 100',** and **1100**: maintenance device
- **110**: moving means
- **120**: a plurality of maintenance means
- **130**: controlling means
- **140**: mounting portion
- **200** and **1200**: rope holding device
- **250**: member
- **260**: aperture
- **1300**: attaching device
- **1400**: moving device

## Claims

1. A system for performing maintenance on at least a part of an object, the system comprising:
at least one attaching device configured to be attached to a predetermined position on the object, wherein a part of at least one rope is fixed to the at least one attaching device, the at least one rope extending from the at least one attaching device;
at least one rope holding device configured to receive the at least one rope extending from the at least one attaching device and hold the at least one rope in any position on the at least a part of the object, the at least one rope holding device being able to move on the at least a part of the object; and
a maintenance device configured to perform maintenance on the at least a part of the object, the maintenance device being configured to move to the at least a part of the object on the at least one rope held by the at least one rope holding device and to move on the at least a part of the object.

2. The system of claim 1, further comprising a moving means for moving the at least one attaching device and the at least one rope holding device together to the predetermined position.

3. The system of claim 2, wherein the moving means is a device that is able to fly.

4. The system of any one of claims 1 to 3, further comprising a controlling means for controlling a position of the at least one rope holding device on the at least a part of the object,
wherein the controlling means controls the position of the at least one rope holding device so that a spatial position of the maintenance device of when the maintenance device moves to the at least a part of the object on the at least one rope and the position of the at least one rope holding device are in concert with each other.

5. The system of any one of claims 1 to 4, wherein a conductive wire extends inside the at least a part of the object,
wherein the at least one rope holding device can dispose a reference conductive wire approximately in parallel to the conductive wire from the at least one attaching device, and
wherein the maintenance device comprises an examining means for examining disconnection of the conductive wire,
the examining means examining disconnection of the conductive wire by:
supplying a pulse signal to the conductive wire and the reference conductive wire; and
detecting a reflected waveform of the pulse signal.

6. The system of claim 5, wherein the examining means detects a disconnected portion of the conductive wire based on the reflected waveform.

7. The system of any one of claims 1 to 4, wherein a conductive wire extends inside the at least a part of the object,
wherein the maintenance device comprises a means for supplying a radio wave for examining disconnection of the conductive wire to the conductive wire, and
wherein the at least one rope holding device comprises a detecting means which detects a signal depending on a radio wave propagated in the conductive wire.

8. The system of any one of claims 1 to 7, wherein the object is a wind turbine on the sea, and the at least a part of the object is a blade of the wind turbine.

9. The system of any one of claims 1 to 8, wherein the predetermined position is a position on a narrowed portion of a blade of a wind turbine.

10. A system for performing maintenance on at least a part of an object, the system comprising:
at least one attaching device configured to be attached to a predetermined position on the object, wherein a part of at least one rope is fixed to the at least one attaching device, the at least one rope extending from the at least one attaching device; and
a maintenance device configured to perform maintenance on the at least a part of the object, the maintenance device being configured to move to the at least a part of the object on the at least one rope extending from the at least one attaching device and to move on the at least a part of the object.

11. A system for supporting maintenance on at least a part of an object, the system comprising:
at least one attaching device configured to be attached to a predetermined position on the object, wherein a part of at least one rope is fixed to the at least one attaching device, the at least one rope extending from the at least one attaching device; and
at least one rope holding device configured to receive the at least one rope extending from the at least one attaching device and hold the at least one rope in any position on the at least a part of the object, the at least one rope holding device being able to move on the at least a part of the object.

12. A method for performing maintenance on at least a part of an object, the method comprising:
moving at least one attaching device to a predetermined position on the object;
attaching the at least one attaching device to the predetermined position, wherein a part of at least one rope is fixed to the at least one attaching device, the at least one rope extending from the at least one attaching device to at least one rope holding device;
moving the at least one rope holding device to any position on the at least a part of the object;
holding, by the at least one rope holding device, the at least one rope in the any position on the at least a part of the object;
connecting the at least one rope held by the at least one rope holding device to a maintenance device;
moving the maintenance device to the at least a part of the object on the at least one rope held by the at least one rope holding device;
moving the maintenance device on the at least a part of the object; and
performing maintenance on the at least a part of the object during movement of the maintenance device on the at least a part of the object.

13. The method of claim 12, wherein moving the at least one attaching device comprises moving the at least one attaching device to the predetermined position along with the at least one rope holding device, and
wherein moving the at least one rope holding device comprises moving the at least one rope holding device from the predetermined position to the any position.

14. The method of claim 12 or 13, wherein moving the maintenance device to the at least a part of the object comprises:
controlling the position of the at least one rope holding device so that a spatial position of the maintenance device of when the maintenance device moves to the at least a part of the object on the at least one rope and the position of the at least one rope holding device are in concert with each other.

15. The method of any one of claims 12 to 14, further comprising retrieving the maintenance device from the at least a part of the object by moving the maintenance device from the at least a part of the object on the at least one rope,
wherein retrieving the maintenance device comprises:
controlling the position of the at least one rope holding device so that a spatial position of the maintenance device of when the maintenance device moves from the at least a part of the object on the at least one rope and the position of the at least one rope holding device are in concert with each other.

16. The method of any one of claims 12 to 15, wherein a conductive wire extends inside the at least a part of the object,
wherein performing maintenance on the at least a part of the object comprises examining disconnection of the conductive wire by:
disposing a reference conductive wire approximately in parallel to the conductive wire between the at least one attaching device and the at least one rope holding device by moving the at least one rope holding device;
supplying, by the maintenance device, a pulse signal to the conductive wire and the reference conductive wire; and
detecting, by the maintenance device, a reflected waveform of the pulse signal.

17. The method of claim 16, wherein examining disconnection of the conductive wire comprises detecting a disconnected portion of the conductive wire based on the reflected waveform.

18. The method of any one of claims 12 to 15, wherein a conductive wire extends inside the at least a part of the object,
wherein performing maintenance on the at least a part of the object comprises:
supplying, by the maintenance device, a radio wave for examining disconnection of the conductive wire to the conductive wire; and
detecting, by the at least one rope holding device, a signal depending on a radio wave propagated in the conductive wire during movement of the at least one rope holding device on the at least a part of the object.

19. The method of any one of claims 12 to 18, wherein the object is a wind turbine on the sea, and the at least a part of the object is a blade of the wind turbine.

20. The method of any one of claims 12 to 19, wherein the predetermined position is a position on a narrowed portion of a blade of a wind turbine.

21. A system for performing maintenance on at least a part of an object, the system comprising:
at least one rope holding device configured to move to the at least a part of the object and hold at least one rope at the at least a part of the object; and
a maintenance device configured to perform maintenance on the at least a part of the object, the maintenance device being configured to move to the at least a part of the object on the at least one rope held by the at least one rope holding device and to move on the at least a part of the object.

22. The system of claim 21, wherein the at least one rope holding device is configured to move to the at least a part of the object on the at least one rope placed on the object.

23. The system of claim 21 or 22, wherein the at least one rope holding device is configured to hold at least two ropes at the at least a part of the object, the at least two ropes comprising a first rope group comprising at least one rope and a second rope group comprising at least one rope, and
wherein the at least one rope holding device holds the first rope group on a first side of the at least a part of the object and holds the second rope group on a second side of the at least a part of the object.

24. The system of claim 23, wherein the at least one rope holding device is one rope holding device,
wherein the rope holding device is configured to engage with the first rope group, and
wherein the rope holding device has an aperture through which the second rope group passes.

25. The system of claim 24, wherein the aperture is formed of a member configured to be able to transition between a first state where the second rope group is restrained in the aperture and a second state where the second rope group is released from the aperture.

26. The system of claim 25, wherein the rope holding device further comprises a communicating means and a controlling means, and
wherein the controlling means is configured to transition the member from the first state to the second state in response to an instruction received by the communicating means.

27. The system of any one of claims 21 to 26, wherein a weight of the rope holding device is less than a weight of the maintenance device.

28. The system of any one of claims 21 to 27, wherein a weight of the rope holding device is less than a weight of one rope of the at least one rope.

29. The system of any one of claims 21 to 28, wherein the object is a wind turbine, and the at least a part of the object is a blade of the wind turbine.

30. A method for performing maintenance on at least a part of an object, the method comprising:
moving at least one rope holding device to the at least a part of the object;
holding, by the at least one rope holding device, the at least one rope at the at least a part of the object;
connecting the at least one rope held by the at least one rope holding device to a maintenance device;
moving the maintenance device to the at least a part of the object on the at least one rope held by the at least one rope holding device;
moving the maintenance device on the at least a part of the object; and
causing the maintenance device to perform maintenance on the at least a part of the object during movement of the maintenance device on the at least a part of the object.

31. The method of claim 30, wherein moving the at least one rope holding device to the at least a part of the object comprises:
placing the at least one rope on the object; and
moving the at least one rope holding device to the at least a part of the object on the at least one rope.

32. The method of claim 30 or 31, wherein moving the at least one rope holding device to the at least a part of the object comprises controlling a spatial position of the at least one rope holding device.

33. The method of any one of claims 30 to 32, wherein placing the at least one rope comprises placing at least two ropes on the object, the at least two ropes comprising a first rope group comprising at least one rope and a second rope group comprising at least one rope, and
wherein holding the at least two ropes at the at least a part of the object comprises disposing the rope holding device on the at least a part of the object so that the first rope group extends from a first side of the at least a part of the object and the second rope group extends from a second side of the at least a part of the object.

34. The method of claim 33, wherein the at least one rope holding device is one rope holding device,
wherein the rope holding device engages with the first rope group and restrains the second rope group, and
wherein the method further comprises releasing the second rope group from the rope holding device after moving the maintenance device to the at least a part of the object.

35. The method of any one of claims 30 to 34, wherein the object is a wind turbine, and the at least a part of the object is a blade of the wind turbine.

36. A maintenance device for performing maintenance on at least a part of an object, the maintenance device comprising:
a moving means for moving on the at least a part of the object;
a plurality of maintenance means configured to perform mutually different maintenances, the plurality of maintenance means being mounted on a mounting portion; and
a controlling means which selects at least one maintenance means of the plurality of maintenance means and controls the plurality of maintenance means so that maintenance by the selected at least one maintenance means is executed.

37. The maintenance device of claim 36, wherein the mounting portion is configured to be rotatable around an axis, and
wherein the controlling means changes a position of the plurality of maintenance means by rotating the mounting portion around the axis.

38. The maintenance device of claim 36 or 37, wherein the mounting portion is configured to be translatable in a predetermined direction, and
wherein the controlling means changes a position of the plurality of maintenance means by translating the mounting portion.

39. The maintenance device of any one of claims 36 to 38, wherein one of the plurality of maintenance means is an applying means for applying a material.

40. The maintenance device of claim 39, wherein one of the plurality of maintenance means is a flattening means, the flattening means comprising a spatula for flattening a material applied by the applying means and an abutting portion for abutting on the at least a part of the object to separate the spatula from the at least a part of the object.

41. The maintenance device of claim 40, wherein the flattening means further comprises a wire net for cleaning the spatula.

42. The maintenance device of any one of claims 39 to 41, wherein the applying means comprises a caulking gun for ejecting a material, the caulking gun being configured so that an ejected amount of the material is adjusted by intermittent control of air pressure and/or control by an electropneumatic regulator.

43. The maintenance device of any one of claims 39 to 42, wherein the applying means is configured to stick a sheet or a film on the at least a part of the object.

44. The maintenance device of any one of claims 36 to 43, wherein one of the plurality of maintenance means is a grinding means for grinding a surface of the at least a part of the object.

45. The maintenance device of claim 44, wherein the grinding means comprises a leutor.

46. The maintenance device of claim 45, wherein the leutor is configured to be pushed against the surface so that a rotational axis of the leutor is perpendicular to the surface.

47. The maintenance device of any one of claims 44 to 46, wherein the grinding means comprises a belt sander, the belt sander being configured so that a moving direction of a grinding surface of the belt sander is inclined relative to a direction in which the surface extends and the belt sander is pushed against the surface.

48. The maintenance device of any one of claims 36 to 47, wherein the plurality of maintenance means are configured to:
grind a surface of the at least a part of the object;
wash the grinded surface;
apply a material to the washed surface;
flatten at least a part of the applied material;
cure the flattened material;
grind the cured material;
wash the grinded material; and
paint the washed material.
